# EUROPÄISCHE PATENTSCHRIFT

(11) **EP 1 551 937 B1**
(45) Veröffentlichungstag und Bekanntmachung des Hinweises auf die Patenterteilung: **11.07.2007**
(21) Anmeldenummer: 03808699.7
(22) Anmeldetag: 25.09.2003
(51) Int. Cl.: C09K 19/44, C09K 19/46

(54) **PHOTOSTABILES FLÜSSIGKRISTALLINES MEDIUM**
PHOTOSTABLE LIQUID CRYSTALLINE MEDIUM
AGENT A CRISTAUX LIQUIDES PHOTOSTABLE

(30) Priorität: 15.10.2002 DE 10247986
(43) Veröffentlichungstag der Anmeldung: 13.07.2005
(73) Patentinhaber: Merck Patent GmbH, 64293 Darmstadt (DE)
(72) Erfinder: MANABE, Atsutaka, 64625 Bensheim (DE); HEYWANG, Ulrich, 64298 Darmstadt (DE); PAULUTH, Detlef, 64372 Ober-Ramstadt (DE); HECKMEIER, Michael, 69502 Hemsbach (DE); KIRSCH, Peer, 64342 Seeheim-Jugenheim (DE); MONTENEGRO, Elvira, 69469 Weinheim (DE)
(86) Internationale Anmeldenummer: PCT/EP2003/010680
(87) Internationale Veröffentlichungsnummer: WO 2004/035710

(56) Entgegenhaltungen:
- EP-A- 0 832 955
- EP-A- 0 949 231
- EP-A- 1 213 339
- EP-A- 1 333 082
- EP-A- 1 352 944
- WO-A-01/12751
- WO-A-90/09420
- WO-A-02/051963
- DE-A- 10 128 017
- DE-A- 10 152 831
- DE-A- 10 204 607
- DE-A- 19 720 529
- DE-A- 19 919 348
- GB-A- 2 240 778
- GB-A- 2 296 253
- US-A- 5 342 544

## Beschreibung

Die vorliegende Erfindung betrifft ein photostabiles flüssigkristallines Medium sowie dessen Verwendung für elektrooptische Zwecke und dieses Medium enthaltende Anzeigen.

Flüssige Kristalle werden vor allem als Dielektrika in Anzeigevorrichtungen verwendet, da die optischen Eigenschaften solcher Substanzen durch eine angelegte Spannung beeinflußt werden können. Elektrooptische Vorrichtungen auf der Basis von Flüssigkristallen sind dem Fachmann bestens bekannt und können auf verschiedenen Effekten beruhen. Derartige Vorrichtungen sind beispielsweise Zellen mit dynamischer Streuung, DAP-Zellen (Deformation aufgerichteter Phasen), Gast/Wirt-Zellen, TN-Zellen mit verdrillt nematischer ("twisted nematic") Struktur, STN-Zellen ("super-twisted nematic"), SBE-Zellen ("superbirefringence effect") und OMI-Zellen ("optical mode interference"). Die gebräuchlichsten Anzeigevorrichtungen beruhen auf dem Schadt-Helfrich-Effekt und besitzen eine verdrillt nematische Struktur.

Die Flüssigkristallmaterialien müssen eine gute chemische und thermische Stabilität und eine gute Stabilität gegenüber elektrischen Feldern und elektromagnetischer Strahlung besitzen. Ferner sollten die Flüssigkristallmaterialien niedere Viskosität aufweisen und in den Zellen kurze Ansprechzeiten, tiefe Schwellenspannungen und einen hohen Kontrast ergeben.

Weiterhin sollten sie bei üblichen Betriebstemperaturen, d.h. in einem möglichst breiten Bereich unterhalb und oberhalb Raumtemperatur eine geeignete Mesophase besitzen, beispielsweise für die oben genannten Zellen eine nematische oder cholesterische Mesophase. Da Flüssigkristalle in der Regel als Mischungen mehrerer Komponenten zur Anwendung gelangen, ist es wichtig, daß die Komponenten untereinander gut mischbar sind. Weitere Eigenschaften, wie die elektrische Leitfähigkeit, die dielektrische Anisotropie und die optische Anisotropie, müssen je nach Zellentyp und Anwendungsgebiet unterschiedlichen Anforderungen genügen. Beispielsweise sollten Materialien für Zellen mit verdrillt nematischer Struktur eine positive dielektrische Anisotropie und eine geringe elektrische Leitfähigkeit aufweisen.

Beispielsweise sind für Matrix-Flüssigkristallanzeigen mit integrierten nicht-linearen Elementen zur Schaltung einzelner Bildpunkte (MFK-Anzeigen) Medien mit großer positiver dielektrischer Anisotropie, breiten nematischen Phasen, relativ niedriger Doppelbrechung, sehr hohem spezifischen Widerstand, guter UV- und Temperaturstabilität und geringerem Dampfdruck erwünscht.

Derartige Matrix-Flüssigkristallanzeigen sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheiden kann:
1. MOS (Metal Oxide Semiconductor) oder andere Dioden auf Silizium-Wafer als Substrat.
2. Dünnfilm-Transistoren (TFT) auf einer Glasplatte als Substrat.

Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, welcher bevorzugt ist, wird als elektrooptischer Effekt üblicherweise der TN-Effekt verwendet. Man unterscheidet zwei Technologien: TFT's aus Verbindungshalbleitern wie z.B. CdSe oder TFT's auf der Basis von polykristallinem oder amorphem Silizium. An letzterer Technologie wird weltweit mit großer Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, daß je ein Filterelement einem schaltbaren Bildelement gegenüber liegt.

Die TFT-Anzeigen arbeiten üblicherweise als TN-Zellen mit gekreuzten Polarisatoren in Transmission und sind von hinten beleuchtet.

Der Begriff MFK-Anzeigen umfaßt hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Derartige MFK-Anzeigen eignen sich insbesondere für TV-Anwendungen (z.B. Taschenfernseher) oder für hochinformative Displays für Rechneranwendungen (Laptop) und im Automobil- oder Flugzeugbau. Neben Problemen hinsichtlich der Winkelabhängigkeit des Kontrastes und der Schaltzeiten resultieren bei MFK-Anzeigen Schwierigkeiten bedingt durch nicht ausreichend hohen spezifischen Widerstand der Flüssigkristallmischungen [TOGASHI, S., SEKOGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Adressing of Television Liquid Crystal Displays, p. 145 ff, Paris]. Mit abnehmendem Widerstand verschlechtert sich der Kontrast einer MFK-Anzeige, und es kann das Problem der "after image elimination" auftreten. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig, um akzeptable Standzeiten zu erhalten.

Insbesondere bei low-volt-Mischungen war es bisher nicht möglich, sehr hohe spezifische Widerstände zu realisieren. Weiterhin ist es wichtig, daß der spezifische Widerstand eine möglichst geringe Zunahme bei steigender Temperatur sowie eine möglichst geringe Empfindlichkeit bei Temperatur- und/oder UV-Belastung zeigt. Besonders nachteilig sind auch die Tieftemperatureigenschaften der Mischungen aus dem Stand der Technik. Gefordert wird, daß auch bei tiefen Temperaturen keine Kristallisation und/oder smektischen Phasen auftreten und die Temperatutabhängigkeit der Viskosität möglichst gering ist. Die MFK-Anzeigen aus dem Stand der Technik genügen somit nicht den heutigen Anforderungen.

Es besteht daher immer noch ein großer Bedarf nach MFK-Anzeigen mit sehr hohem spezifischen Widerstand bei gleichzeitig großem Arbeitstemperaturbereich, kurzen Schaltzeiten auch bei tiefen Temperaturen und niedriger Schwellenspannung, die diese Nachteile nicht oder nur in geringerem Maße zeigen.

Zahlreiche der in MFK-Anzeigen verwendeten Flüssigkristallmischungen enthalten Verbindungen.mit begrenzter Photostabilität: Diese Verbindungen sind zwar im allgemeinen gegenüber natürlichem Licht - auch über einen längeren Zeitraum - stabil und können zumeist auch für einige Zeit einer UV-Bestrahlung ausgesetzt werden, ohne daß das zur Zersetzung einzelner Mischungsbestandteile führt; werden die Mischungen jedoch für längere Zeit insbesondere intensiver UV-Strahlung ausgesetzt, kann es zu unerwünschten photochemischen Prozessen kommen, welche die begrenzt photostabilen Verbindungen teilweise zersetzen und somit die Flüssigkristallmischungen in ihrer Zusammensetzung und in ihren Eigenschaften empfindlich bis hin zur Unbrauchbarkeit verändern können. Diese Problematik hat sich in jüngster Zeit dadurch verschärft, daß bei der Fertigung von Flüssigkristall-Displays inzwischen die sogenannte "One-drop filling method" [H. Kamiya, K. Tajima, K. Toriumi, K. Terada, H. Inoue, T. Yokoue, N. Shimizu, T. Kobayashi, S. Odahara, G. Hougham, C. Cai, J.H. Glownia, R.J. von Gutfeld, R. John, S.-C. Alan Lien, SID 01 Digest (2001), 1354-1357] eingesetzt wird, bei deren Anwendung die mit einer Flüssigkristallmischung gefüllten Display-Zellen längere Zeit mit UV-Licht bestrahlt werden, um zum Verschließen der Zellen die Polymerisation der als Verschlußmittel verwendeten Monomeren (z.B. Acrylate oder Epoxide) herbeizuführen.

Vergleichsweise empfindlich für die UV-Strahlung sind dabei offenbar häufig mesogene Verbindungen mit einer -(CH₂)₂-, -COO-, -CH=CH-, -CF=CH-, -CH=CF-, CF=CF-, -C≡C- oder -CF₂O-Verknüpfung zwischen zwei Ringbestandteilen des Moleküls. Es ist daher auch wünschenswert, die Photostabilität von Flüssigkristallmischungen zu verbessern, ohne ihre insbesondere für die Verwendung in MFK-Anzeigen erforderlichen, oben erläuterten Eigenschaften zu beeinträchtigen.

Bei TN-(Schadt-Helfrich)-Zellen sind Medien erwünscht, die folgende Vorteile in den Zellen ermöglichen:
- erweiterter nematischer Phasenbereich (insbesondere zu tiefen Temperaturen)
- lagerstabil, auch bei extrem tiefen Temperaturen
- Schaltbarkeit bei extrem tiefen Temperaturen (out-door-use, Automobil, Avionik)
- erhöhte Beständigkeit gegenüber UV-Strahlung (längere Lebensdauer)

Mit den aus dem Stand der Technik zur Verfügung stehenden Medien ist es nicht möglich, diese Vorteile unter gleichzeitigem Erhalt der übrigen Parameter zu realisieren.

Bei höher verdrillten Zellen (STN) sind Medien erwünscht, die eine höhere Multiplexierbarkeit und/oder kleinere Schwellenspannung und/oder breitere nematische Phasenbereiche (insbesondere bei tiefen Temperaturen) ermöglichen. Hierzu ist eine weitere Ausdehnung des zur Verfügung stehenden Parameterraumes (Klärpunkt, Übergang smektisch-nematisch bzw. Schmelzpunkt, Viskosität, dielektrische Größen, elastische Größen) dringend erwünscht.

In der DE 10152831 A1, der DE 10128017 A1, der WO 01/12751 A1, der DE 19919348 A1, der EP 1213339 A1, der WO 02/051963 A1, der EP 0832955 A1, der GB 2296253 A, der DE 19720529 A1, der WO 90/09420 A1, der US 5,342,544 A und der DE 10204607 A1 werden flüssigkristalline Medien offenbart, die flüssigkristalline Verbindungen mit drei Phenylringen, sogenannte Terphenyle, enthalten.

In der GB 2240778 A werden Verbindungen der folgenden Formel offenbart, 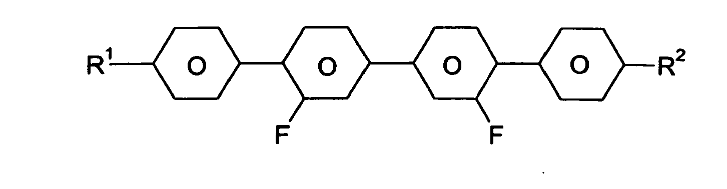 worin R¹ und R² unabhängig voneinander eine Alkylgruppe mit bis zu 9 C-Atomen bedeuten, in denen eine CH₂-Gruppe durch Sauerstoff ersetzt sein kann.

In der EP 0949231 A1 werden Fluor-substituierte Quarterphenyle der folgenden Formel beansprucht 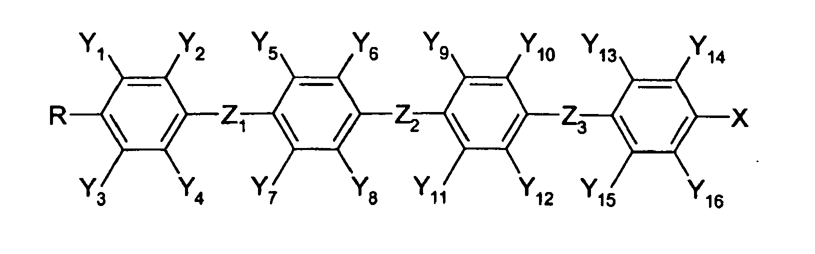 worin R, Y₁ bis Y₁₆, Z₁ bis Z₃ und X die in diesem Dokument angegebenen Bedeutungen aufweisen. Offenbart werden allerdings nur flüssigkristalline Mischungen, die Verbindungen der o.g. Formel aufweisen, in denen X eine polare Gruppe ist.

In der EP 1352944 A1 werden flüssigkristalline Zusammensetzungen offenbart, die zumindest eine Verbindung der folgenden Formel aufweisen, 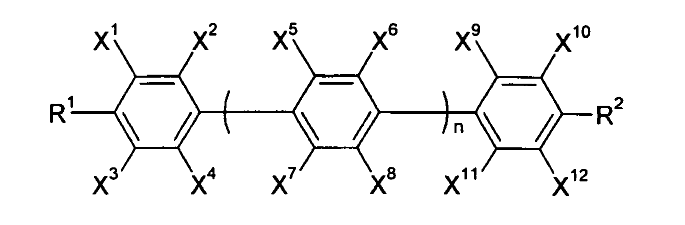 worin
- R¹ und R²: unabhängig voneinander eine Alkylgruppe mit 1 bis 10 Kohlenstoffatomen, eine Alkoxygruppe mit 1 bis 10 Kohlenstoffatomen oder eine Alkenylgruppe mit 2 bis 10 Kohlenstoffatomen bedeuten,
- X¹ bis X¹²: unabhängig voneinander Wasserstoff oder Fluor bedeuten, wobei zumindest zwei der X¹ bis X¹² Fluor sind,
falls ein 1,4-Phenylen zwei Fluoratome aufweist, die Positionen der Fluoratome entweder in der 2,5-Position oder in der 2,6-Position sind und
- n: gleich 2 ist.

Der Erfindung liegt die Aufgabe zugrunde, Medien insbesondere für derartige MFK-, TN- oder STN-Anzeigen bereitzustellen, die die oben angegebenen Nachteile nicht oder nur in geringerem Maße und vorzugsweise gleichzeitig sehr niedrige Schwellenspannungen und gleichzeitig hohe Werte für die Voltage Holding Ratio (VHR) aufweisen sowie eine verbesserte Beständigkeit gegenüber UV-Strahlung besitzen.

Es wurde nun gefunden, daß diese Aufgabe gelöst werden kann, wenn man in Anzeigen erfindungsgemäße Medien verwendet.

Gegenstand der Erfindung ist somit ein flüssigkristallines Medium umfassend
- wenigstens eine Verbindung der Formel 1 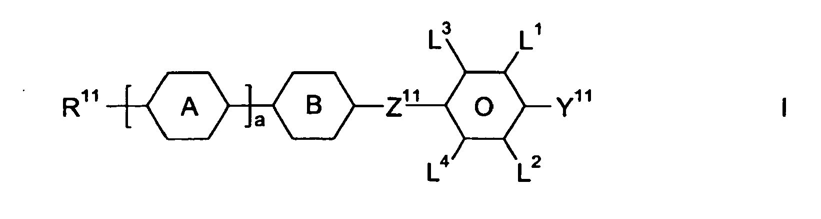 und
- wenigstens eine Verbindung der Formel II 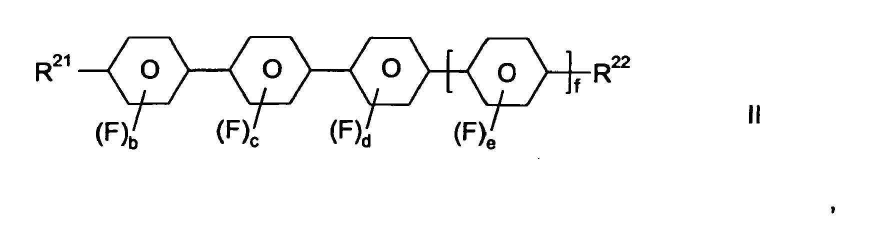
worin
- L¹, L², L³ und L⁴: jeweils unabhängig voneinander H oder F bedeuten;
- R¹¹: H, einen halogenierten oder unsubstituierten Alkylrest mit 1 bis 15 C-Atomen bedeutet, wobei in diesen Resten auch eine oder mehrere CH₂-Gruppen jeweils unabhängig voneinander durch -C≡C-, -CH=CH-, -O-, -CO-O- oder -O-CO- so ersetzt sein können, daß O-Atome nicht direkt miteinander verknüpft sind;
- R²¹ und R²²: jeweils unabhängig voneinander einen unsubstituierten Alkylrest mit 1 bis 15 C-Atomen bedeuten, wobei in diesen Resten auch eine oder mehrere-CH₂-Gruppen jeweils unabhängig voneinander durch -C≡C-, -CH=CH-, -O-, -CO-O- oder -O-CO- so ersetzt sein können, daß O-Atome nicht direkt miteinander verknüpft sind;
- Y¹¹: F, Cl, CN, SF₅, SCN, NCS, halogenierter Alkylrest, halogenierter Alkenylrest, halogenierter Alkoxyrest oder halogenierter Alkenyloxyrest mit jeweils bis zu 6 C-Atomen bedeutet;
- Z¹¹: eine Einfachbindung, -CH₂-CH₂-, -CH=CH-, -CH=CF-, -CF=CH-, -CF=CF-, -C≡C-, -COO-, -OCO-, -CF₂O- oder -OCF₂- bedeutet;
- a: 0 oder 1 ist;
- b, c und d: jeweils unabhängig voneinander 0, 1 oder 2 sind;
- e: 0 ist;
- f: 1 ist; 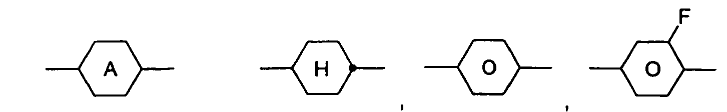 oder 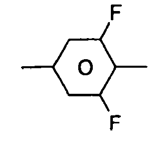 bedeutet; und 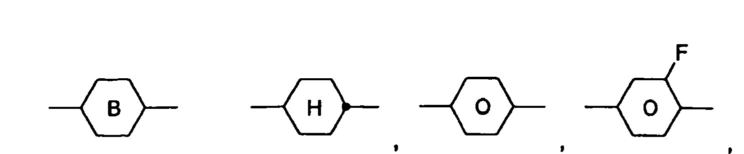 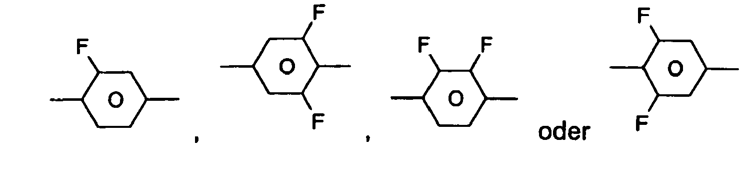 bedeutet,
wobei das flüssigkristalline Medium weniger als 5 Gew. -% an Verbindungen der Formel 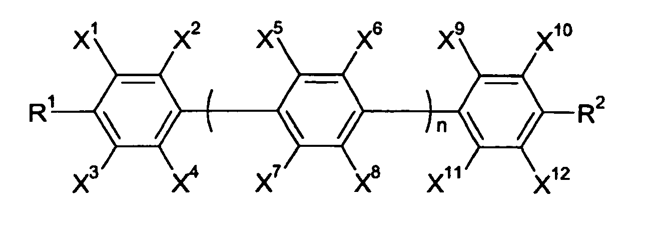 enthält, worin
- R¹ und R²: unabhängig voneinander eine Alkylgruppe mit 1 bis 10 Kohlenstoffatomen, eine Alkoxygruppe mit 1 bis 10 Kohlenstoffatomen oder eine Alkenylgruppe mit 2 bis 10 Kohlenstoffatomen bedeuten,
- X¹ bis X¹²: unabhängig voneinander Wasserstoff oder Fluor bedeuten, wobei zumindest zwei der X¹ bis X¹² Fluor sind,
falls ein 1,4-Phenylen zwei Fluoratome aufweist, die Positionen der Fluoratome entweder in der 2,5-Position oder in der 2,6-Position sind und
- n: gleich 2 ist.

Besonders bevorzugt ist ein erfindungsgemäßes flüssigkristallines Medium umfassend
- wenigstens eine Verbindung der Formel IA 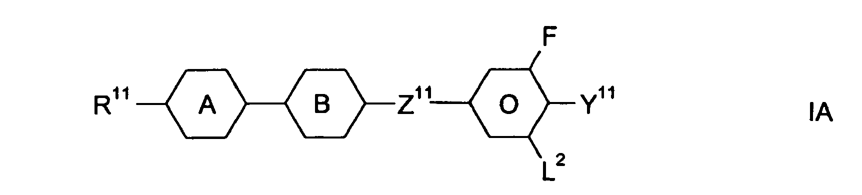 und
- wenigstens eine Verbindung der Formel II 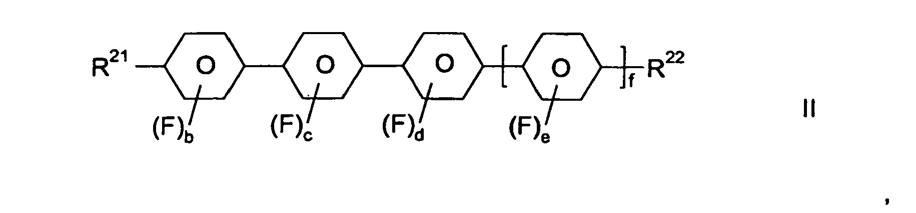
worin
- L²: H oder F bedeutet;
- R¹¹: H, einen halogenierten oder unsubstituierten Alkylrest mit 1 bis 15 C-Atomen bedeutet, wobei in diesen Resten auch eine oder mehrere CH₂-Gruppen jeweils unabhängig voneinander durch -C≡C-, -CH=CH-, -O-,-CO-O- oder -O-CO- so ersetzt sein können, daß O-Atome nicht direkt miteinander verknüpft sind;
- R²¹ und R²²: jeweils unabhängig voneinander einen unsubstituierten Alkylrest mit 1 bis 15 C-Atomen bedeuten, wobei in diesen Resten auch eine oder mehrere CH₂-Gruppen jeweils unabhängig voneinander durch -C≡C-, -CH=CH-, -O-, -CO-O- oder -O-CO- so ersetzt sein können, daß O-Atome nicht direkt miteinander verknüpft sind;
- Y¹¹: F, Cl, CN, SF₅, SCN, NCS, halogenierter Alkylrest, halogenierter Alkenylrest, halogenierter Alkoxyrest oder halogenierter Alkenyloxyrest mit jeweils bis zu 6 C-Atomen bedeutet;
- Z¹¹: eine Einfachbindung, -COO- oder -CF₂O- bedeutet;
- f: 1 ist;
- b, c und d: jeweils unabhängig voneinander 0, 1 oder 2 sind;
- e: 0 ist; 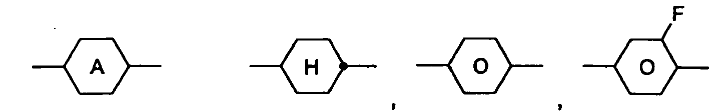 oder 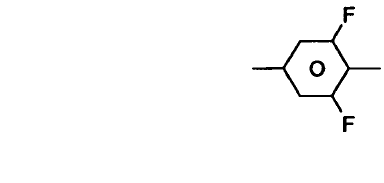 bedeutet; und 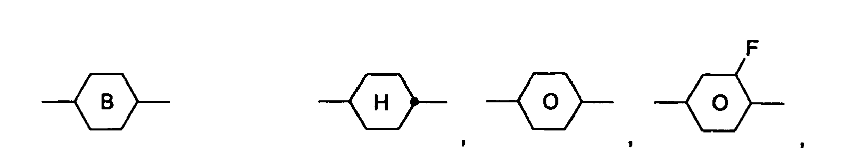 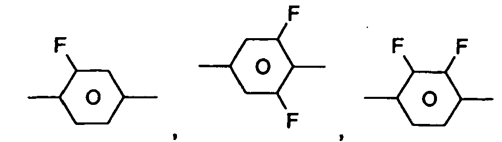 oder 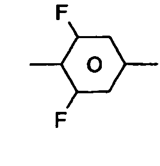 bedeutet,
wobei das flüssigkristalline Medium weniger als 5 Gew. -% an Verbindungen der Formel 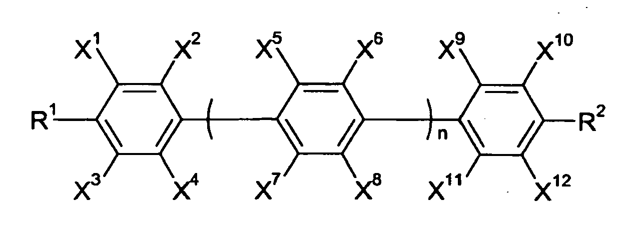 enthält, worin
- R¹ und R²: unabhängig voneinander eine Alkylgruppe mit 1 bis 10 Kohlenstoffatomen, eine Alkoxygruppe mit 1 bis 10 Kohlenstoffatomen oder eine Alkenylgruppe mit 2 bis 10 Kohlenstoffatomen bedeuten,
- X¹ bis X¹²: unabhängig voneinander Wasserstoff oder Fluor bedeuten, wobei zumindest zwei der X¹ bis X¹² Fluor sind,
falls ein 1,4-Phenylen zwei Fluoratome aufweist, die Positionen der Fluoratome entweder in der 2,5-Position oder in der 2,6-Position sind und
- n: gleich 2 ist.

Es ist bevorzugt, daß das erfindungsgemäße flüssigkristalline Medium entweder die Basis eines Gemisches von polaren Verbindungen mit positiver dielektrischer Anisotropie bildet oder Bestandteil eines solchen Gemisches ist. Die Verbindungen der Formeln I und II besitzen einen breiten Anwendungsbereich. In Abhängigkeit von der Auswahl der Substituenten können diese Verbindungen als Basismaterialien dienen, aus denen flüssigkristalline Medien zum überwiegenden Teil zusammengesetzt sind; es können aber auch Verbindungen der Formeln I und II flüssigkristallinen Basismaterialien aus anderen Verbindungsklassen zugesetzt werden, um beispielsweise die dielektrische und/oder optische Anisotropie eines solchen Dielektrikums zu beeinflussen und/oder um dessen Schwellenspannung und/oder dessen Viskosität zu optimieren und insbesondere dessen Photostabilität zu verbessern.

Besonders vorteilhaft erweist sich das die Verbindungen der Formeln I und II umfassende flüssigkristalline Medium der vorliegenden Erfindung im Hinblick auf die UV-Stabilität von Flüssigkristallmischungen.

Die Verbindungen der Formeln I und II sind in reinem Zustand farblos und bilden flüssigkristalline Mesophasen in einem für die elektrooptische Verwendung günstig gelegenen Temperaturbereich.

Falls R¹¹, R²¹ und/oder R²² einen Alkylrest und/oder einen Alkoxyrest (d.h. ein Alkylrest, in dem (wenigstens) die -CH₂-Gruppe durch O ersetzt ist, über welche R¹¹, R ²¹ bzw. R²² an den betreffenden Ring binden) bedeuten, so kann dieser geradkettig oder verzweigt sein. Vorzugsweise ist er geradkettig, hat 1, 2, 3, 4, 5, 6 oder 7 C-Atome und bedeutet demnach bevorzugt Methyl, Ethyl, Propyl, Butyl, Pentyl, Hexyl, Heptyl, Methoxy, Ethoxy, Propoxy, Butoxy, Pentoxy, Hexoxy oder Heptoxy, ferner Octyl, Nonyl, Decyl, Undecyl, Dodecyl, Tridecyl, Tetradecyl, Pentadecyl, Octoxy, Nonoxy, Decoxy, Undecoxy, Dodecoxy, Tridecoxy oder Tetradedoxy.

Oxaalkyl - d.h. eine Alkylkette, in der wenigstens eine CH₂-Gruppe durch O ersetzt ist, wobei jedoch das Sauerstoffatom nicht direkt an den durch R¹¹, R²¹ beziehungsweise R²² substituierten Ring bindet - bedeutet vorzugsweise geradkettiges 2-Oxapropyl (= Methoxymethyl), Ethoxymethyl oder 3-Oxybutyl (= 2-Methoxyethyl), 2-, 3- oder 4-Oxypentyl, 2-, 3-, 4- oder 5-Oxyhexyl, 2-, 3-, 4-, 5- oder 6-Oxyheptyl, 2-, 3-, 4-, 5-, 6-, oder 7-Oxaoctyl, 2-, 3-, 4-, 5-, 6-, 7- oder 8-Oxanonyl, 2-, 3-, 4-, 5-, 6-, 7-, 8- oder 9-Oxadexyl.

Falls R¹¹, R²¹ und/oder R²² einen Alkylrest bedeuten, in dem eine CH₂-Gruppe durch -CH=CH- ersetzt ist, so kann dieser geradkettig oder verzweigt sein. Ein solcher Rest wird auch als Alkenylrest bezeichnet. Vorzugsweise ist er geradkettig und hat 2 bis 10 C-Atome. Er bedeutet demnach besonders bevorzugt Vinyl, Prop-1-, oder Prop-2-enyl, But-1-, 2-oder But-3-enyl, Pent-1-, 2-, 3- oder Pent-4-enyl, Hex-1-, 2-, 3-, 4- oder Hex-5-enyl, Hept-1-, 2-, 3-, 4-, 5- oder Hept-6-enyl, Oct-1-, 2-, 3-, 4-, 5-, 6-oder Oct-7-enyl, Non-1-, 2-, 3-, 4-, 5-, 6-, 7- oder Non-8-enyl, Dec-1-, 2-, 3-, 4-, 5-, 6-, 7-, 8- oder Dec-9-enyl. Sofern die Alkenylgruppe E- oder Z-konfiguriert sein kann, ist die E-Konfiguration (trans-Konfiguration) im allgemeinen bevorzugt.

Falls R¹¹, R²¹ und/oder R²² einen Alkylrest bedeuten, in dem eine CH₂-Gruppe durch -O- und eine durch -CO- ersetzt ist, so sind diese bevorzugt benachbart. Somit beinhalten diese eine Acyloxygruppe -CO-O- oder eine Oxycarbonylgruppe -O-CO-. Vorzugsweise sind diese geradkettig und haben 2 bis 6 C-Atome. Sie bedeuten demnach besonders Acetyloxy, Propionyloxy, Butyryloxy, Pentanoyloxy, Hexanoyloxy, Acetyloxymethyl, Propionyloxymethyl, Butyryloxymethyl, Pentanoyloxymethyl, 2-Acetyloxyethyl, 2-Propionyloxyethyl, 2-Butyryloxyethyl, 2-Acetyloxypropyl, 3-Propionyl-oxypropyl, 4-Acetyl-oxybutyl, Methoxycarbonyl, Ethoxycarbonyl, Propoxy-carbonyl, Butoxycarbonyl, Pentoxycarbonyl, Methoxycarbonylmethyl, Ethoxycarbonylmethly, Propoxycarbonylmethyl, Butoxycarbonylmethyl, 2-(Methoxycarbonyl)ethyl, 2-(Ethoxycarbonyl)ethyl, 2-(Propoxycarbonyl)-ethyl, 3-(Methoxycarbonyl)-propyl, 3-(Ethoxy)-carbonyl)-propyl oder 4-(Methoxycarbonyl)-butyl.

Falls R¹¹, R²¹ und/oder R²² einen Alkylrest bedeuten, in dem eine CH₂-Gruppe durch unsubstituiertes oder substituiertes -CH=CH- und eine benachbarte CH₂-Gruppe durch CO oder CO-O oder O-CO ersetzt ist, so kann dieser geradkettig oder verzweigt sein. Vorzugsweise ist er geradkettig und hat 4 bis 12 C-Atome. Er bedeutet demnach besonders Acryloyloxymethyl, 2-Acryloyl-oxyethyl, 3-Acryloylo:cypropyl, 4-Acryoyloxybutyl, 5-Acryloyloxypentyl, 6-Acryloyloxyhexyl, 7-Acryloyloxyheptyl, 8-Acryloyloxyoctyl, 9-Acryloyl-oxynonyl, 10-Acryloyloxydecyl, Methacryloyloxymethyl, 2-Methacryloyl-oxyethyl, 3-Methacryloyloxypropyl, 4-Methacryloyloxybutyl, 5-Methacryl-oyloxypentyl, 6-Methacryloyloxyhexyl, 7-Methacryloyloxyheptyl, 8-Methacryloyloxyoctyl, 9-Methacryloyloxynonyl.

Falls R¹¹ einen mindestens einfach durch Halogen substituierten Alkyl-, Alkoxy- oder Alkenylrest bedeutet, so ist dieser Rest vorzugsweise geradkettig und Halogen ist vorzugsweise F oder Cl. Bei Mehrfachsubstitution ist Halogen vorzugsweise F. Die resultierenden Reste schließen auch perfluorierte Reste ein. Bei Einfachsubstitution kann der Fluor- oder Chlorsubstituent in beliebiger Position sein, vorzugsweise jedoch in ω-Position. Besonders bevorzugt sind -CF₃, -CHF₂, -CH₂F, -CH₂CF₃, -CHFCHF₂, -CF₂CF₃, -OCF₃, -OCHF₂, -OCH₂F und -CF=CF₂.

Verbindungen mit verzweigten Flügelgruppen R¹¹, R²¹ und/oder R²² können gelegentlich wegen einer besseren Löslichkeit in den üblichen flüssigkristallinen Basismaterialien von Bedeutung sein, insbesondere aber als chirale Dotierstoffe, wenn sie optisch aktiv sind. Smektische Verbindungen dieser Art eignen sich als Komponenten für ferroelektrische Materialien.

Verzweigte Gruppen dieser Art enthalten in der Regel nicht mehr als eine Kettenverzweigung. Bevorzugt verzweigte Reste R sind Isopropyl, 2-Butyl (= 1-Methylpropyl), Isobutyl (= 2-Methylpropyl), 2-Methylbutyl; Isopentyl (= 3-Methylbutyl), 2-Methylpentyl, 3-Methylpentyl, 2-Ethylhexyl, 2-Propylpentyl, Isopropoxy, 2-Methylpropoxy, 2-Methylbutoxy, 3-Methylbutoxy, 2-Methylpentoxy, 3-Methylpentoxy, 2-Ethylhexoxy, 1-Methylhexoxy, 1-Methylheptoxy.

Falls R¹¹, R²¹ und/oder R²² einen Alkylrest darstellen, in dem zwei oder mehr CH₂-Gruppen durch -O- und/oder -CO-O- ersetzt sind, so kann dieser geradkettig oder verzweigt sind. Vorzugsweise ist er verzweigt und hat 3 bis 12 C-Atome. Er bedeutet demnach besonders Bis-carboxy-methyl, 2,2-Bis-carboxy-ethyl, 3,3-Bis-carboxy-propyl, 4,4-Bis-carboxy-butyl, 5,5-Bis-carboxy-pentyl, 6,6-Bis-carboxy-hexyl, 7,7-Bis-carboxy-heptyl, 8,8-Bis-carboxy-octyl, 9,9-Bis-carboxy-nonyl, 10,10-Bis-carboxy-decyl, Bis-(methoxycarbonyl)-methyl, 2,2-Bis-(methoxycarbonyl)-ethyl, 3,3-Bis-(methoxycarbonyl)-propyl, 4,4-Bis-(methoxycarbonyl)-butyl, 5,5-Bis-(methoxycarbonyl)-pentyl, 6,6-Bis-(methocycarbonyl)-hexyl, 7,7-Bis-(methoxycarbonyl)-heptyl, 8,8-Bis-(methoxycarbonyl)-octyl, Bis-(ethoxycarbonyl)-methyl, 2,2-Bis-(ethoxycarbonyl)-ethyl, 3,3-Bis-(ethoxycarbonyl)-propyl, 4,4-Bis-(ethoxycarbonyl)-butyl, 5,5-Bis-(ethoxycarbonyl)-hexyl.

Sofern Y¹¹ einen halogenierten Alkyl-, Alkenyl-, Alkoxy- oder Alkenyloxyrest darstellt, kann dieser Rest geradkettig oder verzweigt sein. Vorzugsweise ist der Rest geradkettig und mit F oder Cl substituiert. Bei Mehrfachsubstitution ist Halogen insbesondere F. Die substituierten Reste schließen auch perfluorierte Reste ein. Bei Einfachsubstitution kann der Halogensubstituent in beliebiger Position sein, vorzugsweise in ω-Position. Besonders bevorzugt bedeutet Y¹¹ F, Cl, CF₃, OCHF₂ oder OCF₃, insbesondere F.

Z¹¹ steht für eine Einfachbindung oder bedeutet -CH₂-CH₂-, -CH=CH-, -CH=CF-, -CF=CH-, -CF=CF-, -C≡C-, -COO-, -OCO-, -CF₂O- oder -OCF₂-. Bevorzugt steht Z¹¹ für eine Einfachbindung oder bedeutet -COO- oder -CF₂O-; besonders bevorzugt ist Z¹¹ -CF₂O-.

In den Verbindungen der Formel I und der Formel IA steht 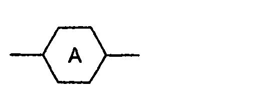 für 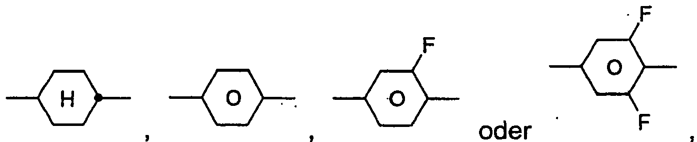 während 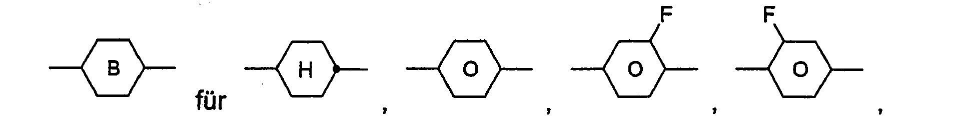 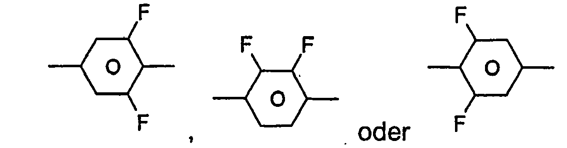 steht. Bevorzugt steht 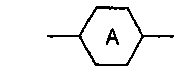 für einen 1,4-Cyclohexylen- oder einen 1,4-Phenylenring, während 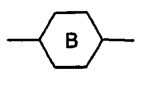 bevorzugt ein unsubstituierter oder ein-oder mehrfach mit Fluor substituierter 1,4-Phenylenring ist.

a in Formel I kann 0 oder 1 sein. Besonders bevorzugt ist a gleich 1.

f in Formel II ist 1. Damit liegen die Verbindungen der Formel II als Quarterphenyle vor, welche ihrerseits - je nach Bedeutung von b, c und d - einfach oder mehrfach mit Fluor substituiert sein können. Ferner, ist e für Verbindungen der Formel II gleich 0, d.h. der entsprechende Phenylring ist nicht mit F substituiert, während vorzugsweise wenigstens zwei von b, c und d gleich 1 oder 2 sind. In einer bevorzugten Ausführungsform der Erfindung sind b, c, d und e so ausgewählt, dass gilt: b + c + d + e ≥ 3; besonders bevorzugt ist die Summe der lateralen Fluor-Substituenten von Verbindungen der Formel II gleich 3, 4, 5 oder 6.

Die Verbindungen der Formeln I und II werden nach an sich bekannten Methoden dargestellt, wie sie in der Literatur (z.B. in den Standardwerken wie Houben-Weyl, Methoden der Organischen Chemie, Georg-Thieme-Verlag, Stuttgart) beschrieben sind, und zwar unter Reaktionsbedingungen, die für die genannten Umsetzungen bekannt und geeignet sind. Dabei kann man auch von an sich bekannten, hier nicht näher erwähnten Varianten Gebrauch machen.

Die Verbindungen der Formel II können zum Beispiel auch durch - auch konsekutiv durchführbare - Suzuki-Kreuzkupplung von entsprechenden aromatischen Boronsäuren oder Boronsäureestern mit geeignet substituierten Phenylverbindungen aufgebaut werden. In Schema 1 sind beispielhafte Synthesewege zur Herstellung von Verbindungen der Formel II via Suzuki-Kreuzkupplung skizziert. Dabei sind R²¹, R²², b, c, d und e wie oben für Formel II definiert. M steht für Si, Ge, Sn. Weitere Herstellungsverfahren sind unter anderem in der deutschen Patentanmeldung 10211597.4 und der europäischen Patentanmeldung 03003811.1 beschrieben.

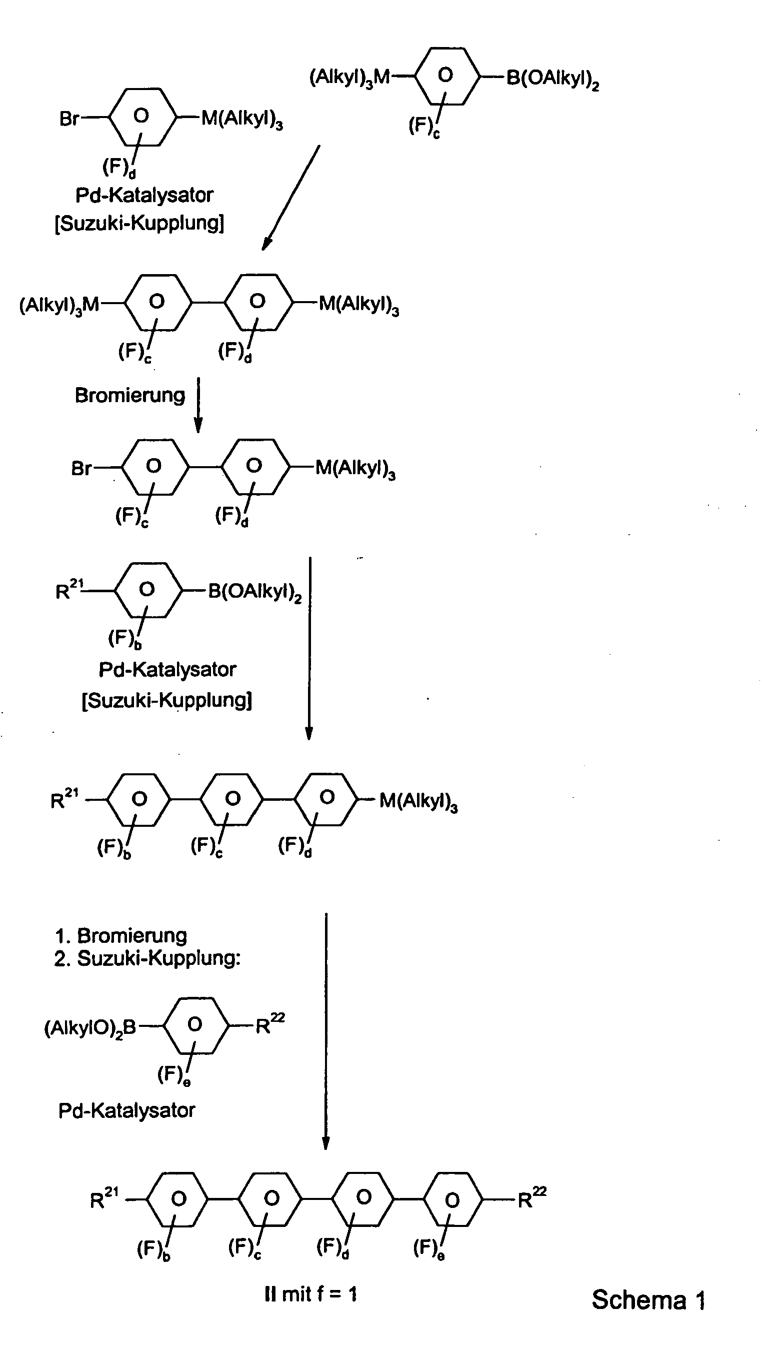

Gegenstand der Erfindung sind auch elektrooptische Anzeigen (insbesondere STN- oder MFK-Anzeigen mit zwei planparallelen Trägerplatten, die mit einer Umrandung eine Zelle bilden, integrierten nicht-linearen Elementen zur Schaltung einzelner Bildpunkte auf den Trägerplatten und einer in der Zelle befindlichen nematischen Flüssigkristallmischung mit positiver dielektrischer Anisotropie und hohem spezifischen Widerstand), die derartige Medien enthalten sowie die Verwendung dieser Medien für elektrooptische Zwecke.

Die erfindungsgemäßen Flüssigkristallmischungen ermöglichen eine bedeutende Erweiterung des zur Verfügung stehenden Parameterraumes. Die erzielbaren Kombinationen aus Klärpunkt, Viskosität bei tiefer Temperatur, thermischer und UV-Stabilität und dielektrischer Anisotropie übertreffen bei weitem bisherige Materialien aus dem Stand der Technik.

Insbesondere die UV-Stabilität der erfindungsgemäßen Flüssigkristallmedien ist gegenüber der bekannter Materialien des Stands der Technik deutlich verbessert, wobei die weiteren erwünschten beziehungsweise erforderlichen Parameter im allgemeinen nicht nur nicht beeinträchtigt, sondern ebenfalls deutlich verbessert sind. So ist bei flüssigkristallinen Mischungen, die das erfindungsgemäße Flüssigkristallmedium umfassen, eine geringere Abnahme der Voltage Holding Ratio (VHR) [S. Matsumoto et al., Liquid Crystals 5, 1320 (1989); K. Niwa et al., Proc. SID Conference, San Francisco, June 1984, p. 304 (1984); G. Weber et al., Liquid Crystals 5, 1381 (1989)] nach UV-Bestrahlung zu beobachten als bei herkömmlichen Mischungen. Vergleichbares gilt auch für die Veränderung des spezifischen Widerstands (SR) der Mischungen infolge UV-Behandlung: Flüssigkristallmischungen, die das erfindungsgemäße flüssigkristalline Medium enthalten, weisen nach UV-Behandlung einen signifikant höheren spezifischen Widerstand auf und erweisen sich als weniger strahlungsempfindlich als Mischungen ohne erfindungsgemäßes Medium.

Auch im Falle von Flüssigkristallmischungen, deren Photostabilität nach Zugabe einer Verbindung der Formel I mit Z¹¹ = -(CH₂)₂-, -COO-, -OCO-, -CH=CH-, -CF=CH-, -CH=CF-, CF=CF-, -C≡C-, -OCF₂- oder -CF₂O- verringert sein kann, zeigen eine deutlich verbesserte UV-Stabilität, wenn in diesen Mischungen neben der Verbindung (oder den Verbindungen) der Formel I (bzw. IA) wenigstens eine Verbindung der wie oben definierten Formel II eingesetzt wird.

Offenbar beeinflußt die Kombination der Verbindungen der Formeln I und II die verschiedenen, für eine Verwendung in elektrooptischen Anzeigen relevanten Parameter in deren Kombination sehr viel besser als bekannte Materialien aus dem Stand der Technik.

Die erfindungsgemäßen Mischungen sind bevorzugt als TN-TFT-Mischungen für Note-PC-Anwendungen mit 3,3 und 2,5 V-Treibern geeignet. Sie können auch als TFT-Mischungen für Projektionsanwendungen verwendet werden, und zwar sowohl im transmissiven als auch im reflektiven Betrieb.

Die Forderung nach hohem Klärpunkt, nematischer Phase bei tiefer Temperatur sowie einem hohen Δε konnte bislang nur unzureichend erfüllt werden. Die erfindungsgemäßen Flüssigkristallmischungen ermöglichen es bei Beibehaltung der nematischen Phase bis -20°C und bevorzugt bis -30 °C, besonders bevorzugt bis -40 °C, Klärpunkt oberhalb 60 °C, vorzugsweise oberhalb 65 °C, besonders bevorzugt oberhalb 70 °C, gleichzeitig zumeist dielektrische Anisotropiewerte Δε ≥ 6, vorzugsweise ≥ 8 und einen hohen Wert für den spezifischen Widerstand zu erreichen, wodurch hervorragende STN- und MFK-Anzeigen erzielt werden können. Insbesondere sind die Mischungen durch kleine Operationsspannungen gekennzeichnet. Die TN-Schwellen liegen unterhalb 2,0 V, vorzugsweise unterhalb 1,5 V, besonders bevorzugt < 1,3 V.

Es versteht sich, daß durch geeignete Wahl der Komponenten der erfindungsgemäßen Mischungen auch höhere Klärpunkte (z.B. oberhalb 110 °C) bei höheren Schwellenspannungen oder niedrigere Klärpunkte bei niedrigeren Schwellenspannungen unter Erhalt der anderen vorteilhaften Eigenschaften realisiert werden können. Ebenso können bei entsprechend wenig erhöhten Viskositäten Mischungen mit größerem Δε und somit geringen Schwellen erhalten werden. Die erfindungsgemäßen MFK-Anzeigen arbeiten vorzugsweise im ersten Transmissionsminimum nach Gooch und Tarry {C.H. Gooch und H.A. Tarry, Electron. Lett. 10, 2-4, 1974; C.H. Gooch und H.A. Tarry, Appl. Phys., Vol. 8, 1575-1584, 1975], wobei hier neben besonders günstigen elektrooptischen Eigenschaften, wie z.B. hohe Steilheit der Kennlinie und geringe Winkelabhängigkeit des Kontrastes (DE-PS 30 22 818) bei gleicher Schwellenspannung wie in einer analogen Anzeige im zweiten Minimum, eine kleinere dielektrische Anisotropie ausreichend ist. Hierdurch lassen sich unter Verwendung der erfindungsgemäßen Mischungen im ersten Minimum sehr hohe spezifische Widerstände verwirklichen. Der Fachmann kann durch geeignete Wahl der einzelnen Komponenten und deren Gewichtsanteilen mit einfachen Routinemethoden die für eine vorgegebene Schichtdicke der MFK-Anzeige erforderliche Doppelbrechung einstellen.

Der nematische Phasenbereich ist vorzugsweise mindestens 90° C, insbesondere mindestens 100° C. Vorzugsweise erstreckt sich dieser Bereich mindestens von -20° C bis +80° C.

Bei Flüssigkristallanzeigen ist eine kleine Schaltzeit erwünscht. Dies gilt besonders für Anzeigen die videowiedergabefähig sind. Für derartige Anzeigen werden Schaltzeiten (Summe: tₒₙ + t_{off}) von maximal 16 ms benötigt. Die Obergrenze der Schaltzeit wird durch die Bildwiederholfrequenz bestimmt.

Formel I umfaßt vorzugsweise Verbindungen der Formel IA, insbesondere folgende Verbindungen 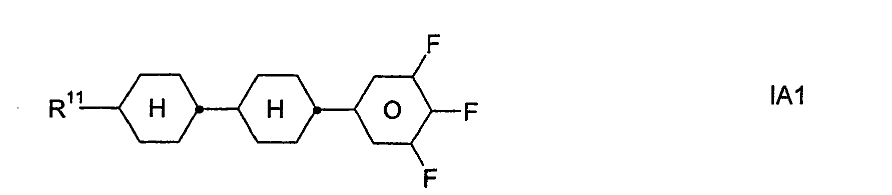 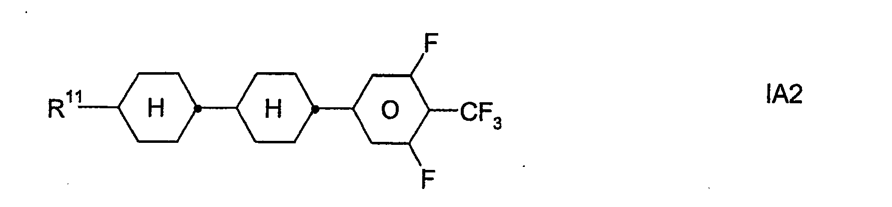 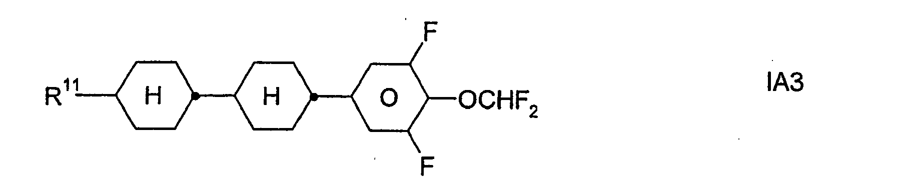 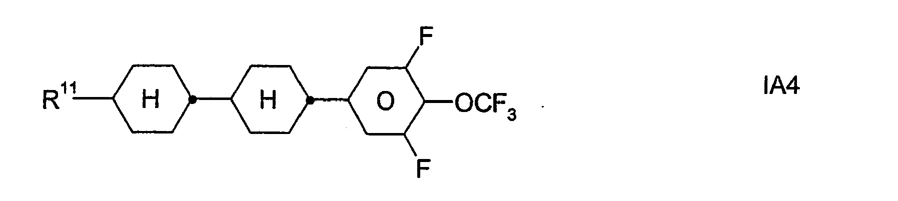 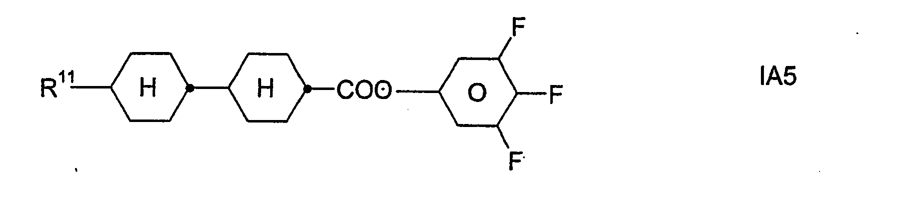 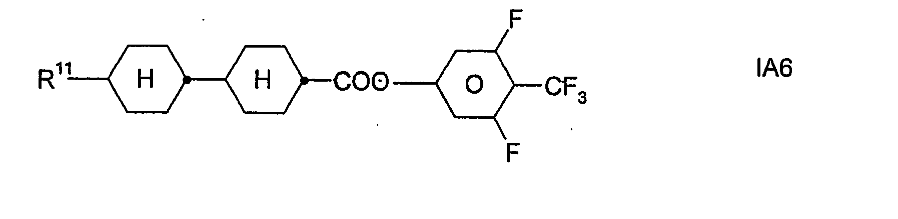 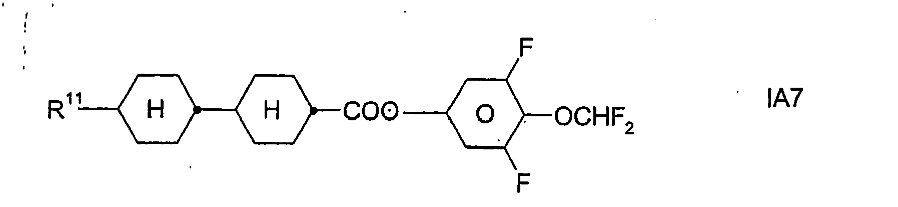 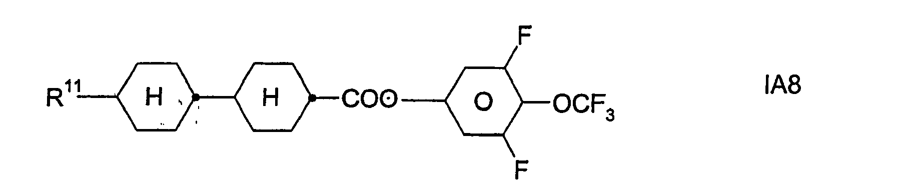 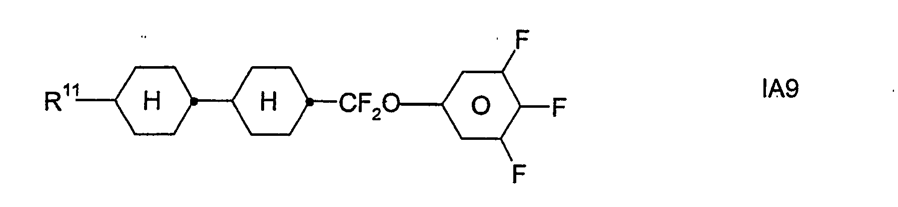 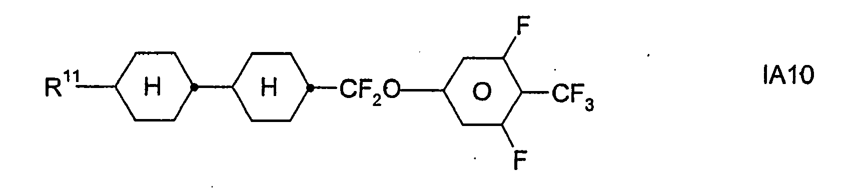 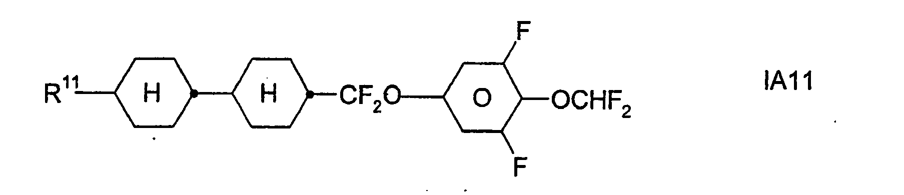 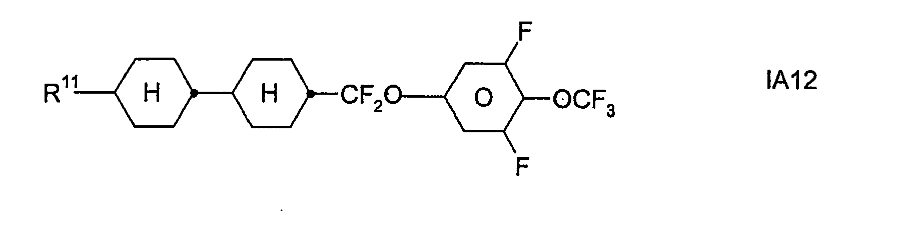 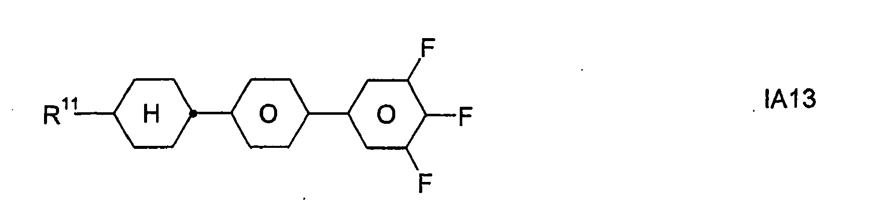 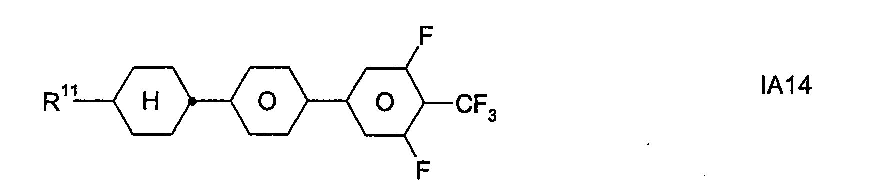 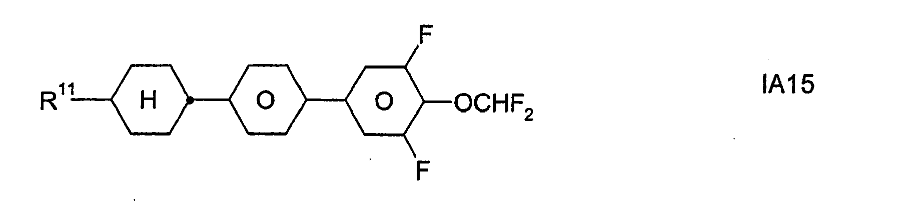 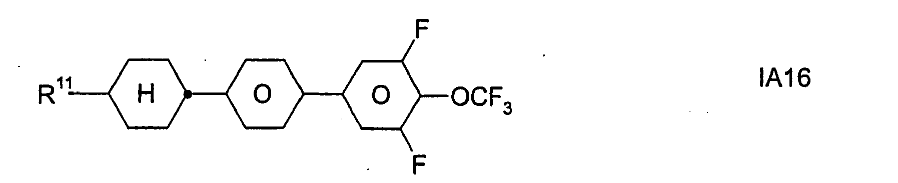 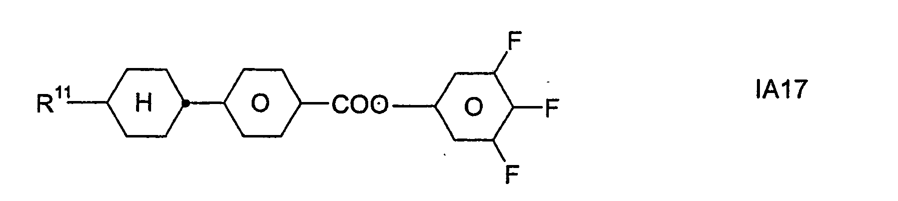 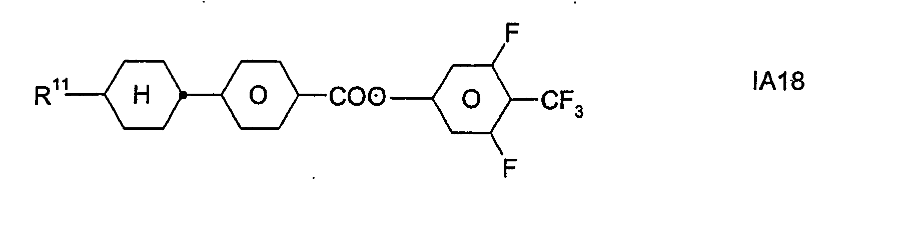 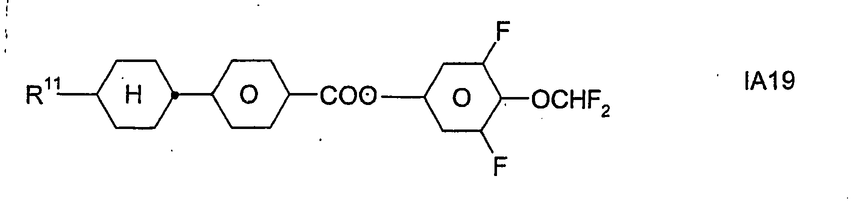 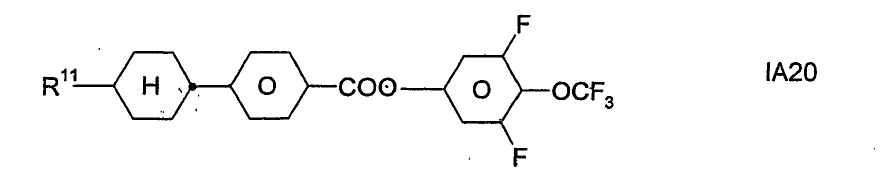 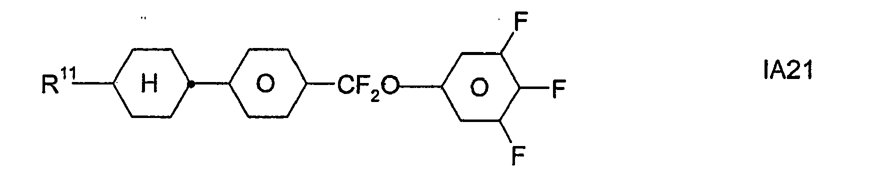 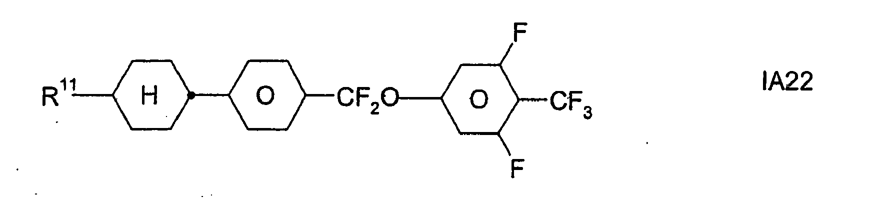 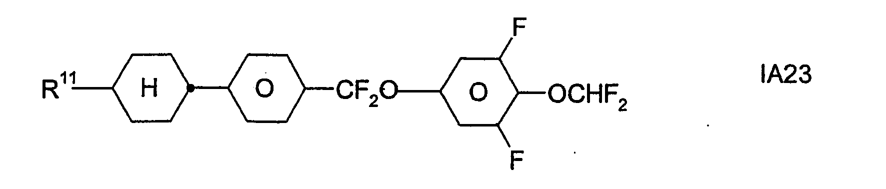 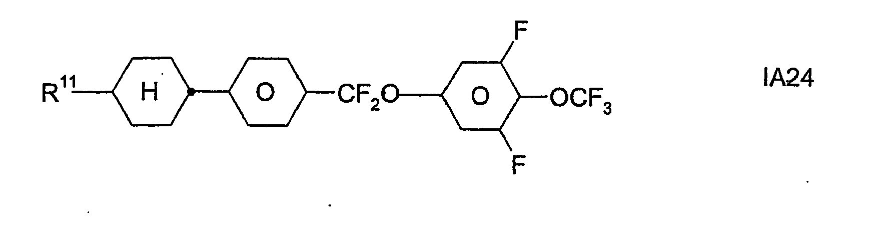 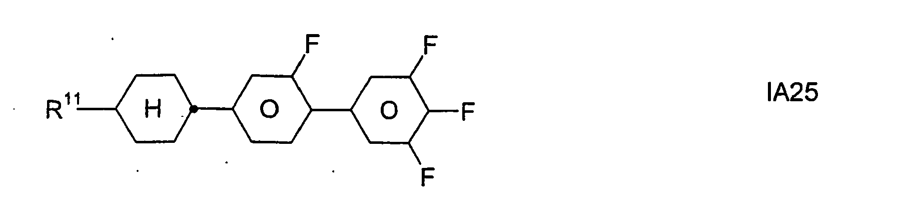 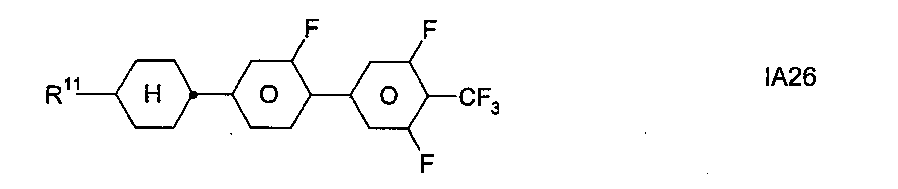 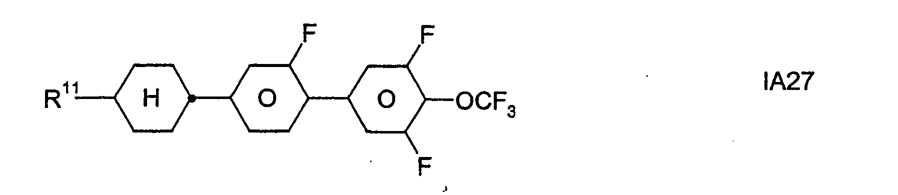 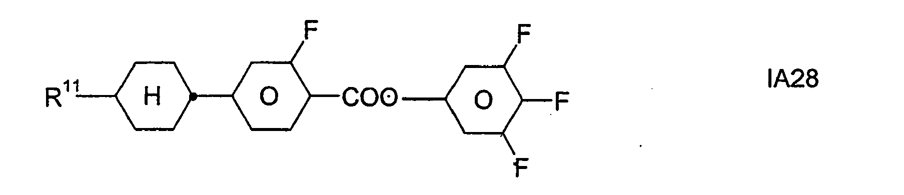 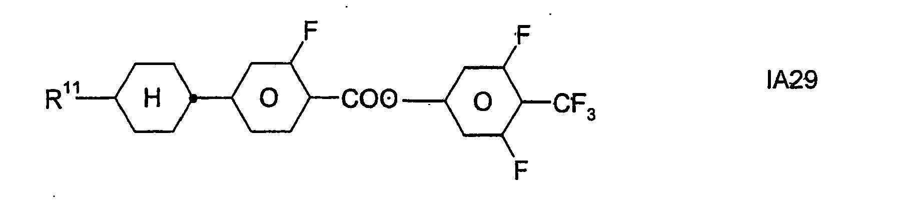 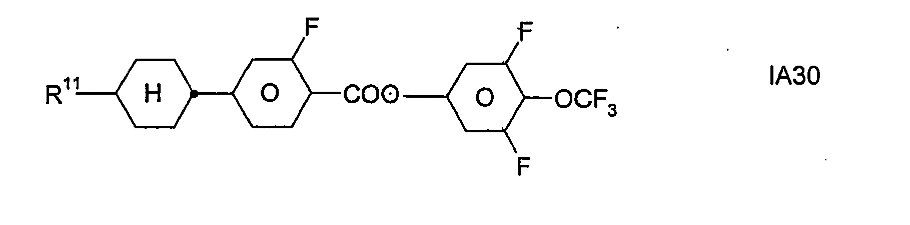 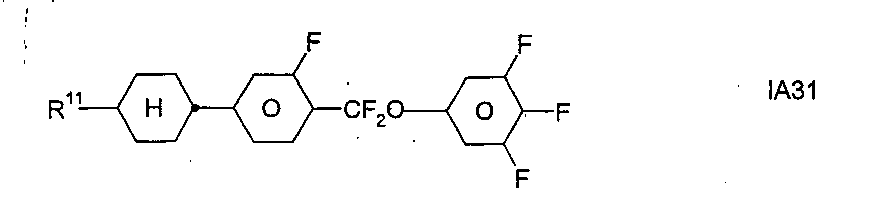 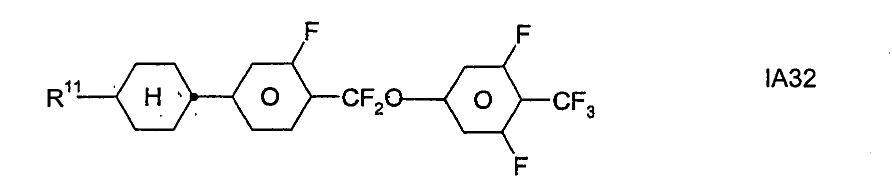 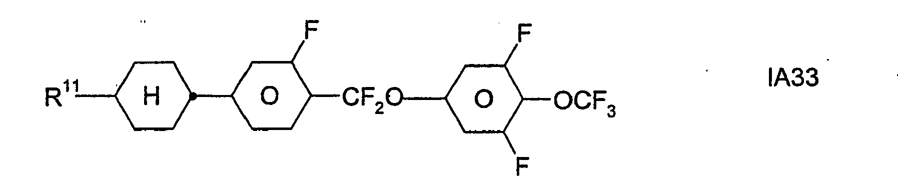 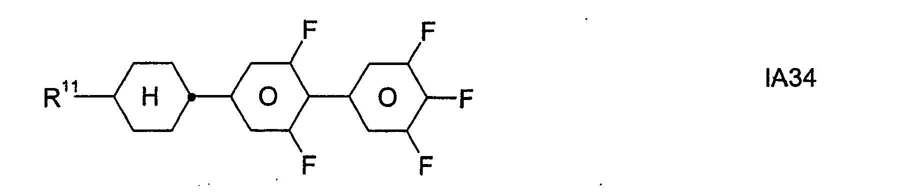 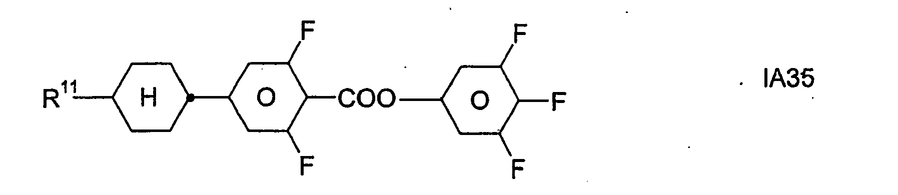 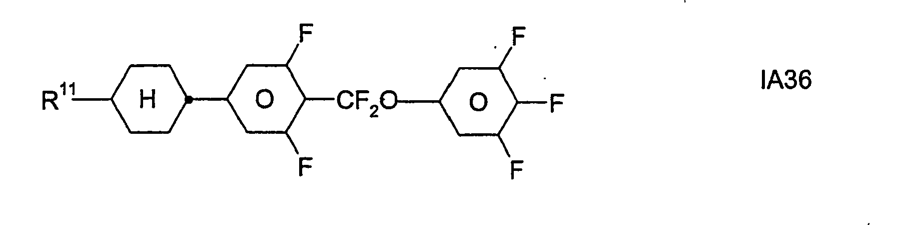 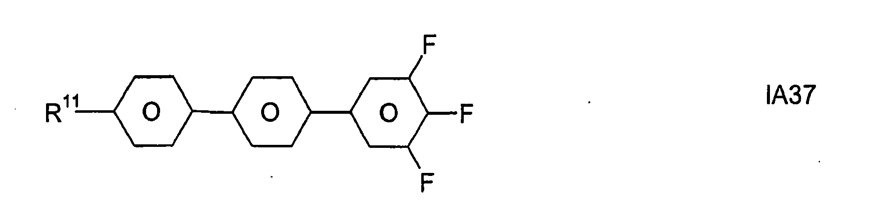 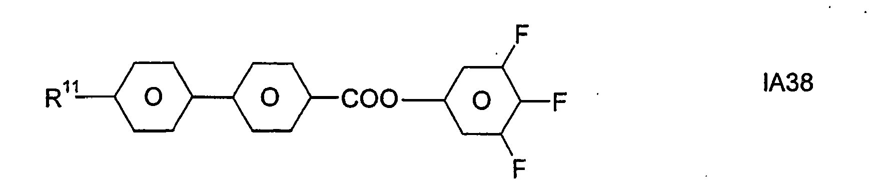 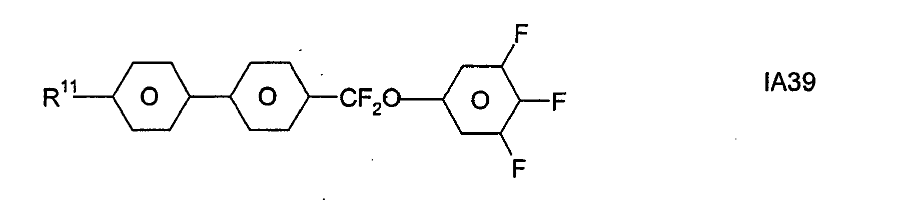 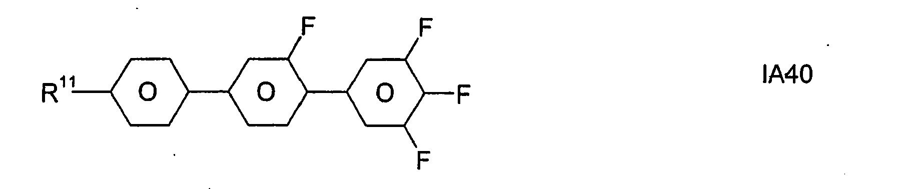 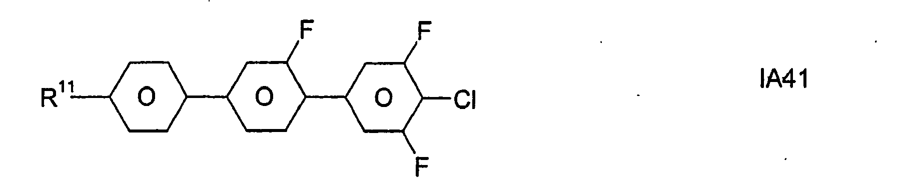 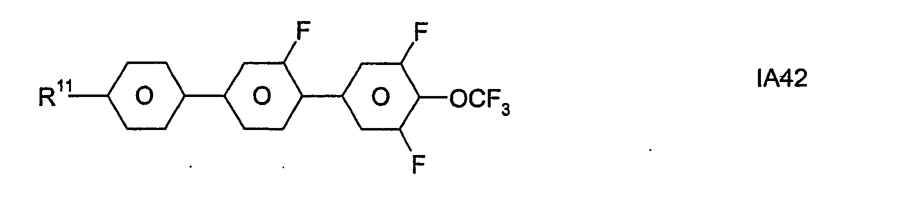 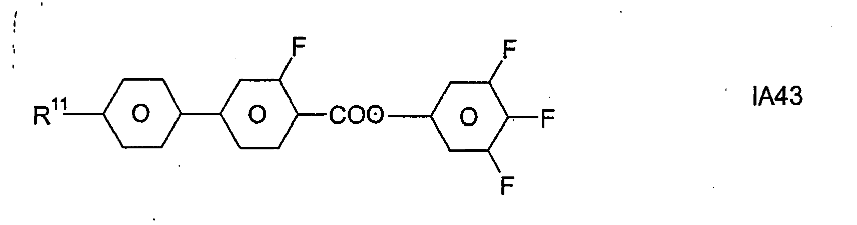 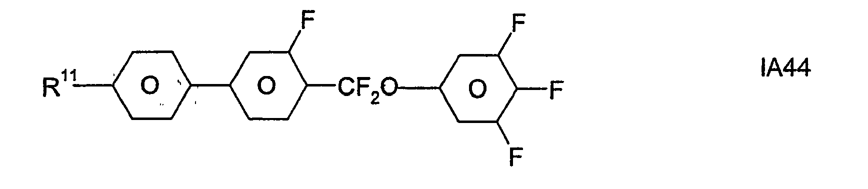 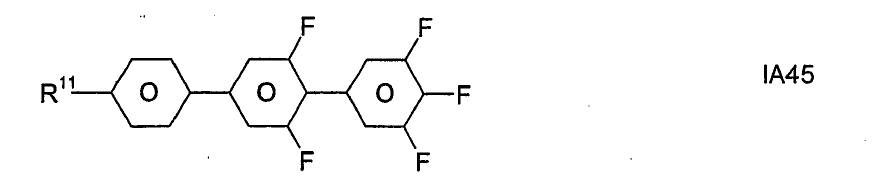 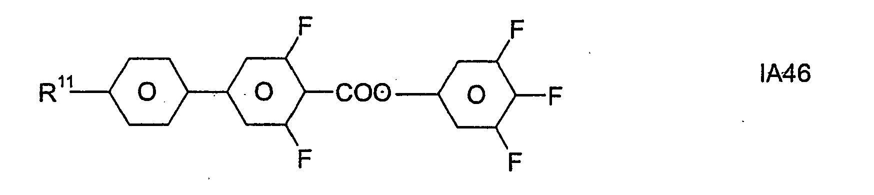 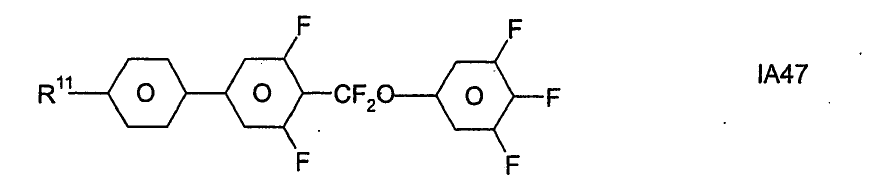 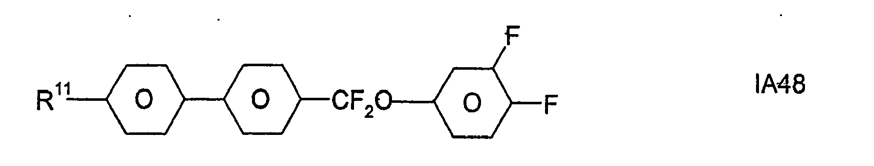 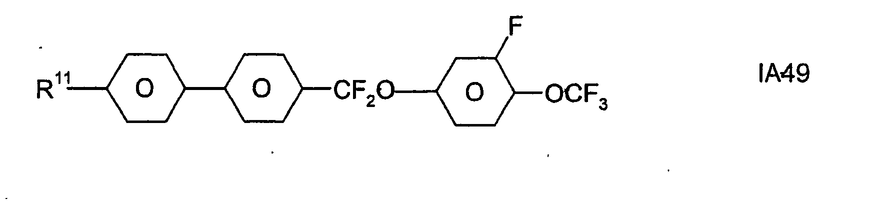 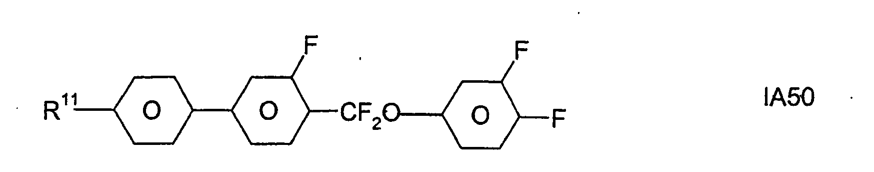 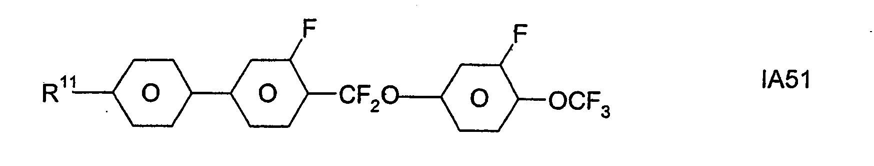 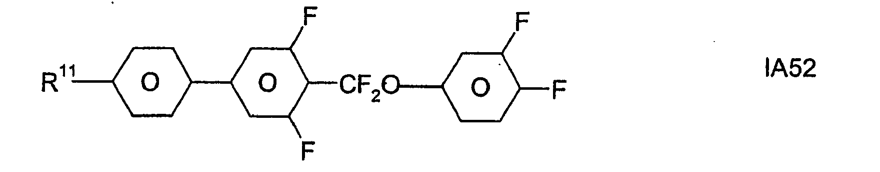 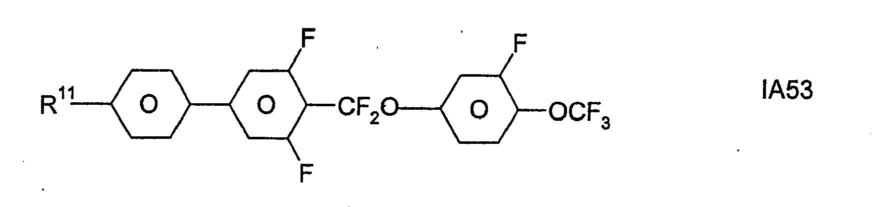 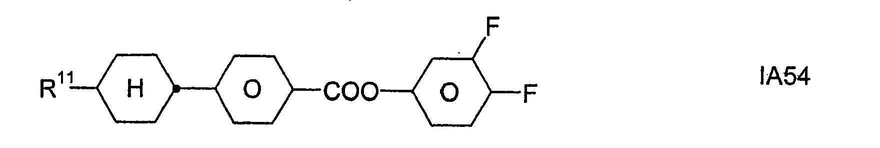 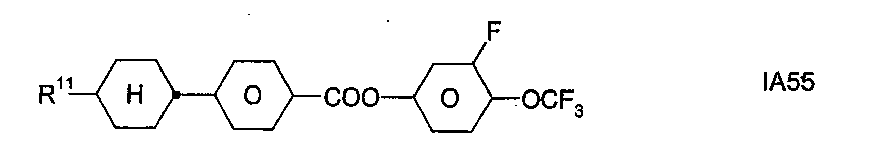 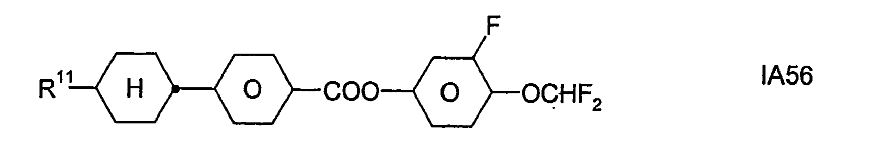 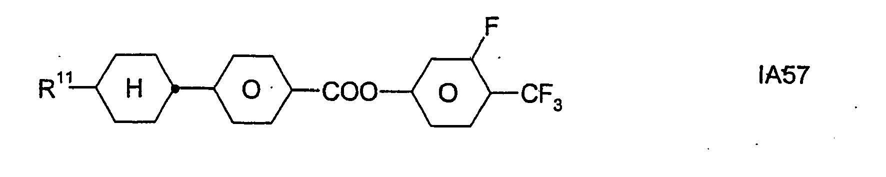 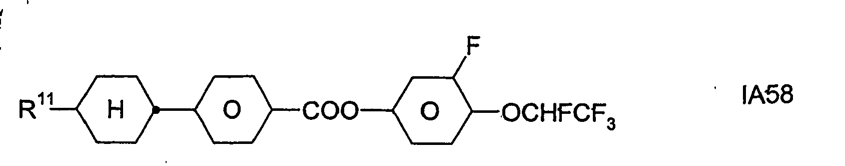 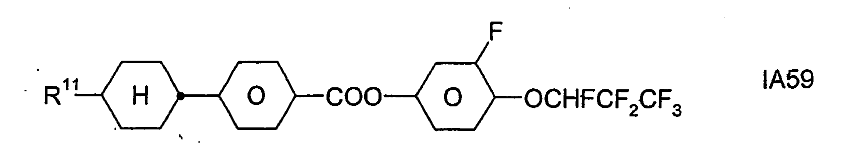 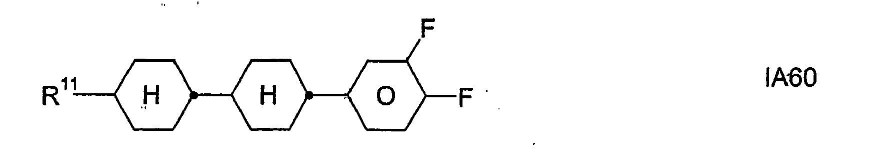 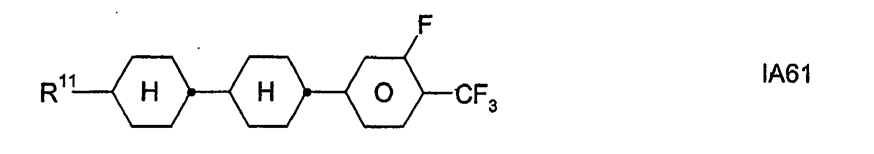 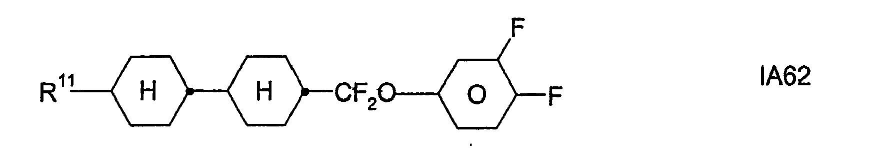 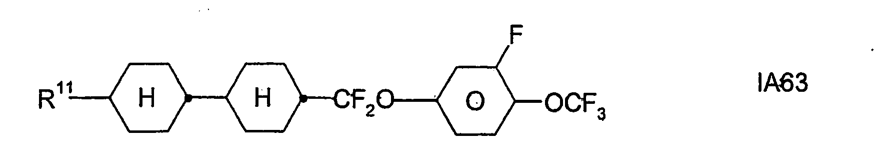 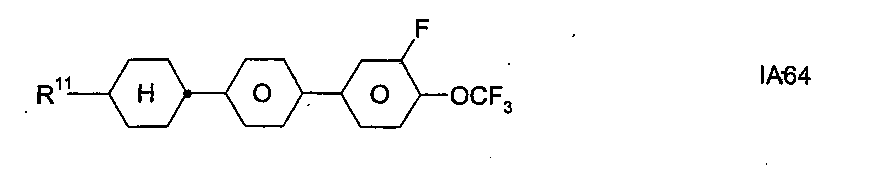 worin R¹¹ die oben für die Formeln I und IA angegebene Bedeutung besitzt. Vorzugsweise bedeutet R¹¹ CH₃, C₂H₅, n-C₃H₇, n-C₄H₉, n-C₅H₁₁, n-C₆H₁₃, n-C₇H₁₅, CH₂=CH, CH₃CH=CH oder 3-Alkenyl (d.h. ein Alkenylrest, der die C=C-Doppelbindung in 3-Position aufweist, wie z.B. in CH₂=CH-CH₂-CH₂-), insbesondere C₂H₅, n-C₃H₇, n-C₄H₉ oder n-C₅H₁₁.

Bevorzugt sind erfindungsgemäße Medien, die wenigstens eine Verbindung der Formel IA1, IA5, IA9, IA17, IA40, IA41, IA42, IA47, IA52 und/oder lA53, besonders bevorzugt jeweils wenigstens eine Verbindung der Formel lA47, enthalten, wobei insbesondere jene Verbindungen bevorzugt enthalten sind, in denen R¹¹ ein geradkettiger Alkylrest mit 1 bis 7 Kohlenstoffatomen ist.

Weitere bevorzugte Verbindungen der Formel I sind Verbindungen der Formeln I1 bis I8: 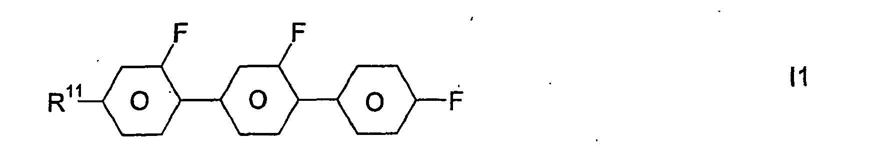 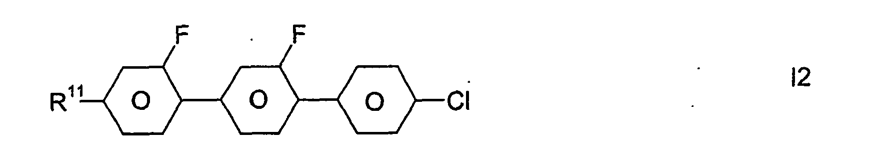 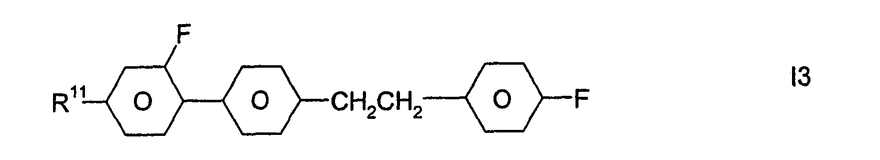 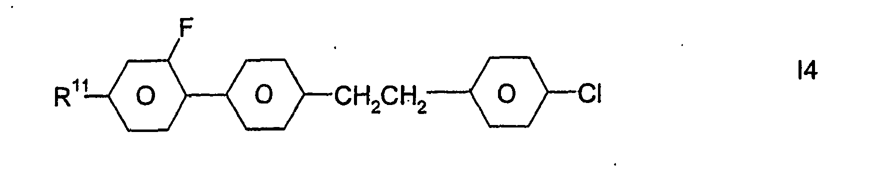 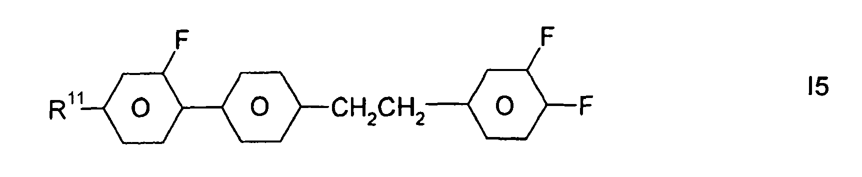 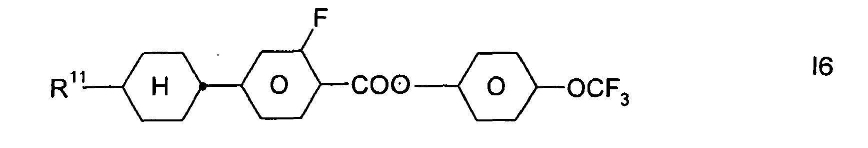 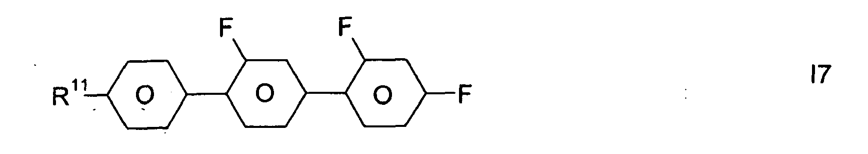 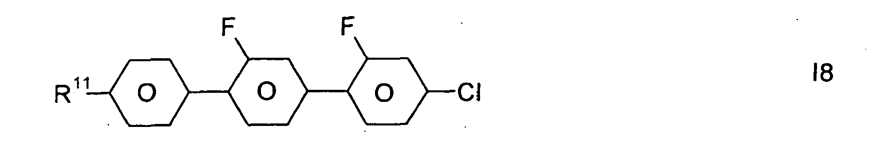 worin R¹¹ die oben für die allgemeinen Formeln I und IA angegebene Bedeutung besitzt. Vorzugsweise bedeutet R¹¹ CH₃, C₂H₅, n-C₃H₇, n-C₄H₉, n-C₅H₁₁, n-C₆H₁₃, n-C₇H₁₅, CH₂=CH, CH₃CH=CH oder 3-Alkenyl, insbesondere C₂H₅, n-C₃H₇, n-C₄H₉, oder n-C₅H₁₁.

Es ist ferner bevorzugt, daß das erfindungsgemäße flüssigkristalline Medium wenigstens zwei Verbindungen der Formeln I und/oder IA enthält.

Formel II umfaßt vorzugsweise folgende Verbindungen: 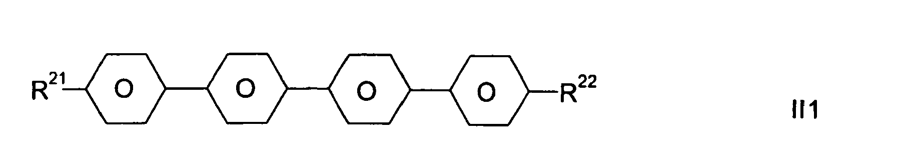 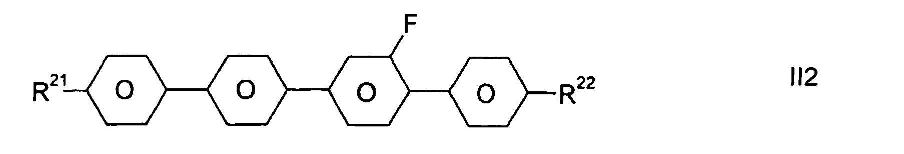 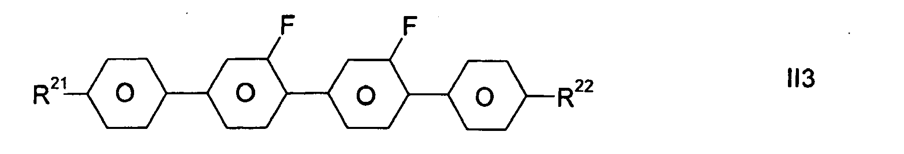 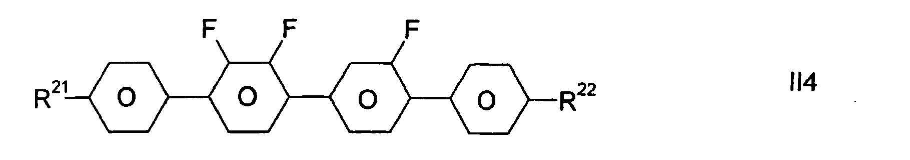 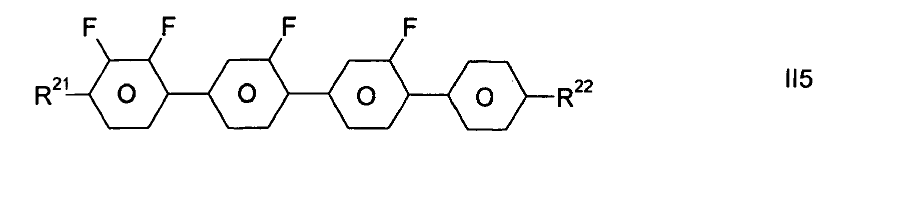 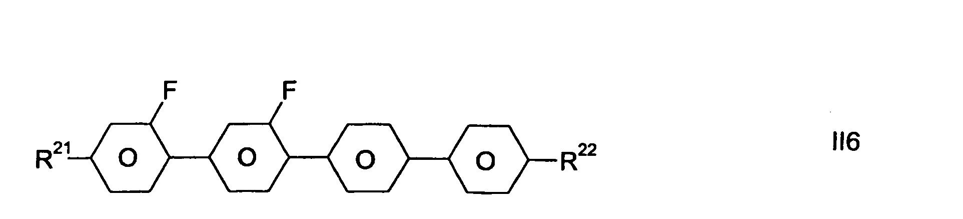 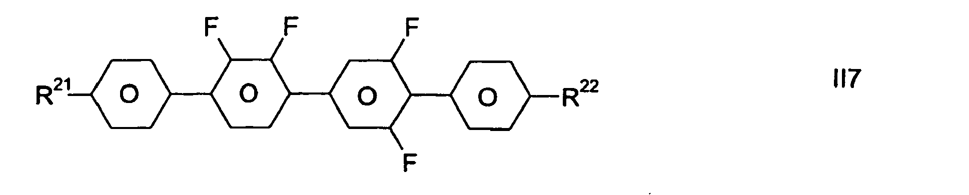 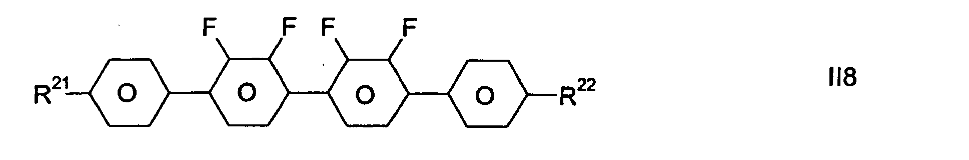 worin R²¹ und R²² die oben angegebenen Bedeutungen haben.

R²¹ und R²² bedeuten unabhängig voneinander vorzugsweise in den Verbindungen der Formeln II1 bis II8 F, Cl, CF₃ oder geradkettiges Alkyl mit 1 bis 7 C-Atomen R²¹ bedeutet insbesondere CH₃, C₂H₅, n-C₃H₇, n-C₄H₉, n-C₅H₁₁, n-C₆H₁₃, n-C₇H₁₅, ganz besonders bevorzugt C₂H₅, n-C₃H₇, n-C₄H₉ und n-C₅H₁₁, während R²² insbesondere F, Cl, CF₃, CH₃, C₂H₅, n-C₃H₇, n-C₄H₉, n-C₅H₁₁, n-C₆H₁₃, n-C₇H₁₅ bedeutet, ganz besonders bevorzugt F, C₂H₅, n-C₃H₇, n-C₄H₉ und n-C₅H₁₁. Von diesen bevorzugten Verbindungen sind die Verbindungen der Formeln II4 und II5 mit R²¹ und R²² unabhängig voneinander gleich C₁₋₇-Alkyl insbesondere bevorzugt.

Ferner ist es bevorzugt, daß das erfindungsgemäße Medium zusätzlich wenigstens eine Verbindung der Formel III umfaßt: 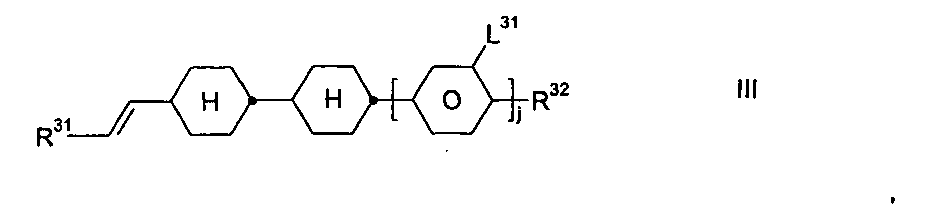 worin
- L³¹: H oder F ist;
- R³¹: H, einen halogenierten oder unsubstituierten Alkylrest mit 1 bis 15 C-Atomen bedeutet, wobei in diesen Resten auch eine oder mehrere CH₂-Gruppen durch -C≡C-, -CH=CH-, -O-, -CO-O- oder -O-CO- so ersetzt sein können, daß O-Atome nicht direkt miteinander verknüpft sind;
- R³²: H, F, Cl, einen halogenierten oder unsubstituierten Alkylrest mit 1 bis 15 C-Atomen bedeutet, wobei in diesen Resten auch eine oder mehrere CH₂-Gruppen durch -C≡C-, -CH=CH-, -O-, -CO-O- oder -O-CO- so ersetzt sein können, daß O-Atome nicht direkt miteinander verknüpft sind; und
- j: 0 oder 1 ist.

Sofern R³¹ und/oder R³² einen Alkyl- oder einen Alkoxyrest bedeuten, kann dieser geradkettig oder verzweigt sein. Vorzugsweise ist er geradkettig, hat 1, 2, 3, 4, 5, 6 oder 7 C-Atome und bedeutet demnach bevorzugt Methyl, Ethyl, Propyl, Butyl, Pentyl, Hexyl, Heptyl, Methoxy, Ethoxy, Propoxy, Butoxy, Pentoxy, Hexoxy oder Heptoxy, ferner Octyl, Nonyl, Decyl, Undecyl, Dodecyl, Tridecyl, Tetradecyl, Pentadecyl, Octoxy, Nonoxy, Decoxy, Undecoxy, Dodecoxy, Tridecoxy oder Tetradedoxy.

Oxaalkyl bedeutet vorzugsweise geradkettiges 2-Oxapropyl (= Methoxymethyl), Ethoxymethyl oder 3-Oxybutyl (= 2-Methoxyethyl), 2-, 3- oder 4-Oxypentyl, 2-, 3-, 4- oder 5-Oxyhexyl, 2-, 3-, 4-, 5- oder 6-Oxyheptyl, 2-, 3-, 4-, 5-, 6-, oder 7-Oxaoctyl, 2-, 3-, 4-, 5-, 6-, 7- oder 8-Oxanonyl, 2-, 3-, 4-, 5-, 6-, 7-, 8- oder 9-Oxadexyl.

Falls R³¹ und/oder R³² einen Alkylrest bedeuten, in dem eine CH₂-Gruppe durch -CH=CH- ersetzt ist, so kann dieser geradkettig oder verzweigt sein. Ein solcher Rest wird auch als Alkenylrest bezeichnet. Vorzugsweise ist er geradkettig und hat 2 bis 10 C-Atome. Er bedeutet demnach besonders bevorzugt Vinyl, Prop-1-, oder Prop-2-enyl, But-1-, 2- oder But-3-enyl, Pent-1-, 2-, 3- oder Pent-4-enyl, Hex-1-, 2-, 3-, 4- oder Hex-5-enyl, Hept-1-, 2-, 3-, 4-, 5- oder Hept-6-enyl, Oct-1-, 2-, 3-, 4-, 5-, 6- oder Oct-7-enyl, Non-1-, 2-, 3-, 4-, 5-, 6-, 7- oder Non-8-enyl, Dec-1-, 2-, 3-, 4-, 5-, 6-, 7-, 8- oder Dec-9-enyl. Sofern die Alkenylgruppe E- oder Z-konfiguriert sein kann, ist die E-Konfiguration (trans-Konfiguration) im allgemeinen bevorzugt.

Falls R³¹ und/oder R³² einen Alkylrest bedeuten, in dem eine CH₂-Gruppe durch -O- und eine durch -CO- ersetzt ist, so sind diese bevorzugt benachbart. Somit beinhalten diese eine Acyloxygruppe -CO-O- oder eine Oxycarbonylgruppe -O-CO-. Vorzugsweise sind diese geradkettig und haben 2 bis 6 C-Atome. Sie bedeuten demnach besonders Acetyloxy, Propionyloxy, Butyryloxy, Pentanoyloxy, Hexanoyloxy, Acetyloxymethyl, Propionyloxymethyl, Butyryloxymethyl, Pentanoyloxymethyl, 2-Acetyloxyethyl, 2-Propionyloxyethyl, 2-Butyryloxyethyl, 2-Acetyloxypropyl, 3-Propionyl-oxypropyl, 4-Acetyl-oxybutyl, Methoxycarbonyl, Ethoxycarbonyl, Propoxy-carbonyl, Butoxycarbonyl, Pentoxycarbonyl, Methoxycarbonylmethyl, Ethoxycarbonylmethly, Propoxycarbonylmethyl, Butoxycarbonylmethyl, 2-(Methoxycarbonyl)ethyl, 2-(Ethoxycarbonyl)ethyl, 2-(Propoxycarbonyl)-ethyl, 3-(Methoxycarbonyl)-propyl, 3-(Ethoxy-carbonyl)-propyl oder 4-(Methoxycarbonyl)-butyl.

Falls R³¹ und/oder R³² einen Alkylrest bedeuten, in dem eine CH₂-Gruppe durch unsubstituiertes oder substituiertes -CH=CH- und eine benachbarte CH₂-Gruppe durch CO oder CO-O oder O-CO ersetzt ist, so kann dieser geradkettig oder verzweigt sein. Vorzugsweise ist er geradkettig und hat 4 bis 12 C-Atome. Er bedeutet demnach besonders Acryloyloxymethyl, 2-Acryloyl-oxyethyl, 3-Acryloyloxypropyl, 4-Acryoyloxybutyl, 5-Acryloyloxypentyl, 6-Acryloyloxyhexyl, 7-Acryloyloxyheptyl, 8-Acryloyloxyoctyl, 9-Acryloyl-oxynonyl, 10-Acryloyloxydecyl, Methacryloyloxymethyl, 2-Methacryloyl-oxyethyl, 3-Methacryloyloxypropyl, 4-Methacryloyloxybutyl, 5-Methacryl-oyloxypentyl, 6-Methacryloyloxyhexyl, 7-Methacryloyloxyheptyl, 8-Methacryloyloxyoctyl, 9-Methacryloyloxynonyl.

Falls R³¹ und/oder R³² einen mindestens einfach durch Halogen substituierten Alkyl-, Alkoxy- oder Alkenylrest bedeuten, so ist dieser Rest vorzugsweise geradkettig und ist Halogen vorzugsweise F oder Cl. Bei Mehrfachsubstitution ist Halogen vorzugsweise F. Die resultierenden Reste schließen auch perfluorierte Reste ein. Bei Einfachsubstitution kann der Fluor- oder Chlorsubstituent in beliebiger Position sein, vorzugsweise jedoch in ω-Position. Besonders bevorzugt sind -CF₃, -CHF₂, -CH₂F, -CH₂CF₃, -CHFCHF₂, -CF₂CF₃, -OCF₃, -OCHF₂, -OCH₂F und -CF=CF₂.

Verbindungen mit verzweigten Flügelgruppen R³¹ und/oder R³² können gelegentlich wegen einer besseren Löslichkeit in den üblichen flüssigkristallinen Basismaterialien von Bedeutung sein, insbesondere aber als chirale Dotierstoffe, wenn sie optisch aktiv sind. Smektische Verbindungen dieser Art eignen sich als Komponenten für ferroelektrische Materialien.

Verzweigte Gruppen dieser Art enthalten in der Regel nicht mehr als eine Kettenverzweigung. Bevorzugt verzweigte Reste R sind Isopropyl, 2-Butyl (= 1-Methylpropyl), Isobutyl (= 2-Methylpropyl), 2-Methylbutyl, Isopentyl (= 3-Methylbutyl), 2-Methylpentyl, 3-Methylpentyl, 2-Ethylhexyl, 2-Propylpentyl, Isopropoxy, 2-Methylpropoxy, 2-Methylbutoxy, 3-Methylbutoxy, 2-Methylpentoxy, 3-Methylpentoxy, 2-Ethylhexoxy, 1-Methylhexoxy, 1-Methylheptoxy.

Falls R³¹ und/oder R³² einen Alkylrest darstellen, in dem zwei oder mehr CH₂-Gruppen durch -O- und/oder -CO-O- ersetzt sind, so kann dieser geradkettig oder verzweigt sind. Vorzugsweise ist er verzweigt und hat 3 bis 12 C-Atome. Er bedeutet demnach besonders Bis-carboxy-methyl, 2,2-Bis-carboxy-ethyl, 3,3-Bis-carboxy-propyl, 4,4-Bis-carboxy-butyl, 5,5-Bis-carboxy-pentyl, 6,6-Bis-carboxy-hexyl, 7,7-Bis-carboxy-heptyl, 8,8-Bis-carboxy-octyl, 9,9-Bis-carboxy-nonyl, 10,10-Bis-carboxy-decyl, Bis-(methoxycarbonyl)-methyl, 2,2-Bis-(methoxycarbonyl)-ethyl, 3,3-Bis-(methoxycarbonyl)-propyl, 4,4-Bis-(methoxycarbonyl)-butyl, 5,5-Bis-(methoxycarbonyl)-pentyl, 6,6-Bis-(methocycarbonyl)-hexyl, 7,7-Bis-(methoxycarbonyl)-heptyl, 8,8-Bis-(methoxycarbonyl)-octyl, Bis-(ethoxycärbonyl)-methyl, 2,2-Bis-(ethoxycarbonyl)-ethyl, 3,3-Bis-(ethoxycarbonyl)-propyl, 4,4-Bis-(ethoxycarbonyl)-butyl, 5,5-Bis-(ethoxycarbonyl)-hexyl.

Bevorzugt ist R³¹ H oder Methyl, Ethyl, n-Propyl oder n-Butyl, insbesondere H. R³² bedeutet vorzugsweise F, Cl oder geradkettiges Alkyl mit 1, 2, 3, 4, 5, 6 oder 7 Kohlenstoffatomen, insbesondere F oder n-Propyl oder n-Pentyl.

Besonders bevorzugte Verbindungen der Formel III sind 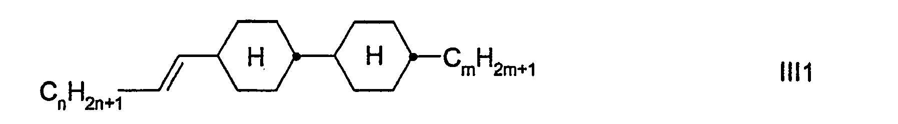 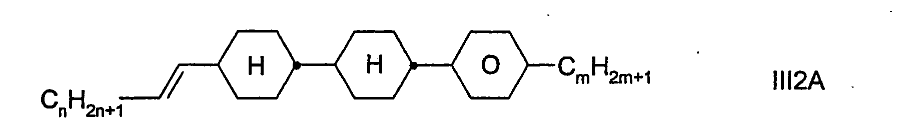 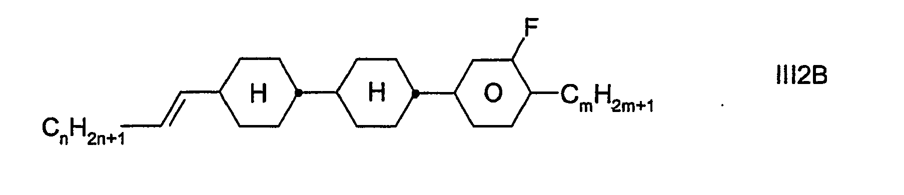 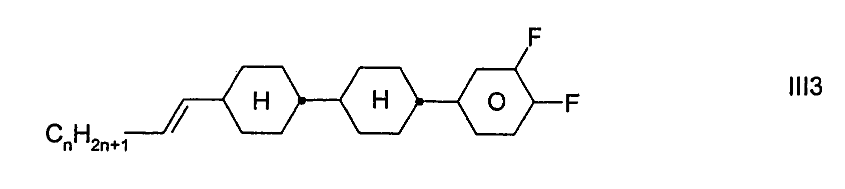 wobei n und m unabhängig voneinander 0,1, 2, 3, 4, 5, 6 oder 7 sind. Ganz besonders bevorzugt sind die Verbindungen der Formel III1a und III1b mit m=3,4 oder 5, Verbindungen der Formel III2Aa mit m=2, 3, 4 oder 5 sowie die Verbindung der Formel III3a:

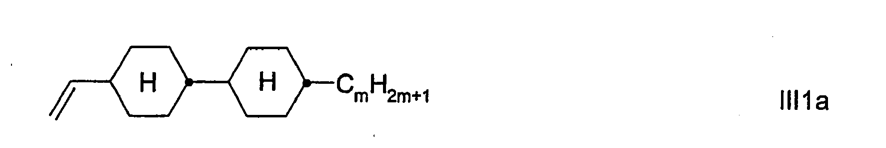

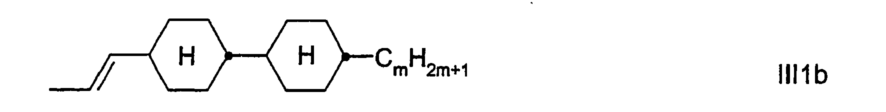

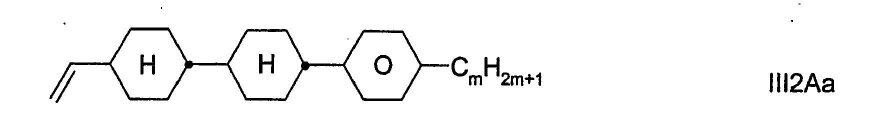

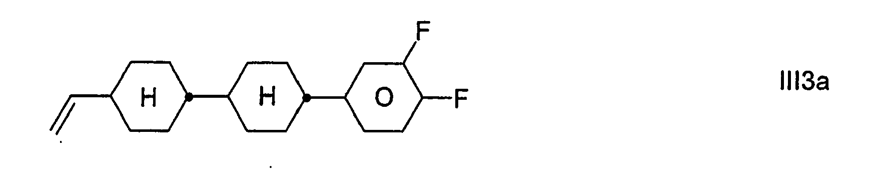

Ferner ist es bevorzugt, wenn die erfindungsgemäßen flüssigkristallinen Medien eine oder mehrere Verbindungen der Formeln IV und/oder V umfassen: 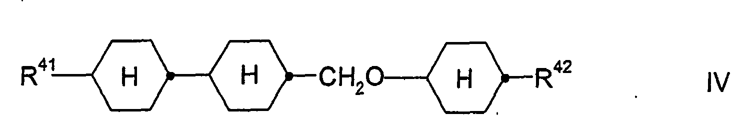 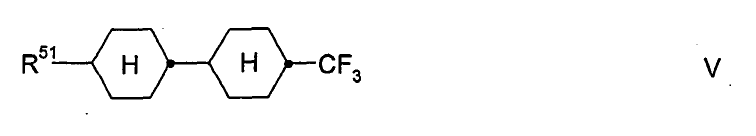 worin
- R⁴¹, R⁴² und R⁵¹: unabhängig voneinander Alkyl mit 1 bis 12 Kohlenstoffatomen bedeuten.

Bevorzugt sind R⁴¹, R⁴² und R⁵¹ unabhängig voneinander geradkettige Alkylketten mit jeweils 1 bis 7 Kohlenstoffatomen, d.h. Methyl, Ethyl, n-Propyl, n-Butyl, n-Pentyl, n-Hexyl oder n-Heptyl, wobei besonders bevorzugt n-Propyl, n-Butyl und n-Pentyl sind.

Darüber hinaus ist es bevorzugt, daß die erfindungsgemäßen flüssigkristallinen Medien wenigstens eine Verbindung der Formel VI und/oder VII und/oder VIII umfassen: 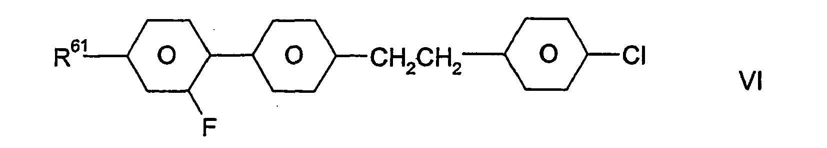 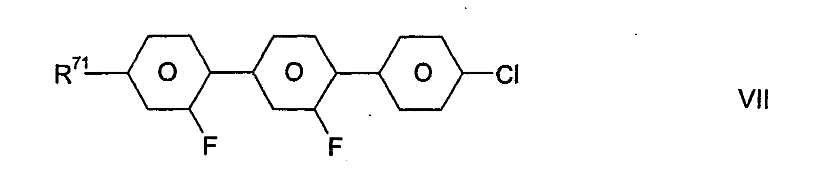 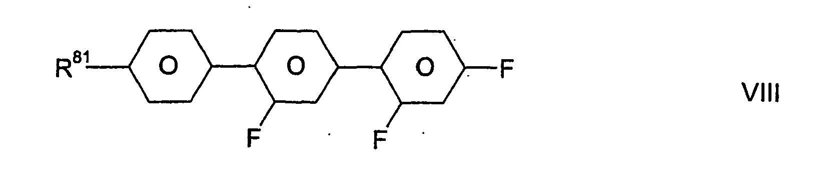 worin
- R⁶¹, R⁷¹ und R⁸¹: unabhängig voneinander Alkyl mit 1 bis 12 Kohlenstoffatomen bedeuten.

Bevorzugt bedeuten R⁶¹, R⁷¹ und R⁸¹ unabhängig voneinander unverzweigtes Alkyl mit jeweils 1 bis 7 Kohlenstoffatomen, d.h. Methyl, Ethyl, n-Propyl, n-Butyl, n-Pentyl, n-Hexyl oder n-Heptyl, wobei besonders bevorzugt Ethyl, n-Propyl, n-Butyl und n-Pentyl sind.

Die Verbindungen der Formeln VI, VII und VIII bilden auch je eine bevorzugte Gruppe von Verbindungen der Formel I (mit u.a. Z¹¹= Einfachbindung für die Formeln VII und VIII bzw. Z¹¹= -CH₂CH₂- für Formel VI). In bestimmten Ausführungsformen der Erfindung sind die Verbindungen der Formel I aus der Gruppe ausgewählt, die durch die Verbindungen der Formeln VI, VII und VIII gebildet wird. In anderen, besonders bevorzugten Ausführungsformen sind die Verbindungen der Formel VI, VII und/oder VIII neben wenigstens einer Verbindung der Formel I, die nicht auch durch eine der Formeln VI, VII oder VIII dargestellt wird, in dem erfindungsgemäßen flüssigkristallinen Medium enthalten; dies trifft insbesondere dann zu, wenn jene Verbindung(en) der Formel I eine bzw. mehrere Verbindungen der Formel IA ist/sind.

Der gemeinsame Anteil der Verbindungen der Formeln I und II im Gesamtflüssigkristallgemisch beträgt bevorzugt 5 bis 85 Gew.-%, insbesondere 10 bis 75 Gew.-%, besonders bevorzugt 15 bis 65 Gew.-%.

Der Anteil der Verbindungen der Formel II im Gesamtflüssigkristallgemisch beträgt bevorzugt 0,1 bis 10 Gew.-%, insbesondere 0,25 bis 5 Gew.-% und besonders bevorzugt 0,5 bis 2 Gew.-%.

In bevorzugten Ausführungsformen enthalten die erfindungsgemäßen flüssigkristallinen Medien neben den Verbindungen der Formel I, insbesondere der Formel IA, und der Formel II sowie gegebenenfalls weiteren Bestandteilen, z.B. Verbindungen der Formeln III, IV, V, VI, VII und/oder VIII, ferner Verbindungen der Formeln IX und/oder X: 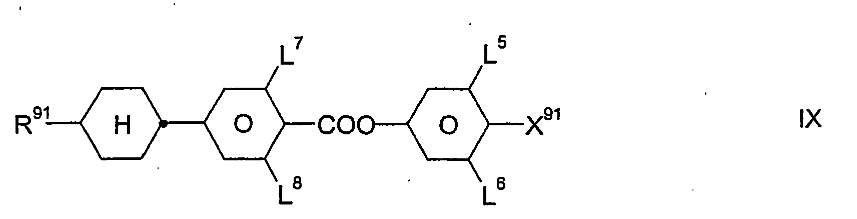 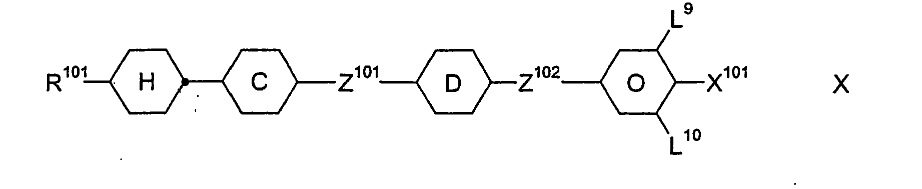 worin
- R⁹¹ und R¹⁰¹: jeweils unabhängig voneinander H, einen halogenierten oder unsubstituierten Alkylrest mit 1 bis 15 C-Atomen, wobei in diesen Resten auch eine oder mehrere CH₂-Gruppen jeweils unabhängig voneinander durch -C≡C-, -CH=CH-, -O-, -CO-O- oder -O-CO- so ersetzt sein können, daß O-Atome nicht direkt miteinander verknüpft sind, bedeuten;
- X⁹¹ und X¹⁰¹: jeweils unabhängig voneinander F, Cl, CN, SF₅, SCN, NCS, halogenierter Alkylrest, halogenierter Alkenylrest, halogenierter Alkoxyrest oder halogenierter Alkenyloxyrest mit jeweils bis zu 6 C-Atomen bedeuten;
- Z¹⁰¹ und Z¹⁰²: jeweils unabhängig voneinander -CF₂O-, -OCF₂- oder eine Einfachbindung bedeuten, wobei Z¹⁰¹ ≠ Z¹⁰² ist;
- L⁵, L⁶, L⁷, L⁸, L⁹ und L¹⁰: jeweils unabhängig voneinander H oder F bedeuten; und 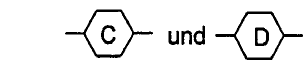 jeweils unabhängig voneinander 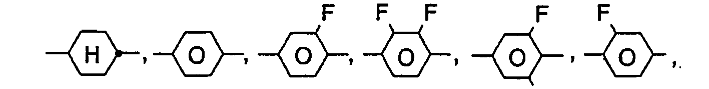 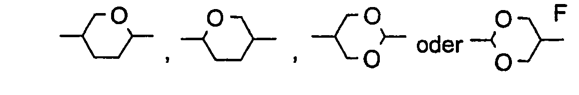 bedeuten.

Zugleich bilden die Verbindungen der Formel IX eine bevorzugte Gruppe von Verbindungen der Formel I (mit u.a. Z¹¹ = -COO-). In bestimmten bevorzugten Ausführungsformen der Erfindung sind die Verbindungen der Formel I aus der Gruppe ausgewählt, die durch die Verbindungen der Formel IX gebildet wird. In anderen, besonders bevorzugten Ausführungsformen sind eine oder mehrere Verbindungen der Formel IX neben wenigstens einer Verbindung der Formel I, die nicht auch durch die Formel IX dargestellt wird, in dem erfindungsgemäßen flüssigkristallinen Medium enthalten; dies gilt insbesondere dann, wenn jene Verbindung(en) der Formel I eine beziehungsweise mehrere Verbindungen der Formel IA ist/sind.

Bevorzugte Verbindungen der Formel IX sind folgende Verbindungen:

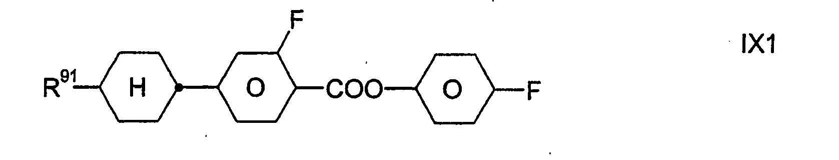

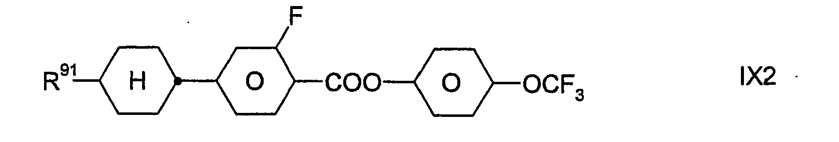

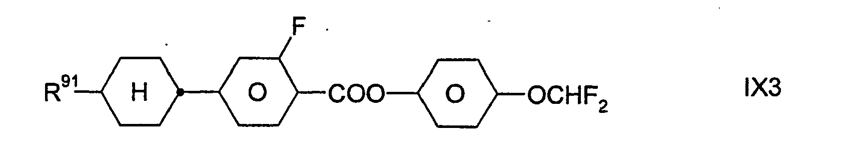

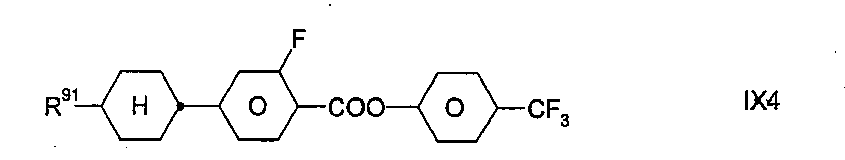

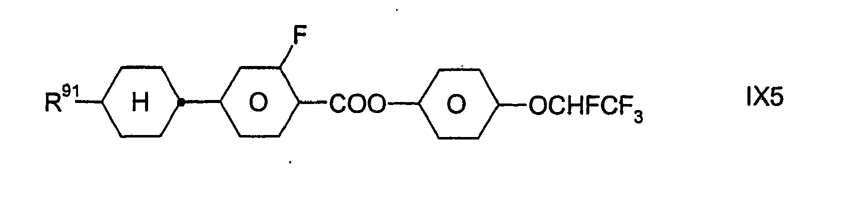

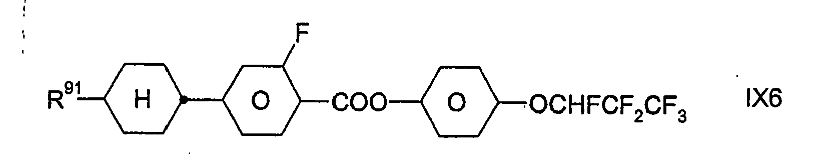

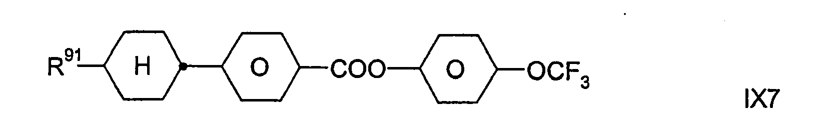

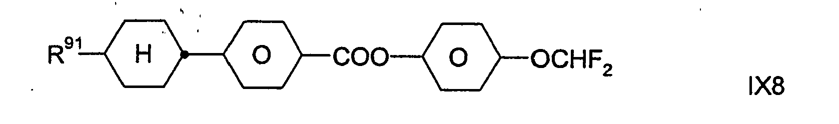

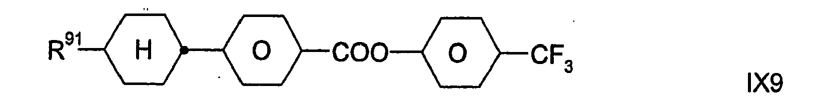

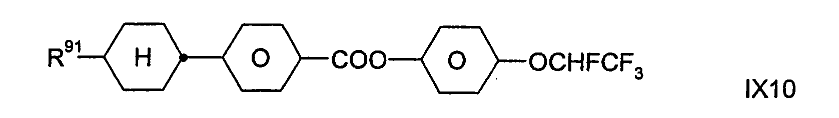

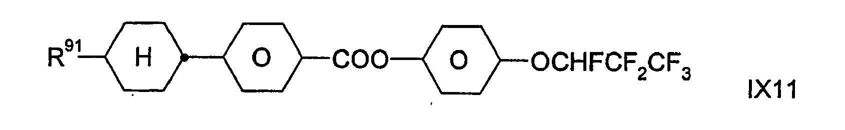

Dabei besitzt R⁹¹ die oben für Formel IX angegebenen Bedeutungen. Vorzugsweise bedeutet R⁹¹ H, CH₃, C₂H₅, n-C₃H₇, n-C₄H₉, n-C₅H₁₁, n-C₆H₁₃, CH₂=CH, CH₃CH=CH oder 3-Alkenyl.

Vorzugsweise weisen die Verbindungen der Formel X die Struktur der Formel XA auf:

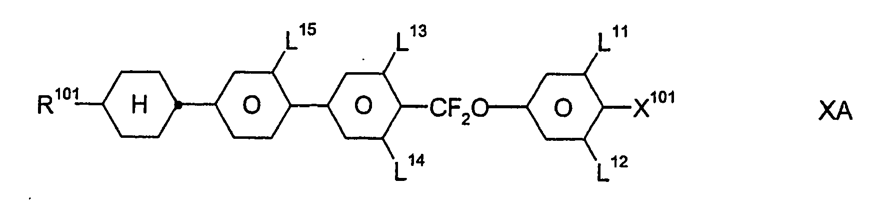

Darin haben R¹⁰¹ und X¹⁰¹ die oben für Formel X angegebenen Bedeutungen und stehen L¹¹, L¹², L¹³, L¹⁴ und L¹⁵ unabhängig voneinander für H oder F. Unter diesen Verbindungen der Formel XA sind solche der nachstehenden Formeln XA1 bis XA24 besonders bevorzugt:

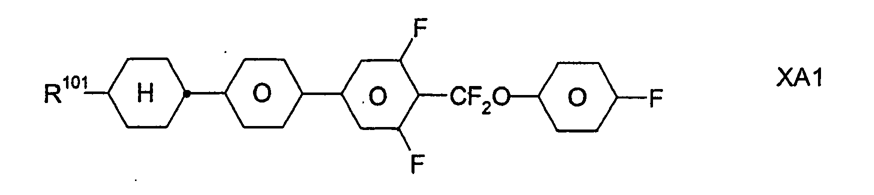

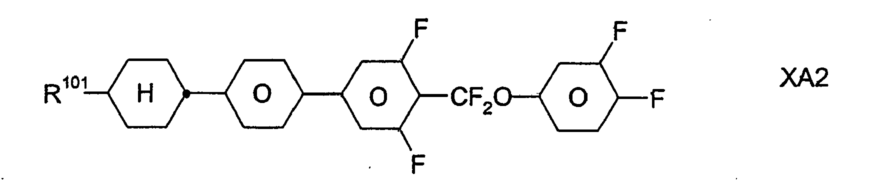

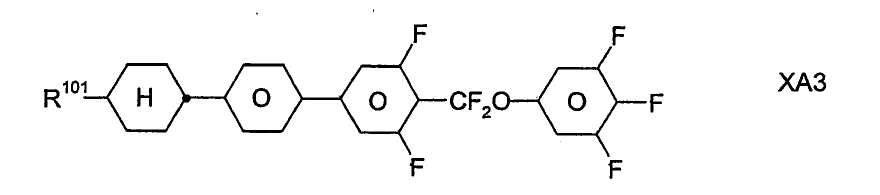

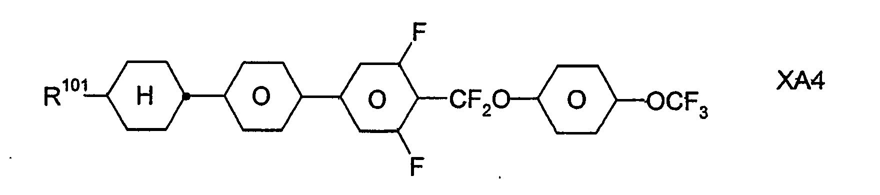

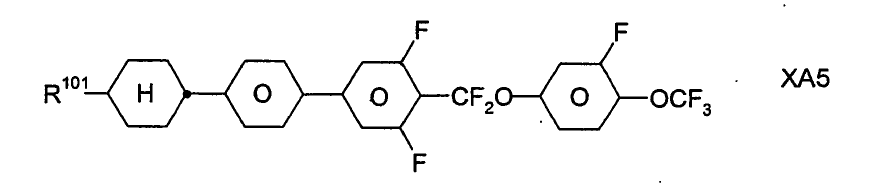

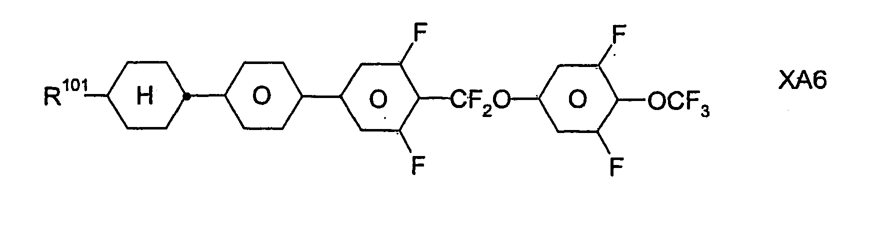

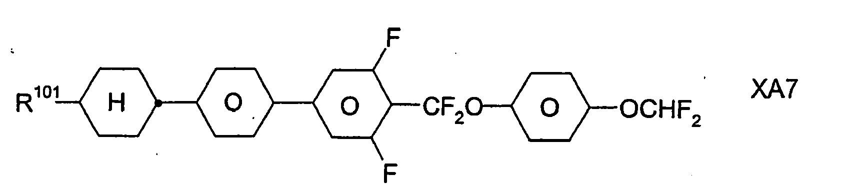

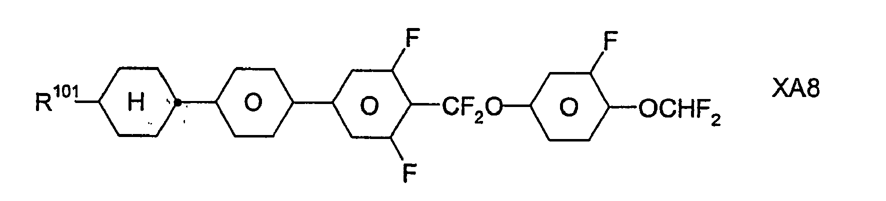

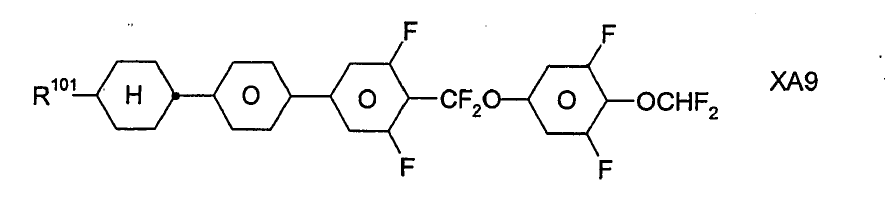

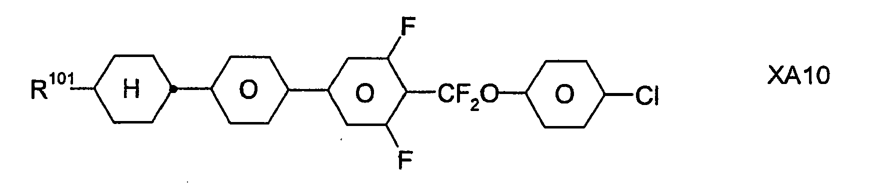

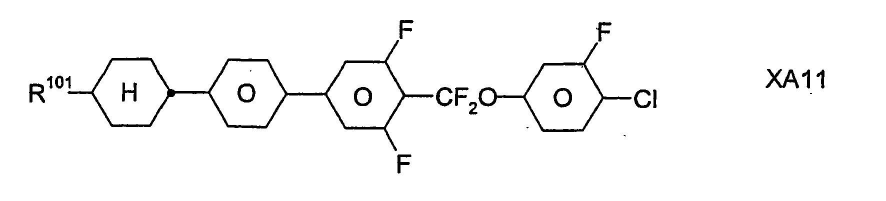

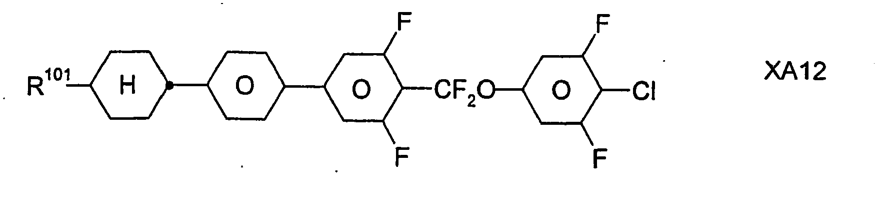

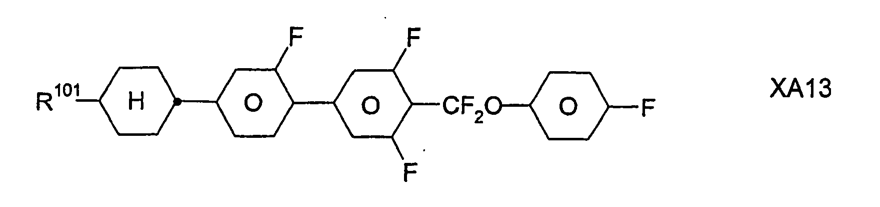

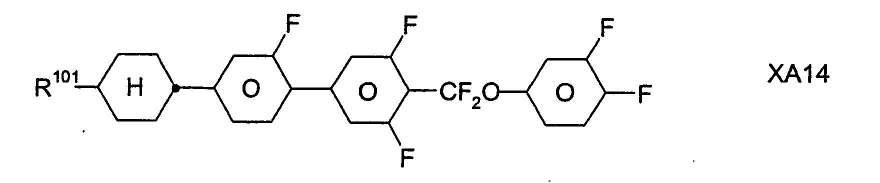

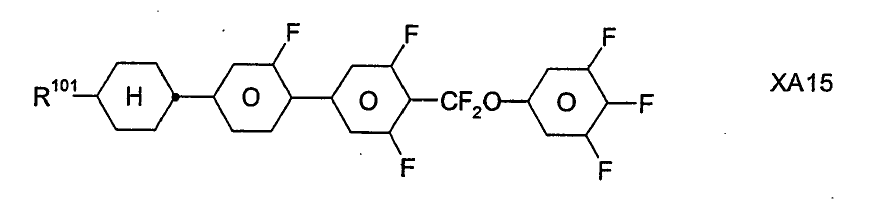

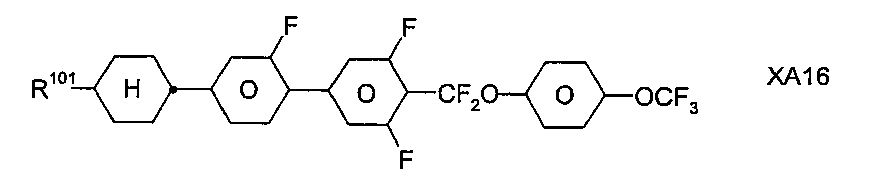

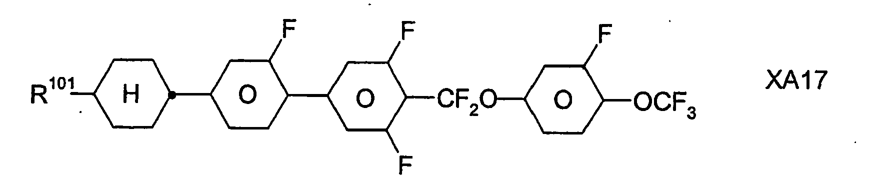

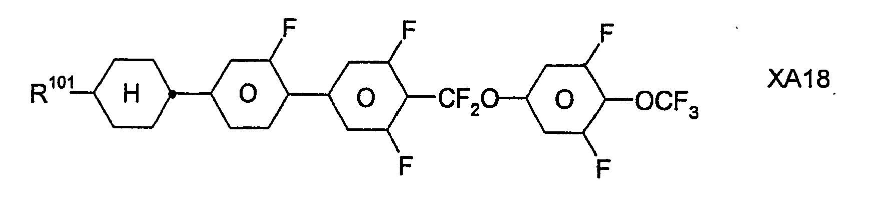

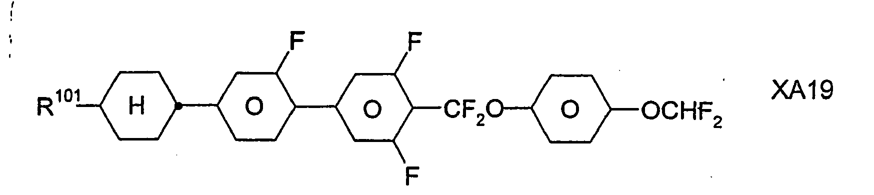

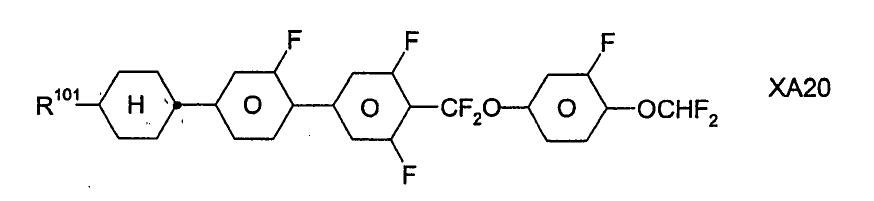

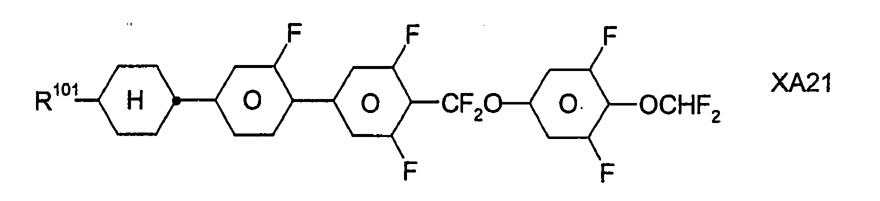

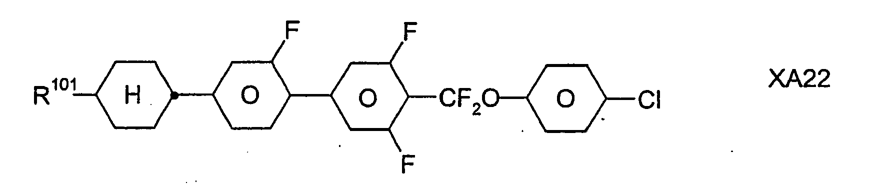

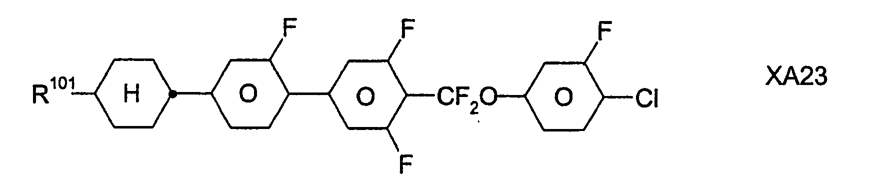

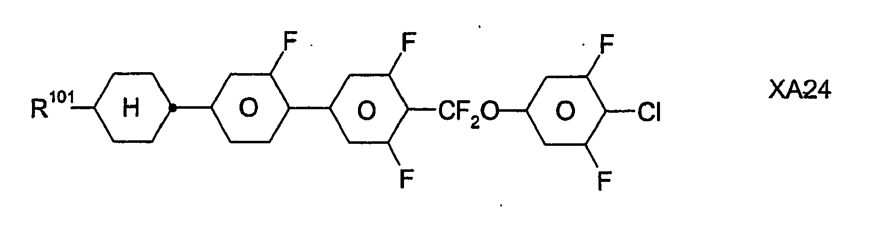

Dabei ist R¹⁰¹ wie oben für die Formeln X und XA definiert und bedeutet vorzugsweise geradkettiges Alkyl mit 1 bis 7 C-Atomen, insbesondere CH₃, C₂H₅, n-C₃H₇, N-C₄H₉, n-C₅H₁₁, n-C₆H₁₃, n-C₇H₁₅, ferner 1E- oder 3-Alkenyl, insbesondere CH₂=CH, CH₃CH=CH, CH₂=CHCH₂CH₂, CH₃CH=CH-CH₂CH₂.

Ferner ist es bevorzugt, daß das erfindungsgemäße Medium zusätzlich eine oder mehrere Verbindungen enthält, die ausgewählt sind aus der Gruppe bestehend aus Verbindungen der allgemeinen Formeln XI bis XVII: 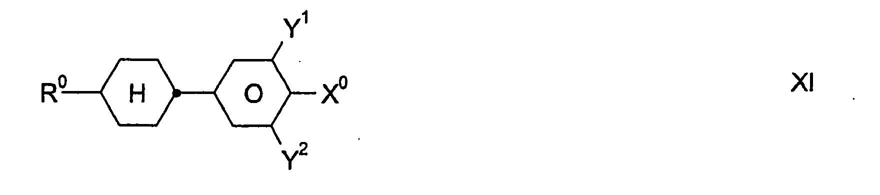 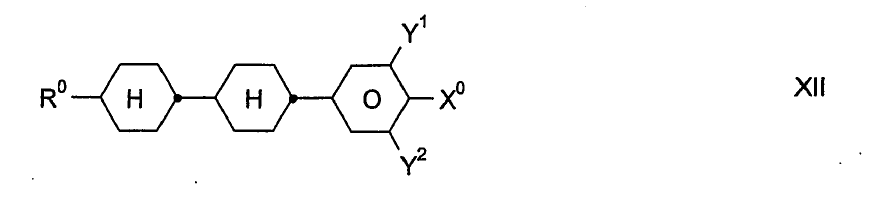 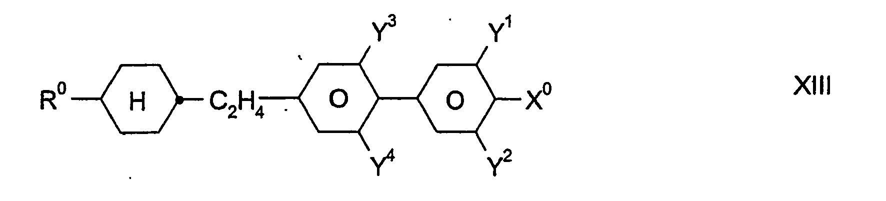 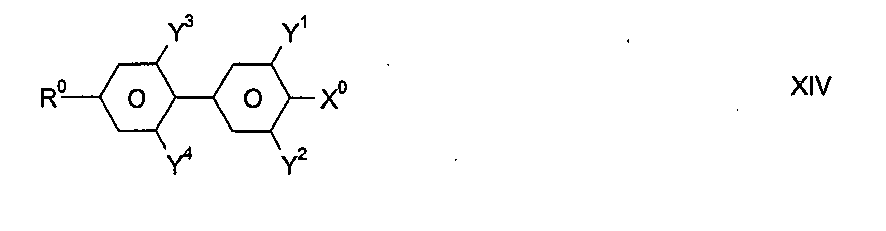 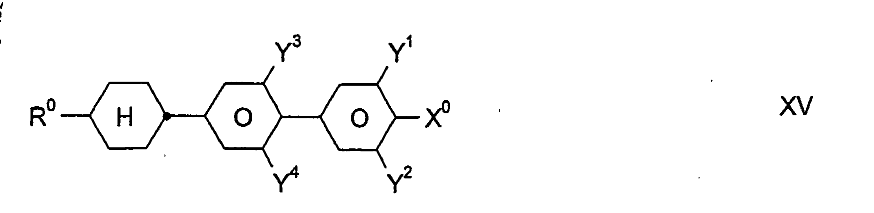 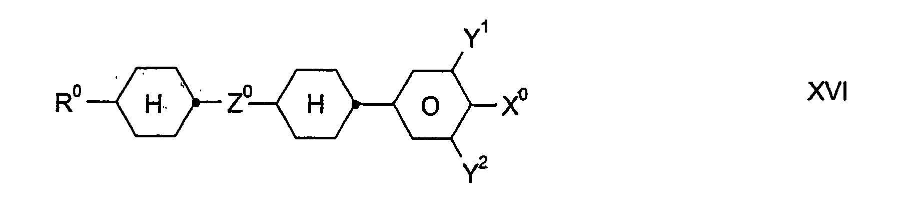 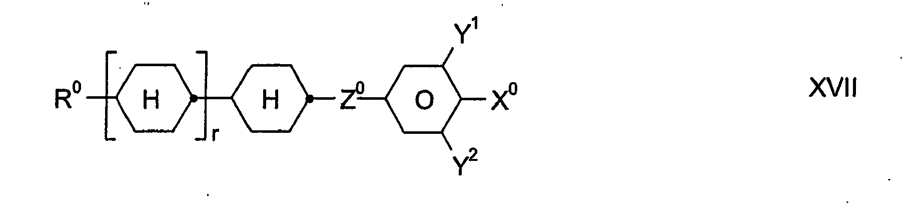 worin die einzelnen Reste die folgenden Bedeutungen haben:
- R⁰: H, n-Alkyl, Oxaalkyl, Fluoralkyl oder Alkenyl mit jeweils bis zu 9 C-Atomen;
- X⁰: F, Cl, halogeniertes Alkyl, Alkenyl, Alkenyloxy oder Alkoxy mit bis zu 6 C-Atomen;
- Z⁰: -C₂F₄-, -CF=CF-, -C₂H₄-, -(CH₂)₄-, -CF₂O- -OCF₂-, -OCH₂- oder -CH₂O-;
- Y¹, Y², Y³ und Y⁴: jeweils unabhängig voneinander H oder F; und
- r: 0 oder 1.

(Einige Verbindungen der Formeln XI, XII, XIV, XV und XVII können - bei entsprechender Auswahl von X⁰, Z⁰, Y¹, Y², Y³, Y⁴ und r - jeweils eine Gruppe von Verbindungen der Formel I (und/oder der Formel IA) bilden. In bestimmten bevorzugten Ausführungsformen der Erfindung sind die Verbindungen der formel I (oder, bezüglich bestimmter Verbindungen der Formeln XII, XV und XVII, auch der formel IA) aus den Gruppen ausgewählt, die durch die Verbindungen der Formeln XI, XII, XIV, XV und XVII gebildet werden; dies gilt insbesondere für Verbindungen der Formeln XII, XV und XVII mit Y¹ = F, Y² = H oder F und gegebenenfalls Z⁰ = -CF₂O-. In anderen, besonders bevorzugten Ausführungsformen sind eine oder mehrere Verbindungen der Formeln XI, XII, XIV, XV und/oder XVII neben wenigstens einer Verbindung der Formel I oder insbesondere der Formel IA, die nicht durch die Formeln XI, XII, XIV, XV und/oder XVII dargestellt wird, in den erfindungsgemäßen flüssigkristallinen Medien enthalten.)

Bevorzugte Verbindungen der Formel XII sind: 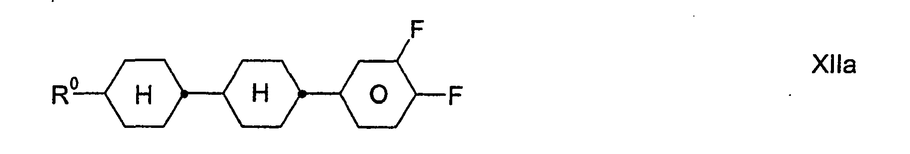 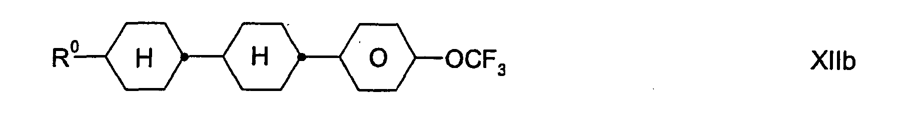 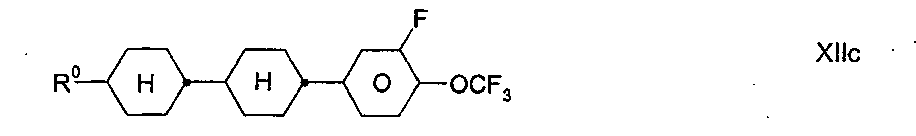 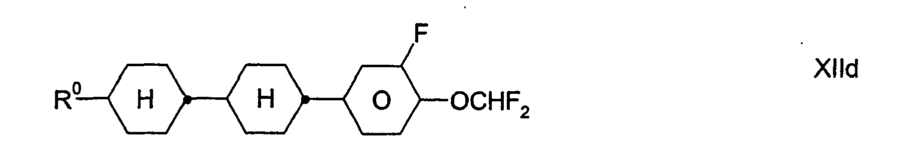 wobei R⁰ die oben angegebene Bedeutung hat.

Bevorzugte Verbindungen der Formel XV sind: 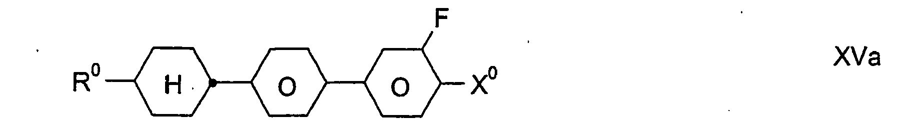 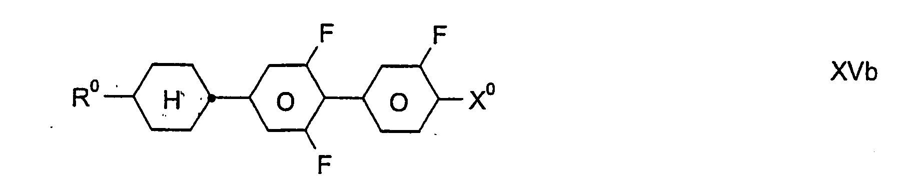 wobei R⁰ die oben angegebene Bedeutung hat.

Das Medium enthält vorzugsweise zusätzlich eine oder mehrere Verbindungen ausgewählt aus der Gruppe bestehend aus den allgemeinen Formeln XVIII bis XXIV: 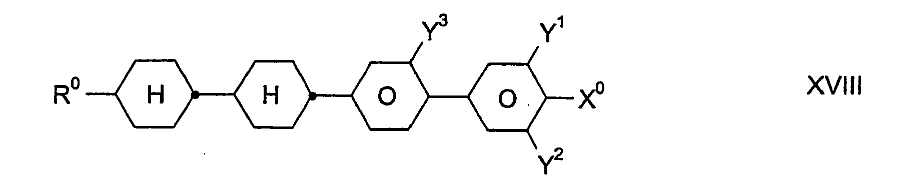 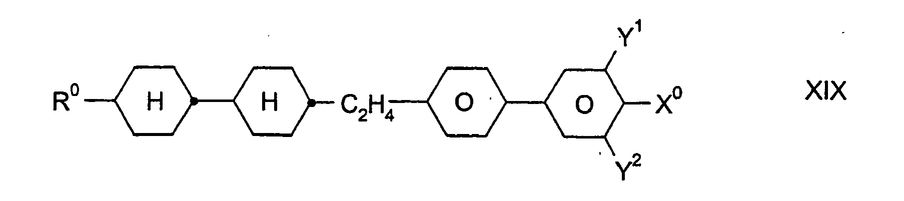 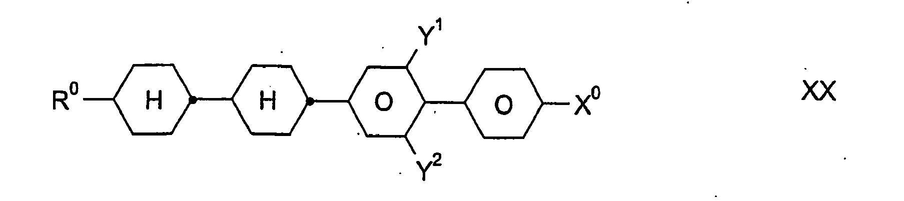 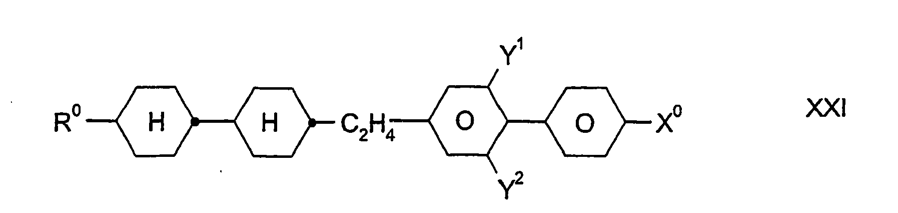 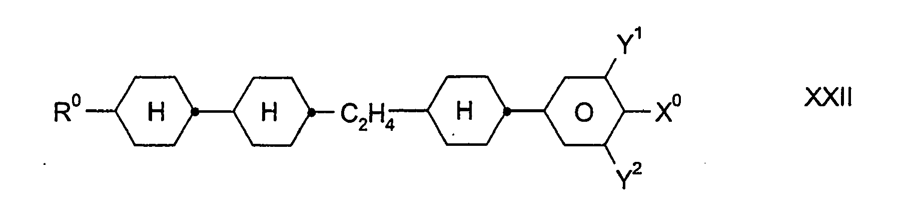 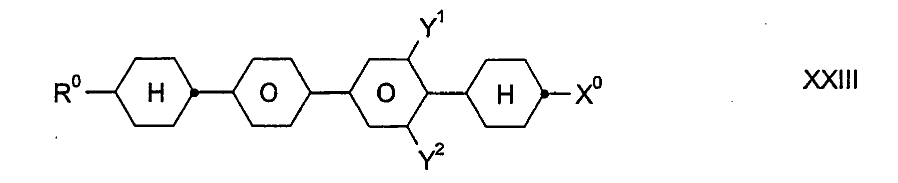 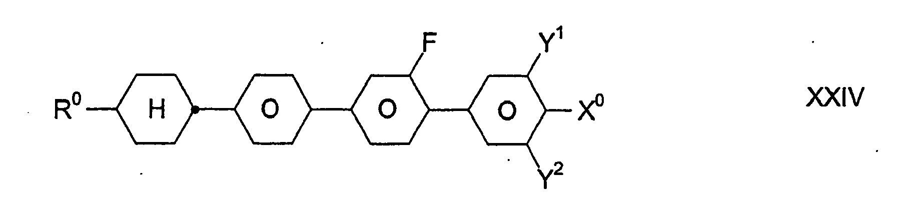 worin R⁰, X⁰, Y¹ und Y² jeweils unabhängig voneinander wie oben für eine der Formeln XI bis XVII definiert sind. Y³ bedeutet H oder F. X⁰ ist vorzugsweise F, Cl, CF₃, OCF₃ oder OCHF₂. R⁰ bedeutet vorzugsweise Alkyl, Oxaalkyl, Fluoralkyl oder Alkenyl mit jeweils bis zu 6 C-Atomen.

Das Medium enthält bevorzugt zusätzlich eine oder mehrere Ester-Verbindungen der Formeln Ea bis Ec (sofern sie nicht bereits als Verbindung(en) der Formel I bzw. IA enthalten ist/sind) 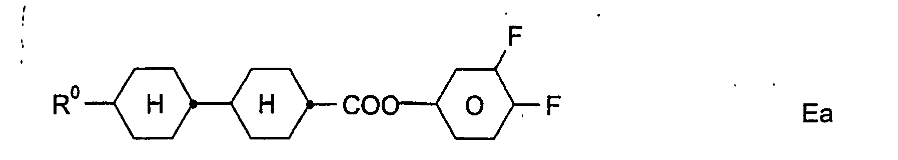 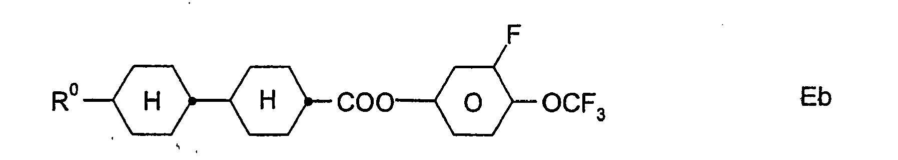 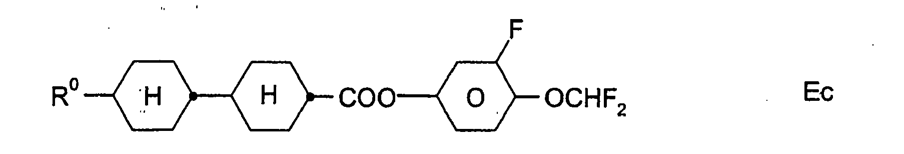 worin R⁰ wie oben für eine der Formeln XI bis XVII definiert ist.

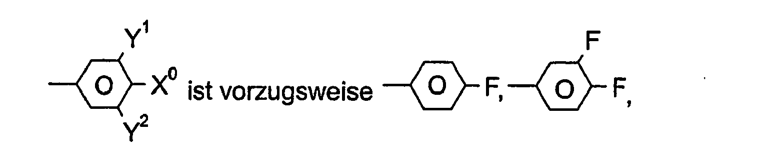

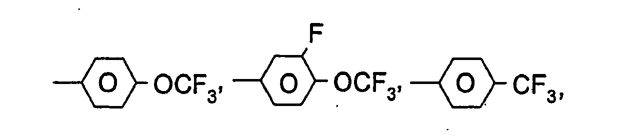

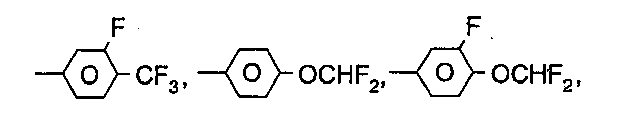

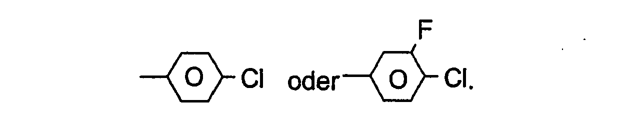

Das Medium enthält zusätzlich ein, zwei, drei oder mehr, vorzugsweise zwei oder drei, Verbindungen der Formel O1 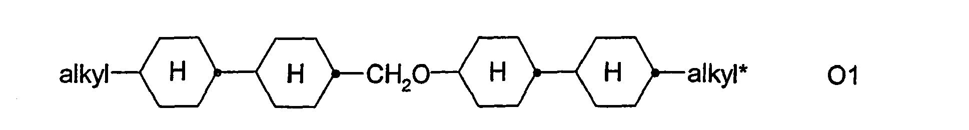 worin "alkyl" und "alkyl*" jeweils unabhängig voneinander ein geradkettiger oder verzweigter Alkylrest mit 1-9 C-Atomen sind.

Der Anteil der Verbindungen der Formel O1 in den erfindungsgemäßen Mischungen beträgt vorzugsweise 5-10 Gew.-%.

Das Medium enthält vorzugsweise ein, zwei oder drei, ferner vier, Homologe der Verbindungen ausgewählt aus der Gruppe H1 bis H12 (mit n = 1, 2, 3, 4, 5, 6, 7, 8, 9, 10, 11, 12):

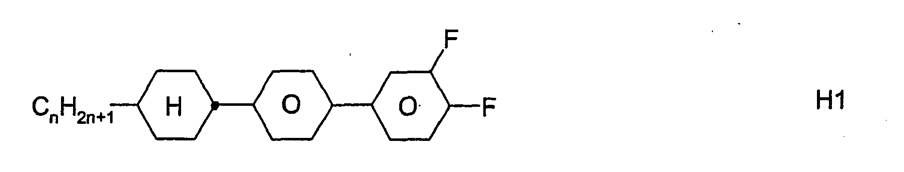

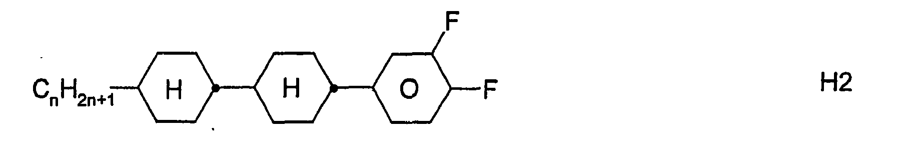

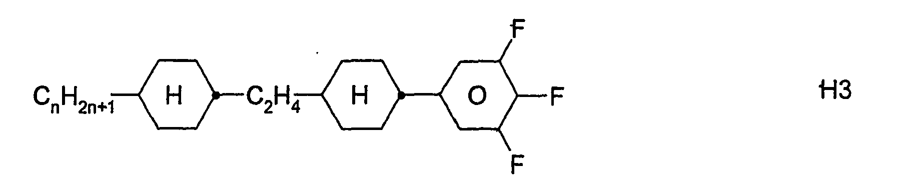

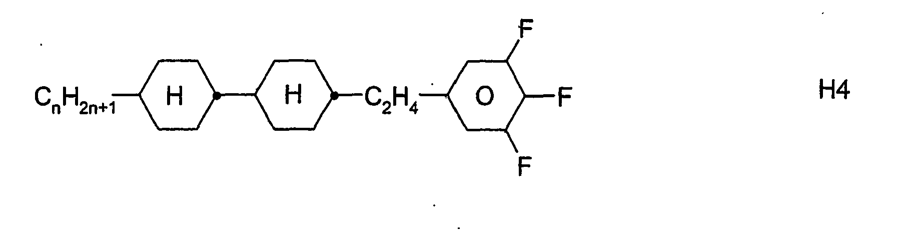

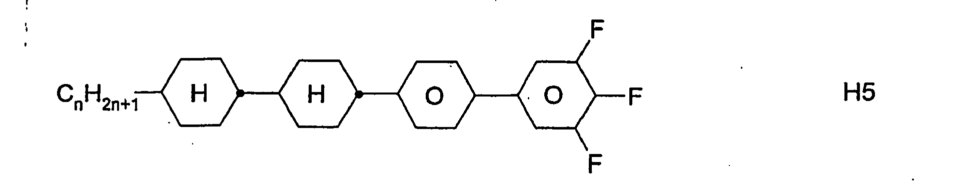

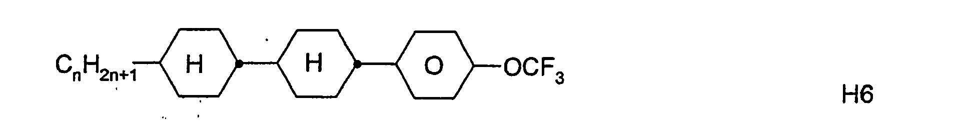

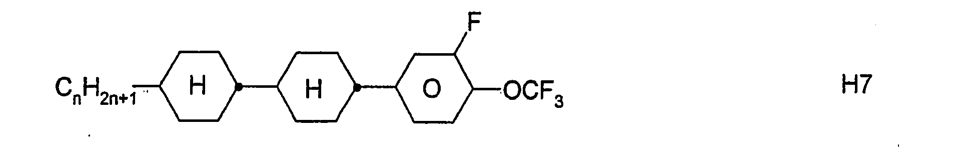

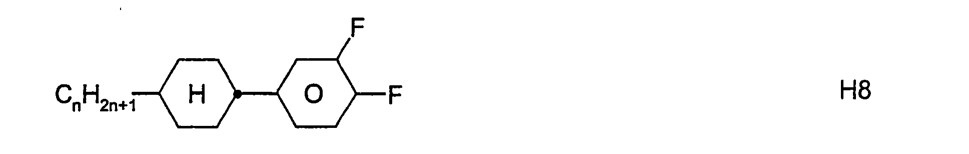

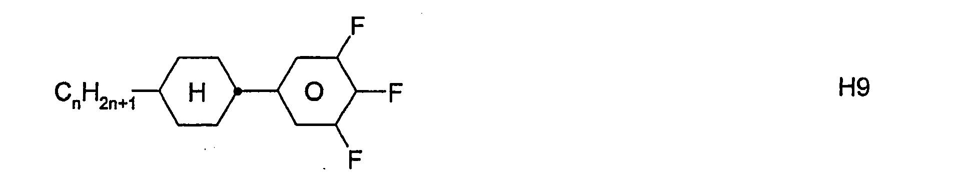

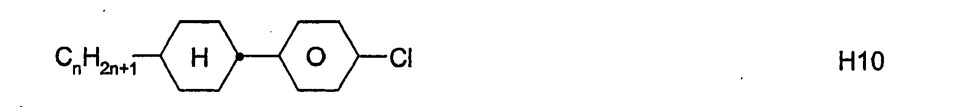

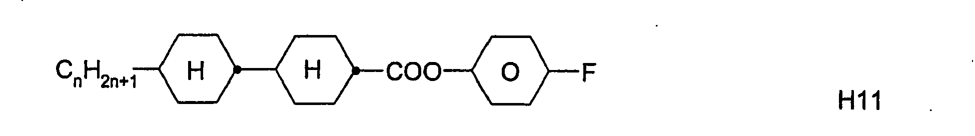

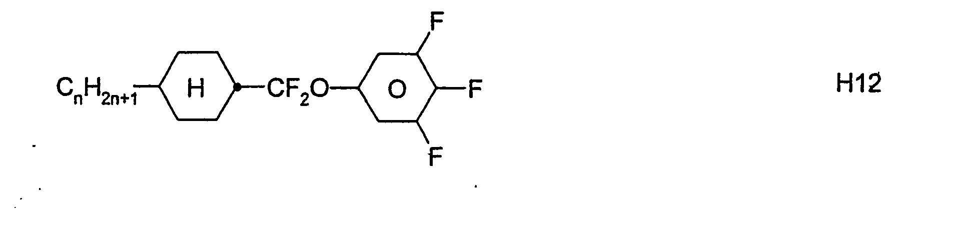

Das Medium enthält weitere Verbindungen, vorzugsweise ausgewählt aus der folgenden Gruppe bestehend aus Verbindungen der Formeln RI bis RIX: 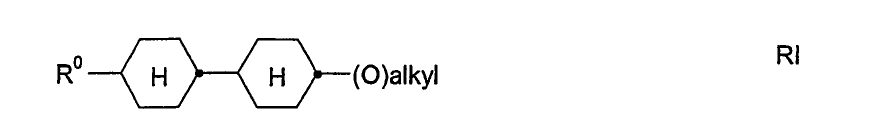 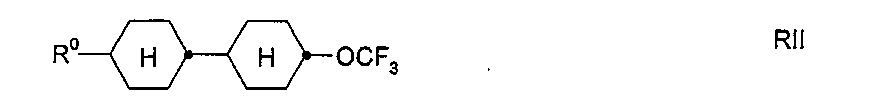 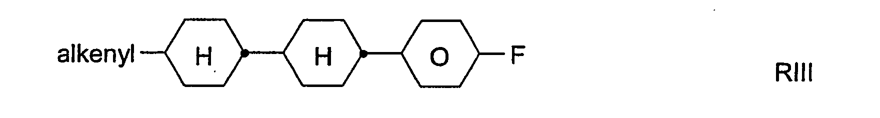 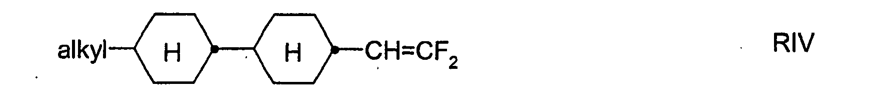 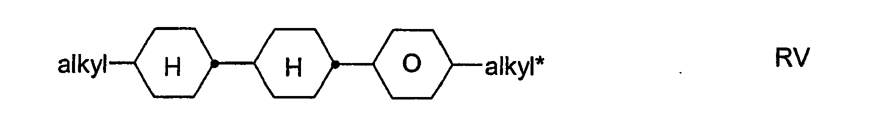 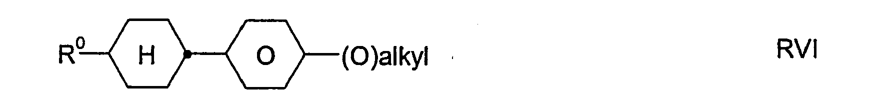 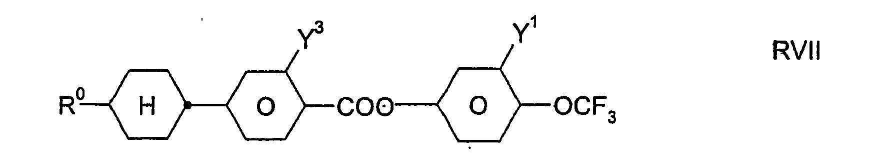 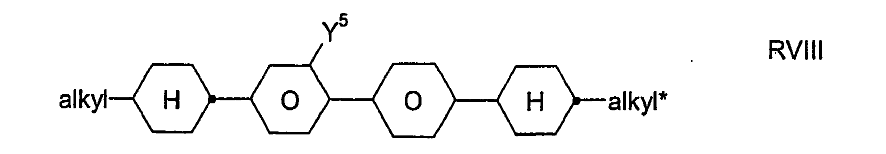 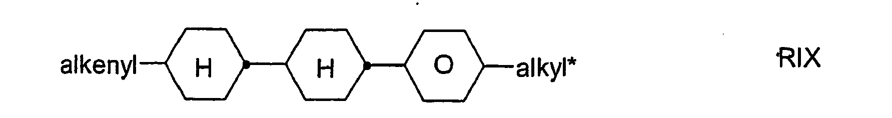 worin
- R⁰: n-Alkyl, Oxaalkyl, Fluoralkyl, Alkenyloxy oder Alkenyl mit jeweils bis zu 9 C-Atomen bedeuten;
- Y¹, Y³ und Y⁵: unabhängig voneinander H oder F bedeuten;
- "alkyl" und "alkyl*": jeweils unabhängig voneinander ein geradkettiger oder verzweigter Alkylrest mit 1-9 C-Atomen bedeuten;
- "alkenyl": einen geradkettigen oder verzweigten Alkenylrest mit bis zu 9 C-Atomen bedeutet.

Das Medium enthält vorzugsweise eine oder mehrere Verbindungen der folgenden Formeln: 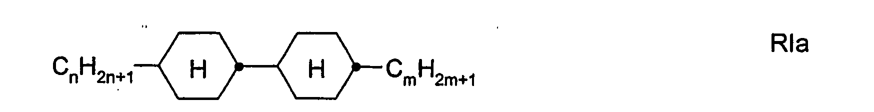 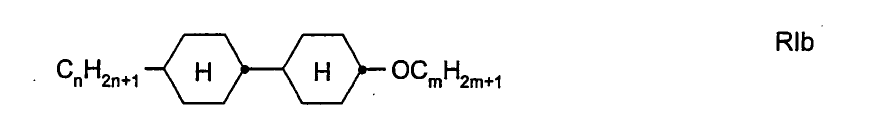 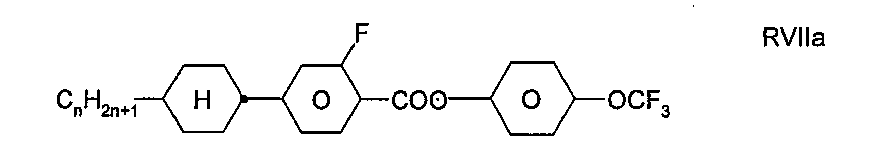 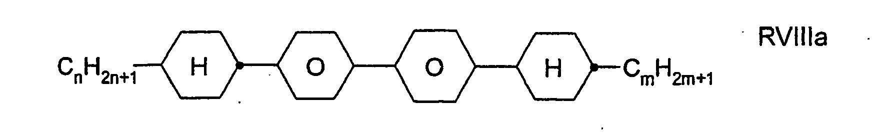 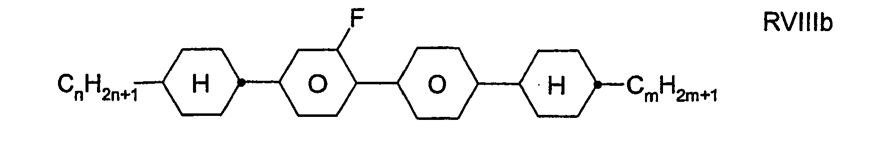 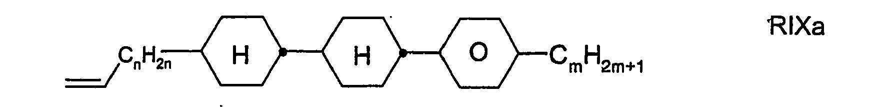 worin n und m unabhängig voneinander 1, 2, 3, 4, 5, 6, 7, 8, 9, 10, 11 oder 12 bedeuten. Vorzugsweise sind n und m unabhängig voneinander 1, 2, 3, 4, 5 oder 6, im Falle von Formel RIXa ist n insbesondere 2.

In einer weiteren Ausführungsform ist es bevorzugt, wenn das erfindungsgemäße Medium eine oder mehrere Verbindungen mit anellierten Ringen der Formeln AN1 bis AN11 enthält: 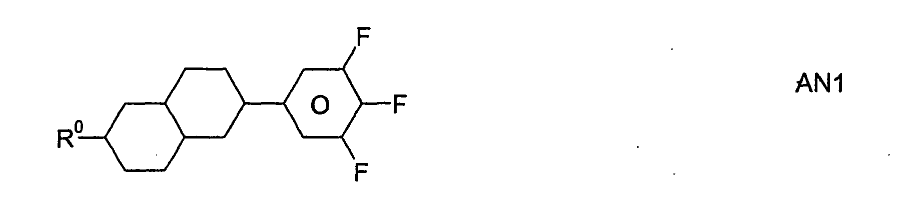 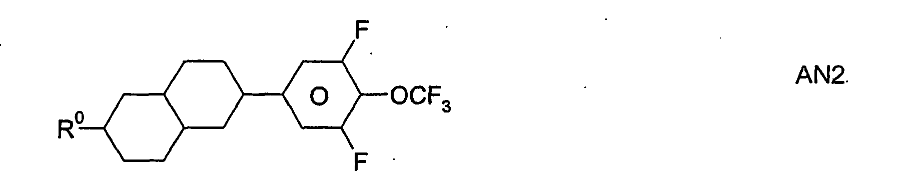 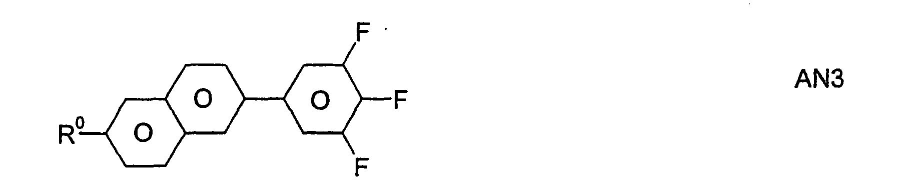 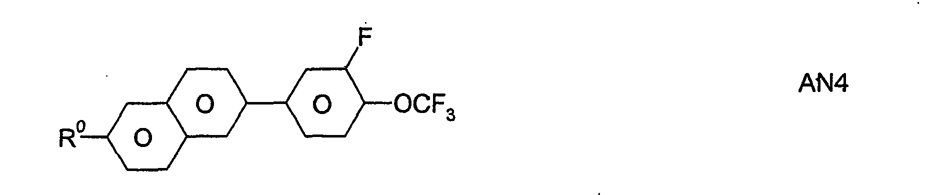 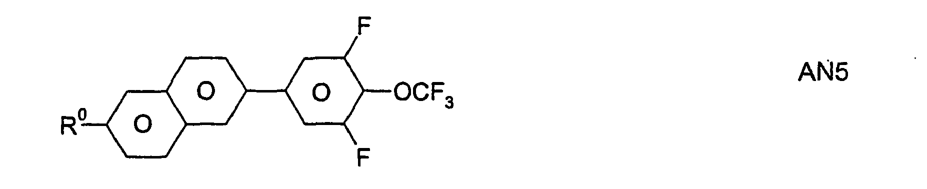 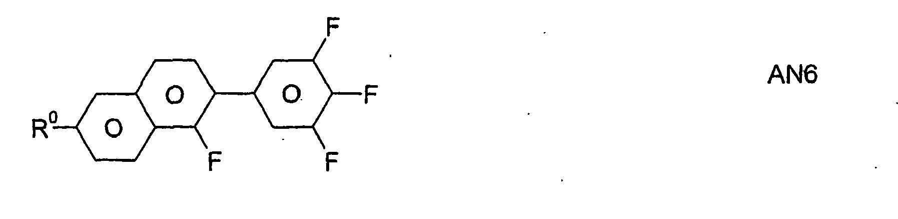 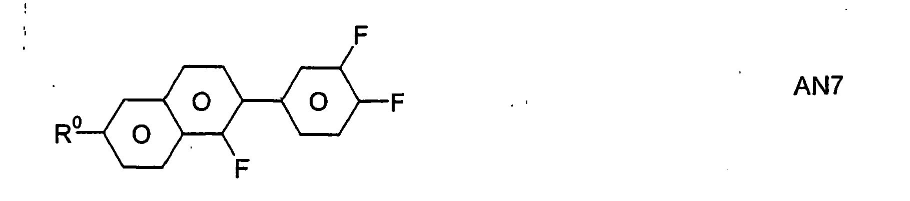 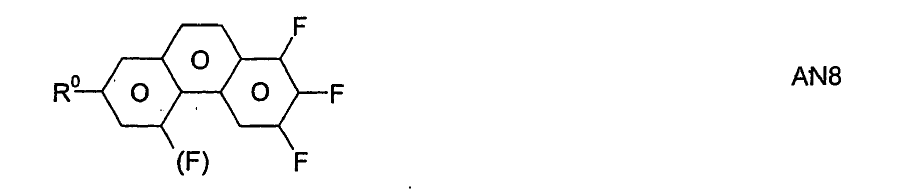 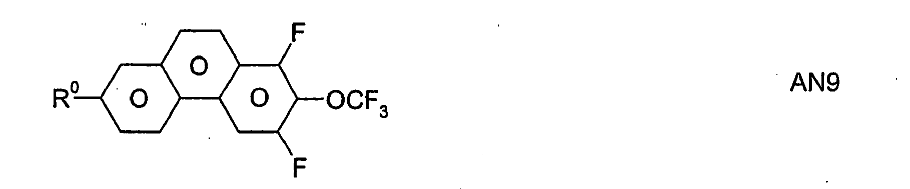 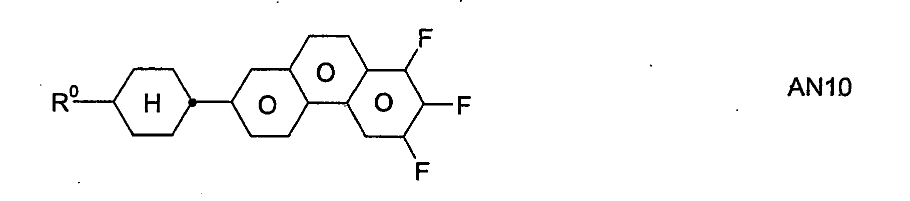 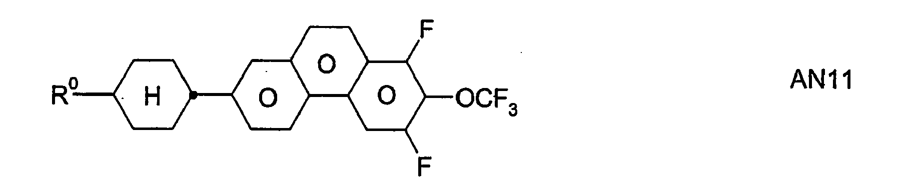 worin R⁰ die oben angegebenen Bedeutungen hat.

Es wurde gefunden, daß die erfindungsgemäßen Medien mit Verbindungen der Formeln I und II im Gemisch mit üblichen Flüssigkristallmaterialien, insbesondere jedoch mit einer oder mehreren Verbindungen der Formeln III, IV, V, VI, VII und/oder VIII sowie der Formeln IX, X, XI, XII, XIII, XIV, XV, XVI und/oder XVII, zu sehr guter UV-Stabilität, zu einer beträchtlichen Erniedrigung der Schwellenspannung und zu hohen Werten für die VHR (100 °C) führen, wobei gleichzeitig breite nematische Phasen mit tiefen Übergangstemperaturen smektisch-nematisch beobachtet werden, wodurch die Lagerstabilität verbessert wird. Die Verbindungen der Formeln I bis XVII sind stabil und untereinander und mit anderen Flüssigkristallmaterialien gut mischbar.

Die Begriffe "Alkyl", "alkyl", "Alkyl*" und "alkyl*" umfassen - sofern sie nicht an anderer Stelle dieser Beschreibung oder in den Ansprüchen abweichend definiert sind - geradkettige und verzweigte Alkylgruppen mit 1-12, vorzugsweise 1-7 Kohlenstoffatomen, insbesondere die geradkettigen Gruppen Methyl, Ethyl, Propyl, Butyl, Pentyl, Hexyl und Heptyl. Gruppen mit 2-5 Kohlenstoffatomen sind im allgemeinen bevorzugt.
Die Begriffe "Alkenyl" und "alkenyl" umfassen - sofern sie nicht an anderer Stelle dieser Beschreibung oder in den Ansprüchen abweichend definiert sind - geradkettige und verzweigte Alkenylgruppen mit 2-12, vorzugsweise 2-7 Kohlenstoffatomen, insbesondere die geradkettigen Gruppen. Bevorzugte Alkenylgruppen sind C₂-C₇-1 E-Alkenyl, C₄-C₇-3E-Alkenyl, C₅-C₇-4-Alkenyl, C₆-C₇-5-Alkenyl und C₇₋₆-Alkenyl, insbesondere C₂-C₇-1 E-Alkenyl, C₄-C₇-3E-Alkenyl und C₅-C₇-4-Alkenyl. Beispiele besonders bevorzugter Alkenylgruppen sind Vinyl, 1E-Propenyl, 1E-Butenyl, 1E-Pentenyl, 1 E-Hexenyl, 1 E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind im allgemeinen bevorzugt.

Der Ausdruck "Fluoralkyl" umfaßt vorzugsweise geradkettige Gruppen mit endständigem Fluor, d.h. Fluormethyl, 2-Fluorethyl, 3-Fluorpropyl, 4-Fluorbutyl, 5-Fluorpentyl, 6-Fluorhexyl und 7-Fluorheptyl. Andere Positionen des Fluors sind jedoch nicht ausgeschlossen.

Der Ausdruck "Oxaalkyl" umfaßt vorzugsweise geradkettige Reste der Formel CₙH₂ₙ₊₁-O-(CH₂)ₘ, worin n und m jeweils unabhängig voneinander 1 bis 6 bedeuten. Vorzugsweise ist n = 1 und m 1 bis 6.

Durch geeignete Wahl der Bedeutungen von R⁰ und X⁰ können die Ansprechzeiten, die Schwellenspannung, die Steilheit der Transmissionskennlinien etc. in gewünschter Weise modifiziert werden. Beispielsweise führen 1 E-Alkenylreste, 3E-Alkenylreste, 2E-Alkenyloxyreste und dergleichen in der Regel zu kürzeren Ansprechzeiten, verbesserten nematischen Tendenzen und einem höheren Verhältnis der elastischen Konstanten k₃₃ (bend) und k₁₁ (splay) im Vergleich zu Alkyl- bzw. Alkoxyresten. 4-Alkenylreste, 3-Alkenylreste und dergleichen ergeben im allgemeinen tiefere Schwellenspannungen und kleinere Werte von k₃₃/k₁₁ im Vergleich zu Alkyl- und Alkoxyresten.

Eine -CH₂CH₂-Gruppe führt im allgemeinen zu höheren Werten von k₃₃/k₁₁ im Vergleich zu einer einfachen Kovalenzbindung. Höhere Werte von k₃₃/k₁₁ ermöglichen z.B. flachere Transmissionskennlinien in TN-Zellen mit 90° Verdrillung (zur Erzielung von Grautönen) und steilere Transmissionskennlinien in STN-, SBE- und OMI-Zellen (höhere Multiplexierbarkeit) und umgekehrt.

Ein bevorzugter Aspekt der Erfindung betrifft solche erfindungsgemäßen flüssigkristallinen Medien, die in einer Flüssigkristallmischung enthalten sind, welche sich durch einen hohen Wert der optischen Anisotropie Δn, vorzugsweise von > 0,16, insbesondere von > 0,20, auszeichnen. Derartige sogenannte "High Δn"-Flüssigkristallmischungen finden insbesondere Anwendung in OCB- (Optical Compensated Birefringence), PDLC- (Polymer Dispersed Liquid Crystal), TN- und STN-Zellen, insbesondere zur Erzielung geringer Schichtdicken in TN- und STN-Zellen zur Verkürzung von Schaltzeiten. In diesen "High Δn"-Flüssigkristallmischungen umfaßt das erfindungsgemäße flüssigkristalline Medium neben wenigstens einer Verbindung der Formel II solche Verbindungen der Formel I, die zur Steigerung der optischen Anisotropie Δn beitragen. Vorzugsweise handelt es sich bei diesen Verbindungen der Formel I um eine oder mehrere der folgenden Verbindungen:

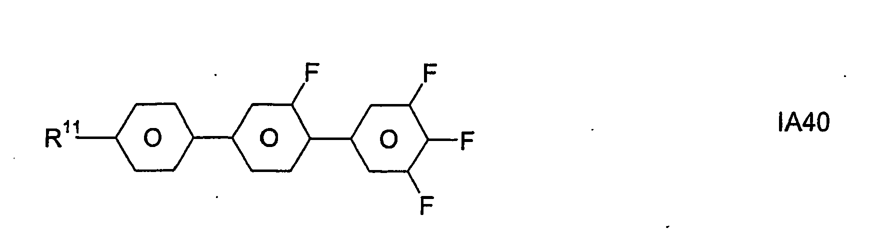

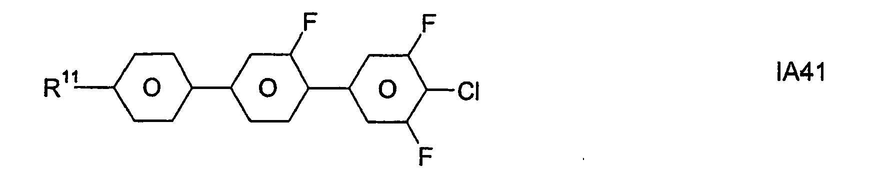

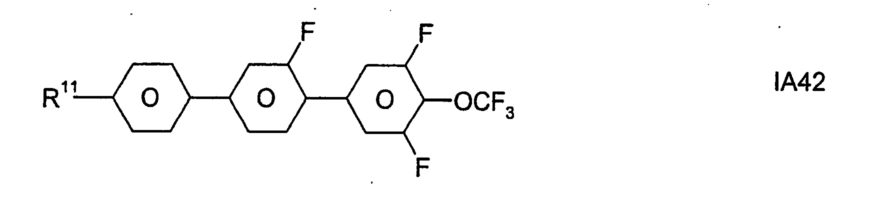

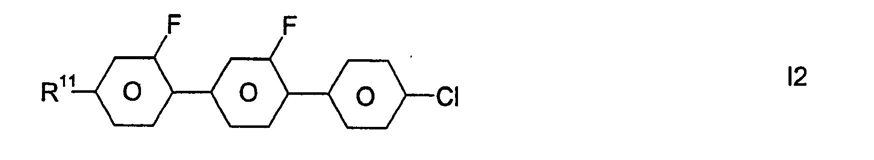

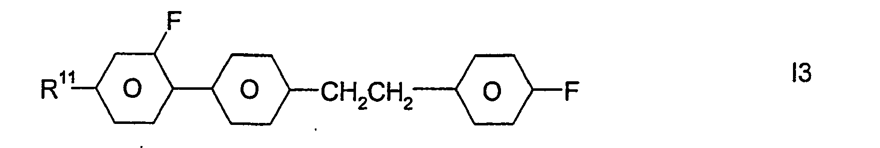

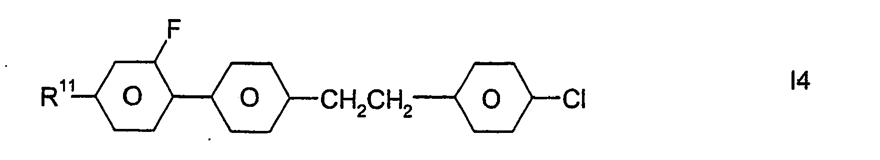

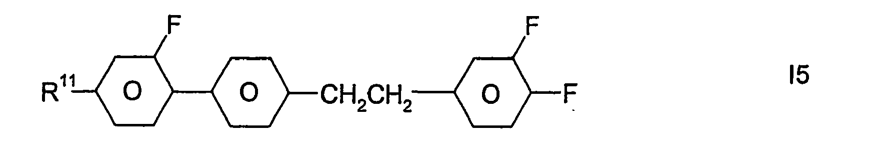

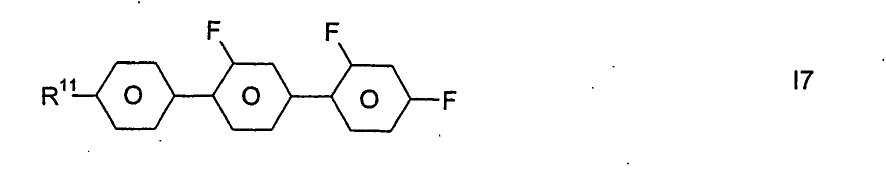

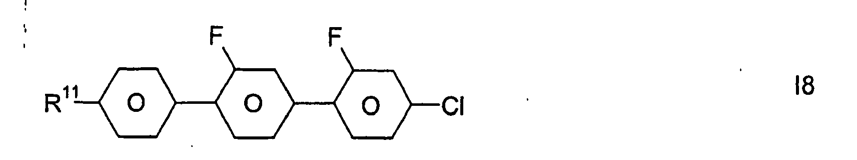

Dabei ist R¹¹ wie oben für die Formeln I und IA definiert. Diese erfindungsgemäßen Medien können ferner weitere Verbindungen, insbesondere der Formeln III, IV, V, VI, VII, VIII, IX, X, XI, XII, XIII, XIV, XV, XVI und/oder XVII, enthalten, sofern die resultierende Mischung einen für die bevorzugte Verwendung als "High Δn"-Mischung ausreichend hohen Wert der optischen Anisotropie Δn aufweist.

Das optimale Mengenverhältnis der Verbindungen der Formeln I und II + III + IV+ V + VI + VII + VIII (gegebenenfalls + IX + X + XI + XII + XIII + XIV + XV + XVI + XVII) hängt weitgehend von den gewünschten Eigenschaften, insbesondere in Abhängigkeit von der gewünschten Verwendung, von der Wahl dieser Komponenten und der Wahl weiterer gegebenenfalls vorhandener Komponenten ab. Geeignete Mengenverhältnisse können von Fall zu Fall leicht ermittelt werden.

Die Gesamtmenge an Verbindungen der Formeln I bis XVII in den erfindungsgemäßen Gemischen ist nicht kritisch. Die Gemische können daher eine oder mehrere weitere Komponenten enthalten zwecks Optimierung verschiedener Eigenschaften.

Die einzelnen Verbindungen der oben genannten Formeln und Unterformeln, die in den erfindungsgemäßen Medien verwendet werden können, sind entweder bekannt oder analog zu den bekannten Verbindungen präparativ zugänglich.

Der Aufbau der erfindungsgemäßen MFK-Anzeige aus Polarisatoren, Elektrodengrundplatten und Elektroden mit Oberflächenbehandlung entspricht der für derartige Anzeigen üblichen Bauweise. Dabei ist der Begriff der üblichen Bauweise hier weit gefaßt und umfaßt auch alle Abwandlungen und Modifikationen der MFK-Anzeige, insbesondere auch Matrix-Anzeigeelemente auf Basis poly-Si TFT oder MIM.

Ein wesentlicher Unterschied der erfindungsgemäßen Anzeigen zu den bisher üblichen auf der Basis der verdrillten nematischen Zelle besteht jedoch in der Wahl der Flüssigkristallparameter der Flüssigkristallschicht.

Anzeigevorrichtungen können mit der das erfindungsgemäße flüssigkristalline Medium enthaltenden Flüssigkristallmischung in herkömmlicher Weise, insbesondere jedoch nach der "One-drop filling method" befüllt werden.

Die Herstellung der erfindungsgemäßen Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebene Zusätze enthalten. Beispielsweise können 0-15 % pleochroitische Farbstoffe oder chirale Dotierstoffe zugesetzt werden.

In der vorliegenden Anmeldung und in den folgenden Beispielen sind die Strukturen der Flüssigkristallverbindungen durch Akronyme angegeben, wobei die Transformation in chemische Formeln gemäß folgender Tabellen A und B erfolgt. Alle Reste CₙH₂ₙ₊₁ und CₘH₂ₘ₊₁ sind geradkettige Alkylreste mit n bzw. m C-Atomen; n und m sind ganze Zahlen und bedeuten vorzugsweise 0, 1, 2, 3, 4, 5, 6, 7, 8, 9, 10, 11 oder 12. Die Codierung gemäß Tabelle B versteht sich von selbst. In Tabelle A ist nur das Akronym für den Grundkörper angegeben. Im Einzelfall folgt getrennt von Akronym für den Grundkörper mit einem Strich ein Code für die Substituenten R^{1*}, R^{2*}, L^{1*} und L^{2*}:

| Code für R^{1*}, R^{2*}, L^{1*}, L^{2*} | R^{1*} | R^{2*} | L^{1*} | L^{2*} |
|---|---|---|---|---|
| nm | CₙH₂ₙ₊₁ | CₘH₂ₘ₊₁ | H | H |
| nO.m | OCₙH₂ₙ₊₁ | CₘH₂ₘ₊₁ | H | H |
| nOm | CₙH₂ₙ₊₁ | OCₘH₂ₘ₊₁ | H | H |
| n | CₙH₂ₙ₊₁ | CN | H | H |
| nN.F | CₙH₂ₙ₊₁ | CN | F | H |
| nN.F.F | CₙH₂ₙ₊₁ | CN | F | F |
| nF | CₙH₂ₙ₊₁ | F | H | H |
| nCL | CₙH₂ₙ₊₁ | Cl | H | H |
| nF.F | CₙH₂ₙ₊₁ | F | F | H |
| nF.F.F | CₙH₂ₙ₊₁ | F | F | F |
| nmF | CₙH₂ₙ₊₁ | CₘH₂ₘ₊₁ | F | H |
| nCF₃ | CₙH₂ₙ₊₁ | CF₃ | H | H |
| nOCF₃ | CₙH₂ₙ₊₁ | OCF₃ | H | H |
| nOCF₃.F | CₙH₂ₙ₊₁ | OCF₃ | F | H |
| n-Vm | CₙH₂ₙ₊₁ | -CH=CH-CₘH₂ₘ₊₁ | H | H |
| nV-Vm | CₙH₂ₙ₊₁-CH=CH- | -CH=CH-CₘH₂ₘ₊₁ | H | H |

Bevorzugte Mischungskomponenten finden sich in den Tabellen A und B.

**Tabelle A:**

| |
|---|
| 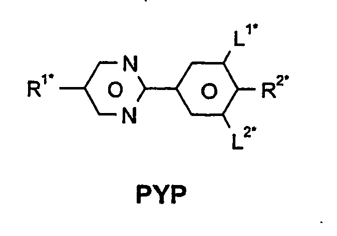 |
| 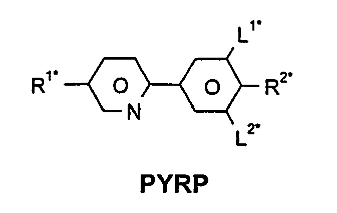 |
| 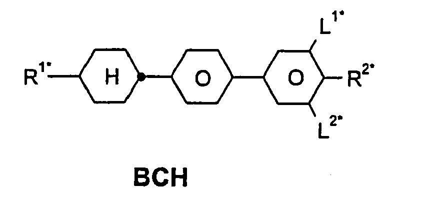 |
| 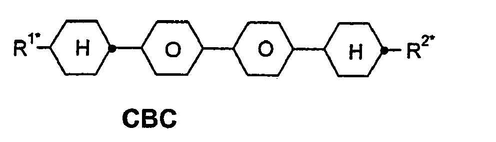 |
| 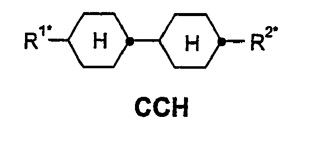 |
| 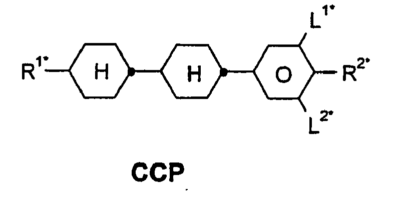 |
| 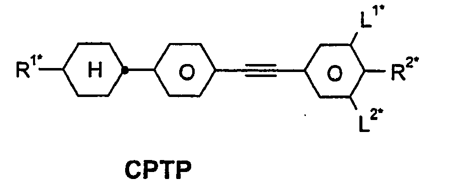 |
| 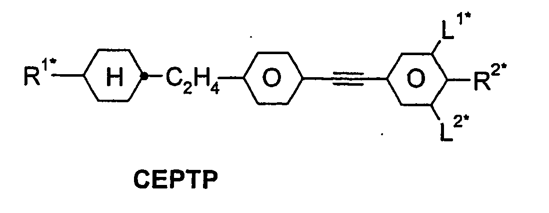 |
| 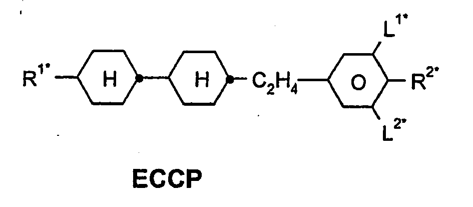 |
| 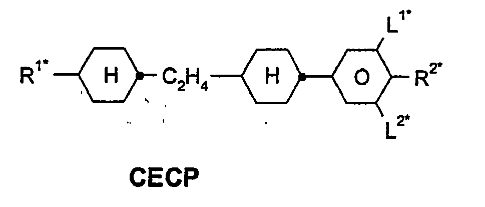 |
| 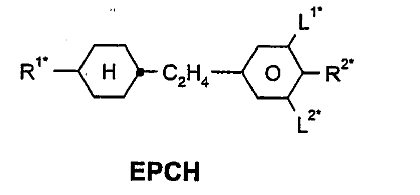 |
| 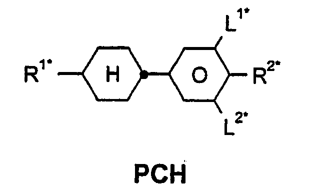 |
| 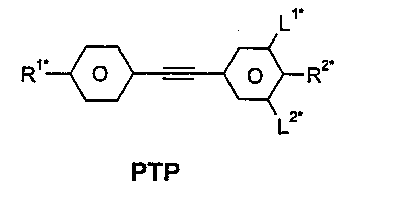 |
| 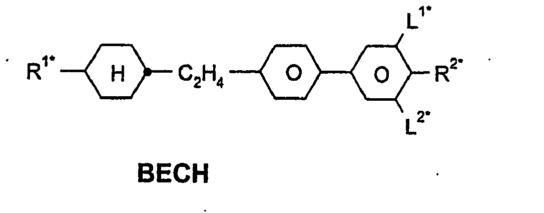 |
| 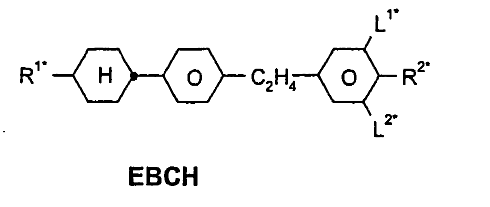 |
| 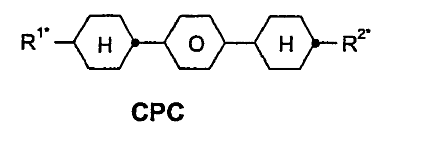 |
| 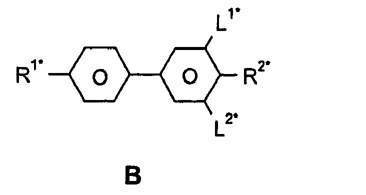 |
| 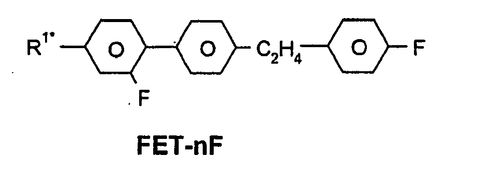 |
| 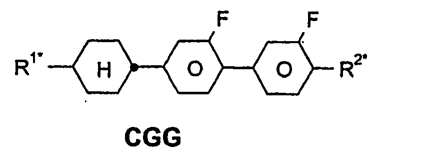 |
| 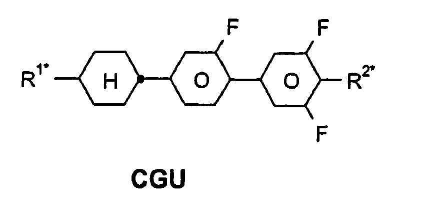 |
| 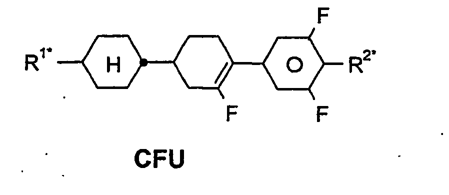 |
| 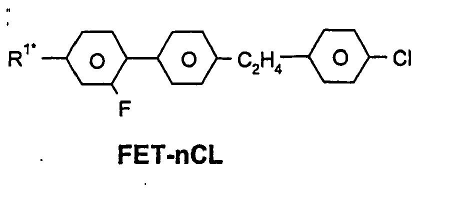 |

**Tabelle B:**

| |
|---|
| 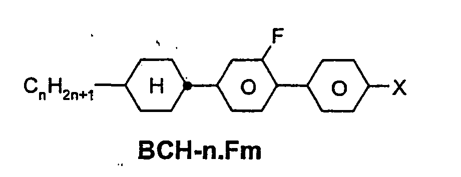 |
| 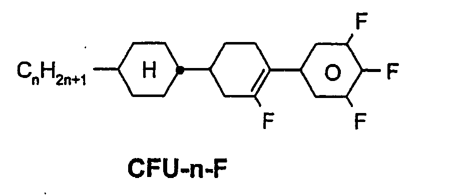 |
| 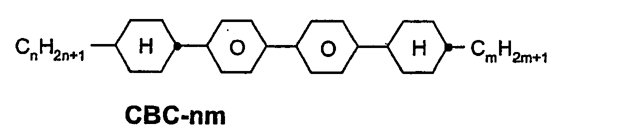 |
| 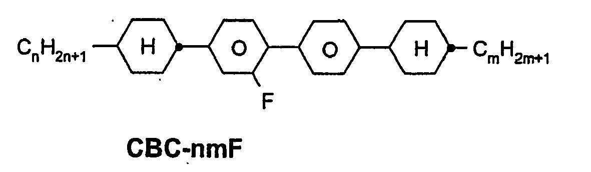 |
| 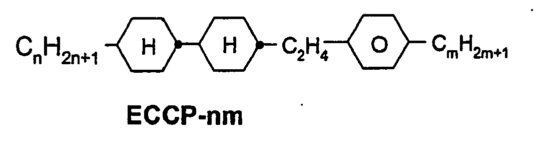 |
| 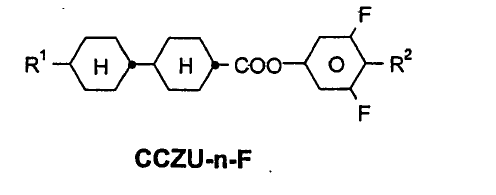 |
| 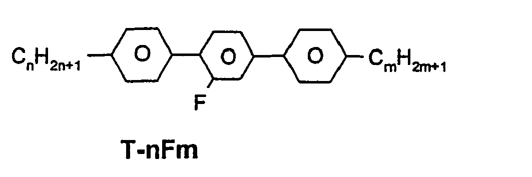 |
| 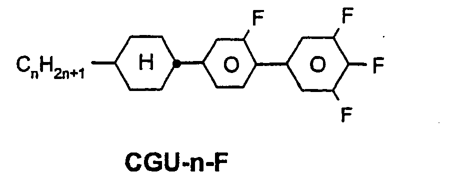 |
| 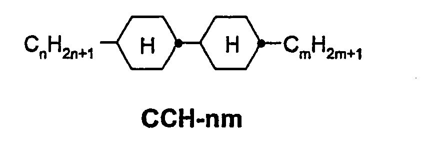 |
| 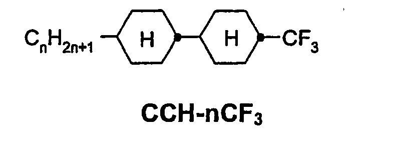 |
| 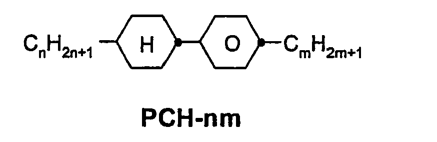 |
| 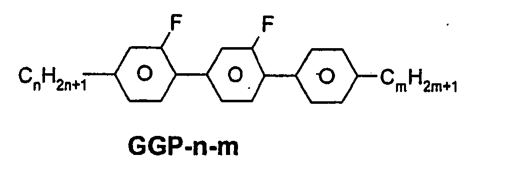 |
| 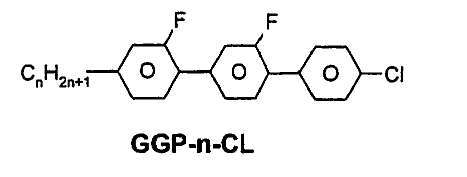 |
| 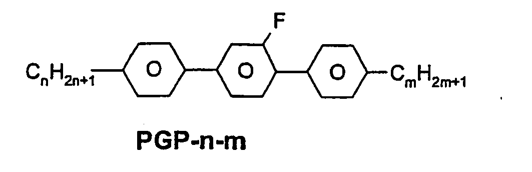 |
| 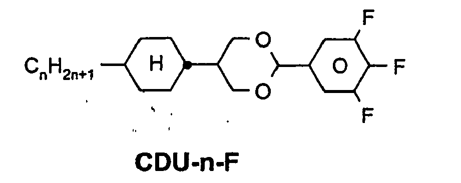 |
| 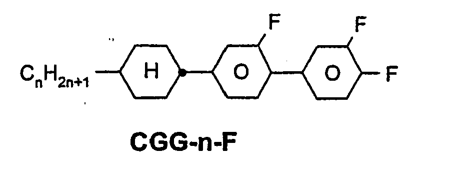 |
| 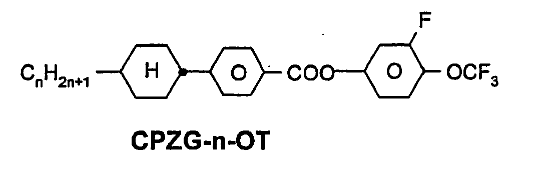 |
| 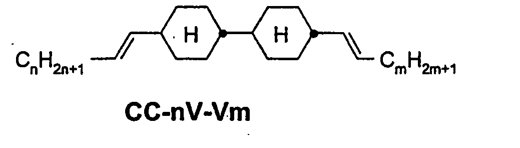 |
| 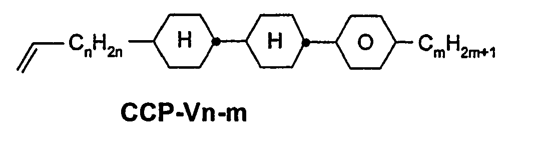 |
| 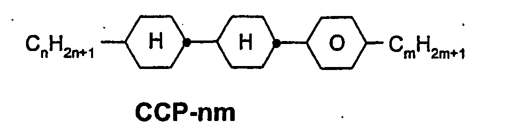 |
| 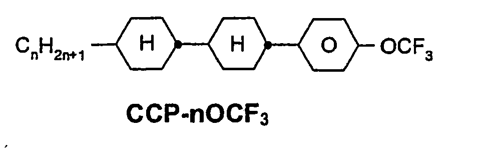 |
| 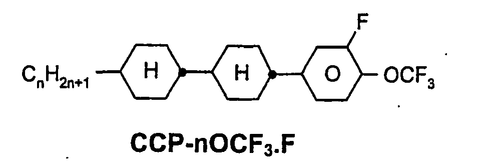 |
| 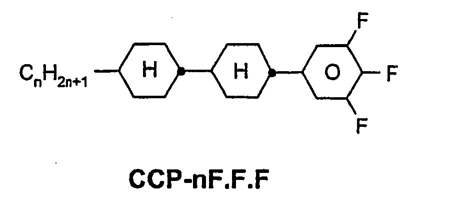 |
| 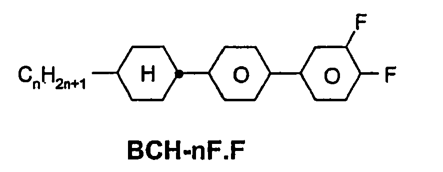 |
| 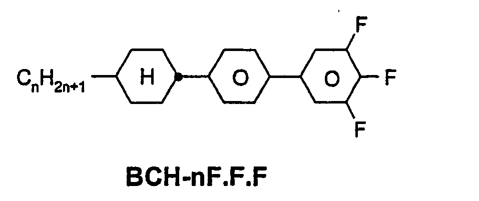 |
| 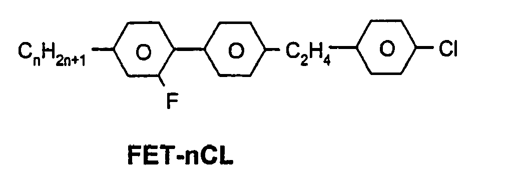 |
| 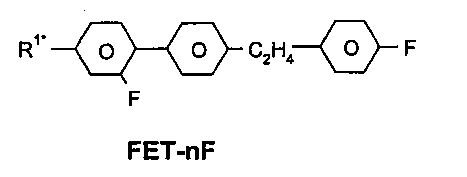 |
| 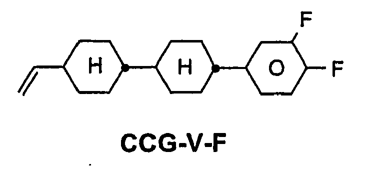 |
| 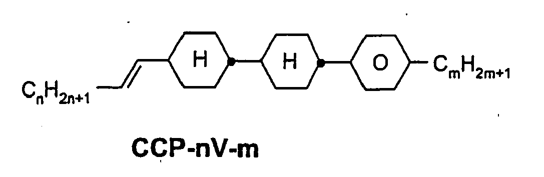 |
| 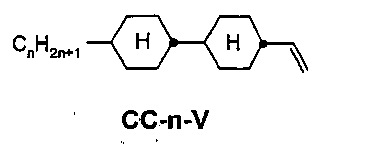 |
| 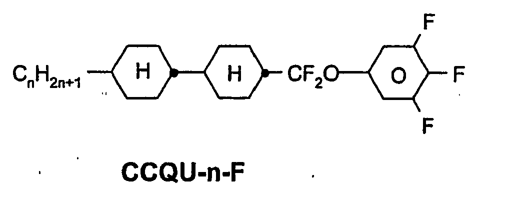 |
| 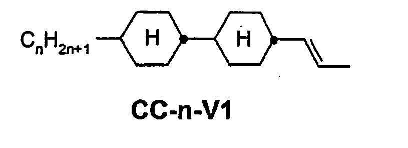 |
| 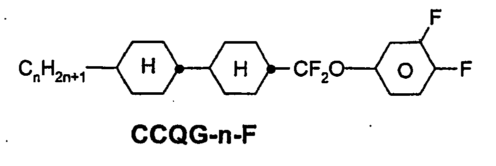 |
| 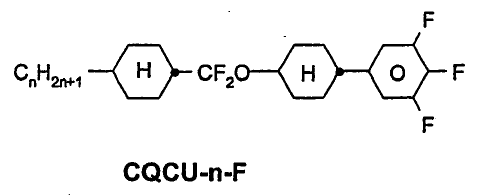 |
| 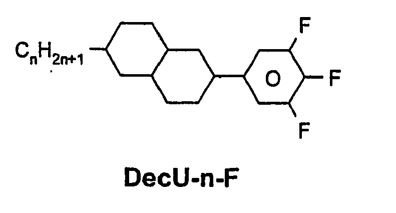 |
| 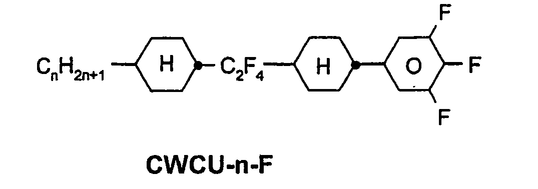 |
| 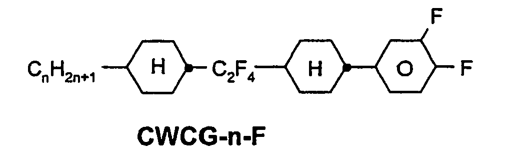 |
| 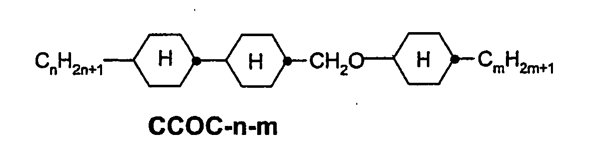 |
| 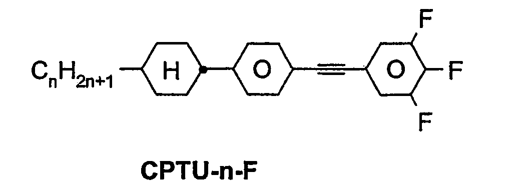 |
| 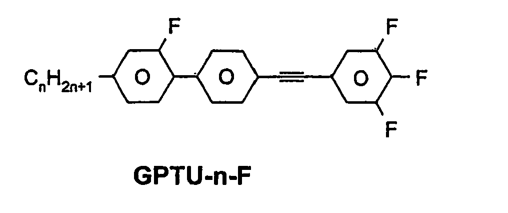 |
| 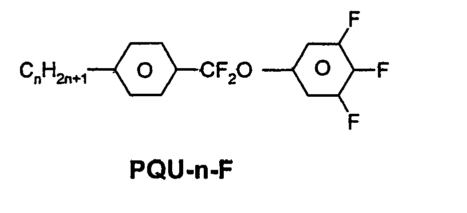 |
| 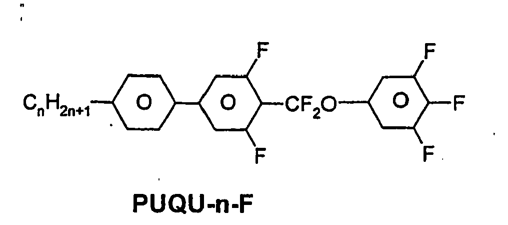 |
| 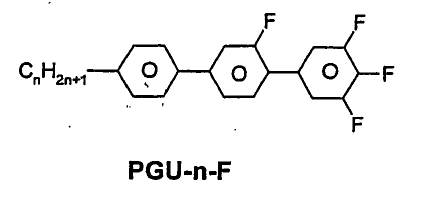 |
| 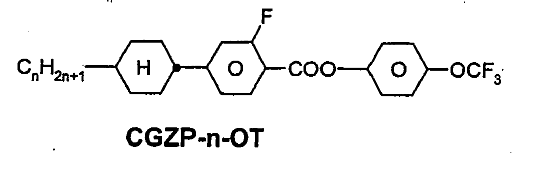 |
| 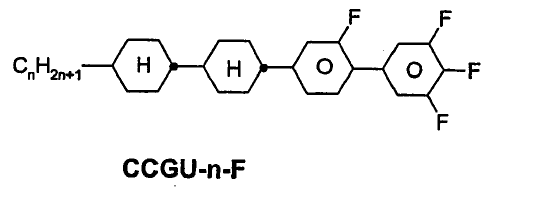 |
| 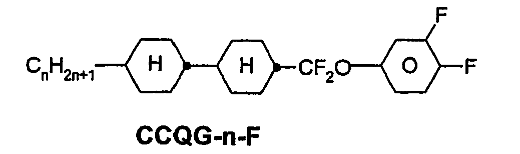 |
| 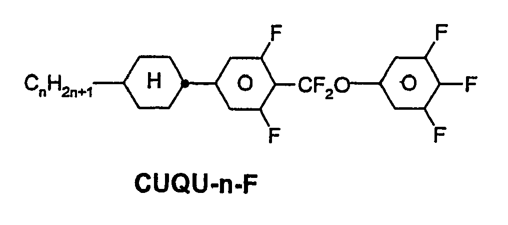 |
| 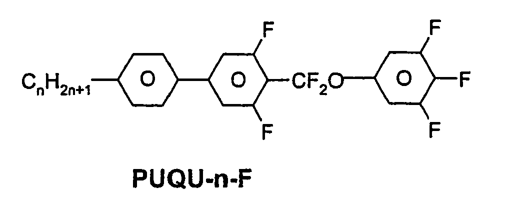 |
| 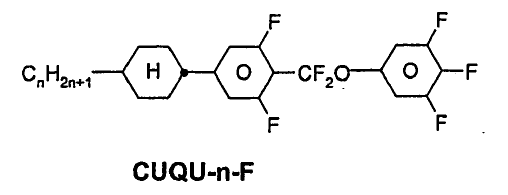 |
| 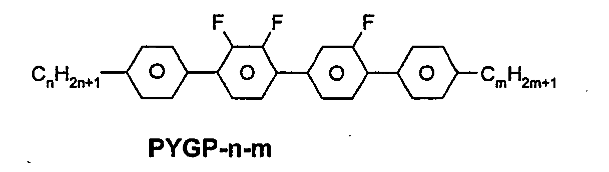 |
| 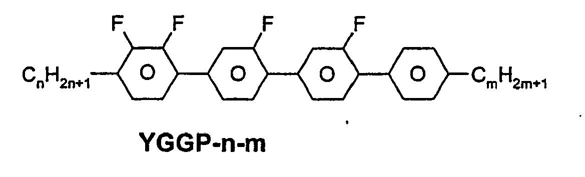 |
| 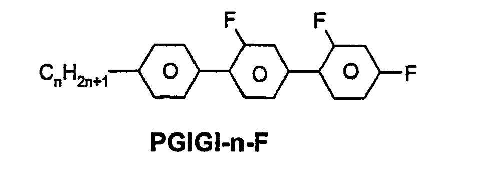 |
| 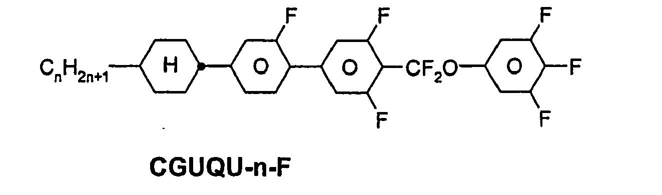 |
| 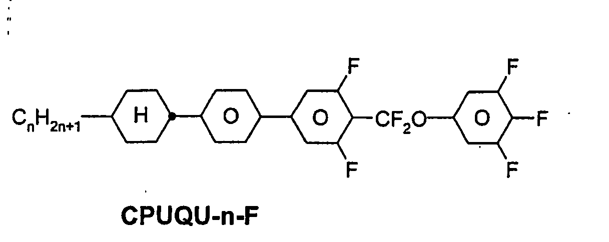 |
| 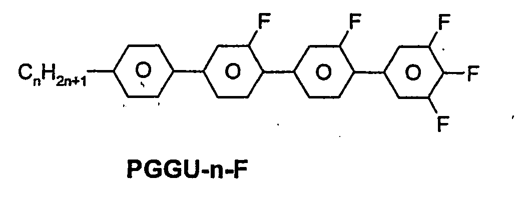 |

Besonders bevorzugt sind flüssigkristalline Mischungen, die neben den Verbindungen der Formeln I und II mindestens eine, zwei, drei oder vier Verbindungen aus der Tabelle B enthalten.

**Tabelle C:**

| |
|---|
| In der Tabelle C werden mögliche Dotierstoffe angegeben, die in der Regel den erfindungsgemäßen Mischungen zugesetzt werden. |
| 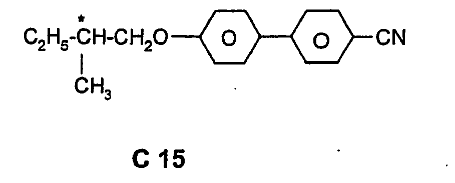 |
| 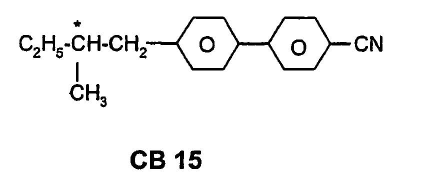 |
| 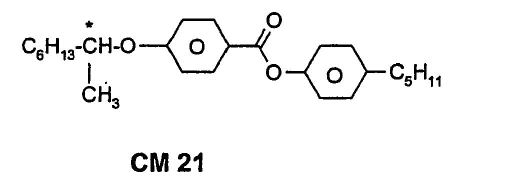 |
| 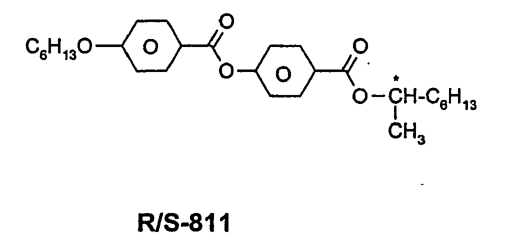 |
| 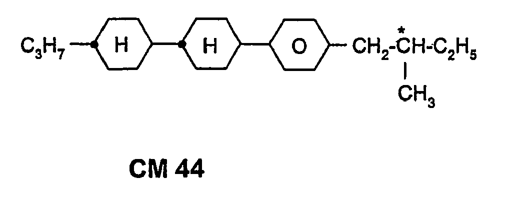 |
| 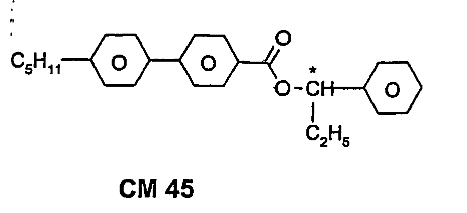 |
| 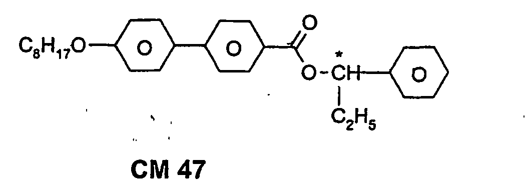 |
| 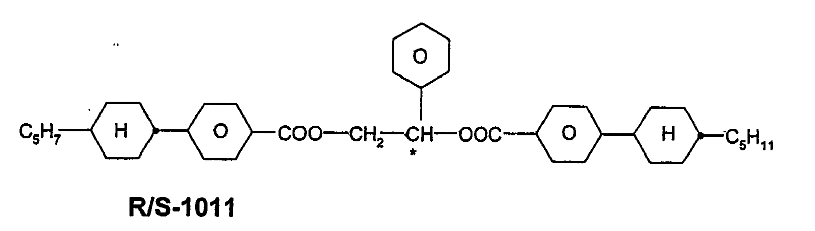 |
| 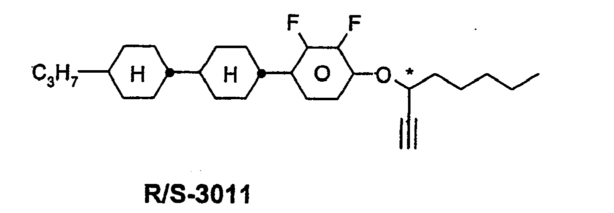 |
| 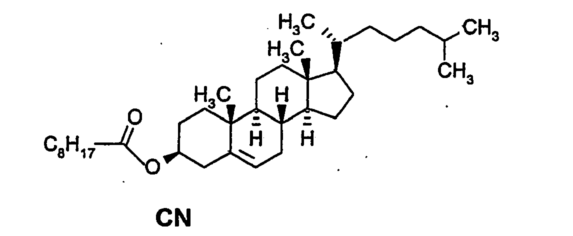 |
| 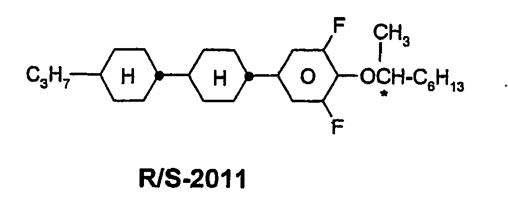 |
| 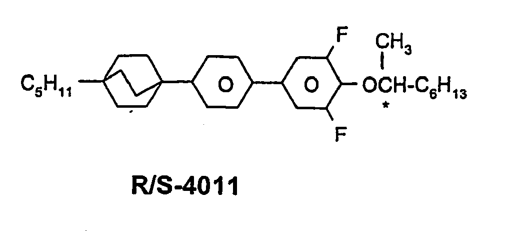 |

**Tabelle D**

| |
|---|
| Stabilisatoren, die beispielsweise den erfindungsgemäßen Mischungen zugesetzt werden können, werden nachfolgend genannt. |
| 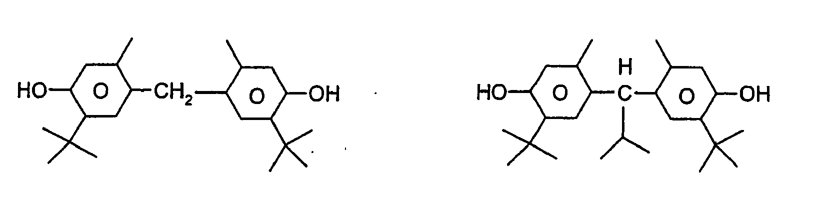 |
| 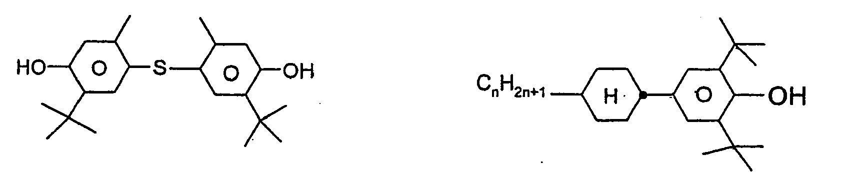 |
| 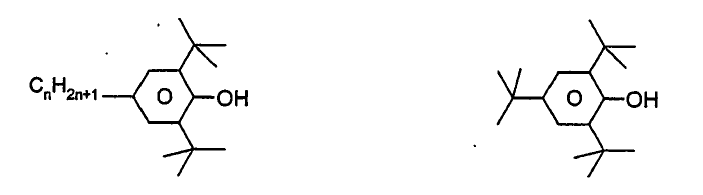 |
| 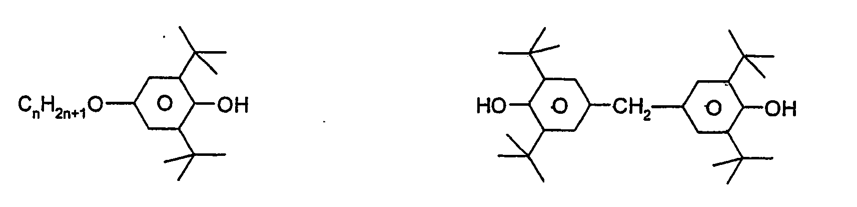 |
| 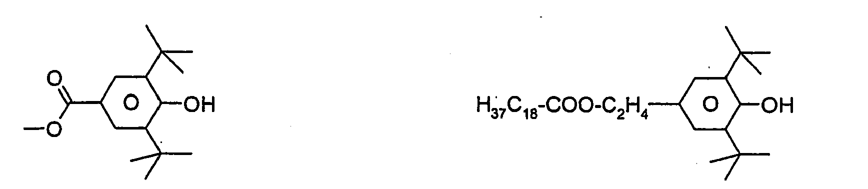 |
| 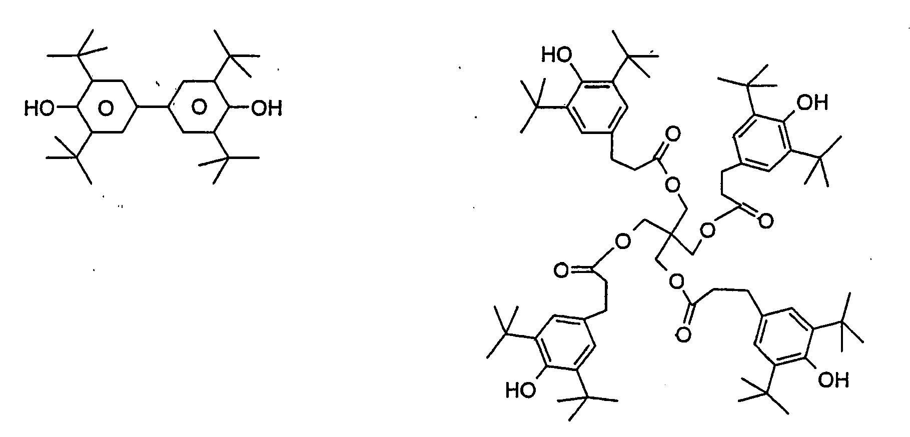 |
| 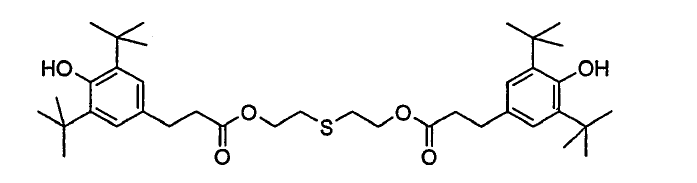 |
| 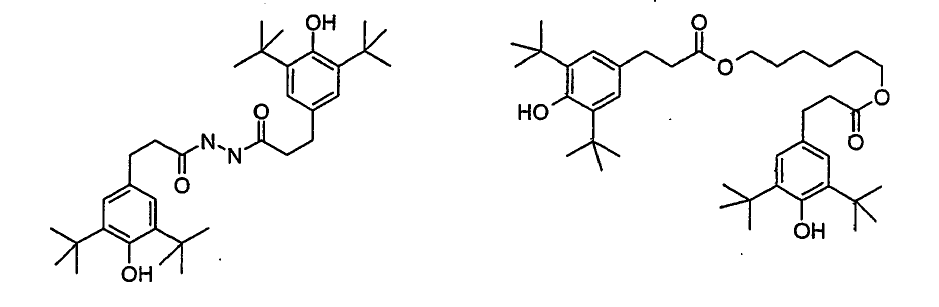 |
| 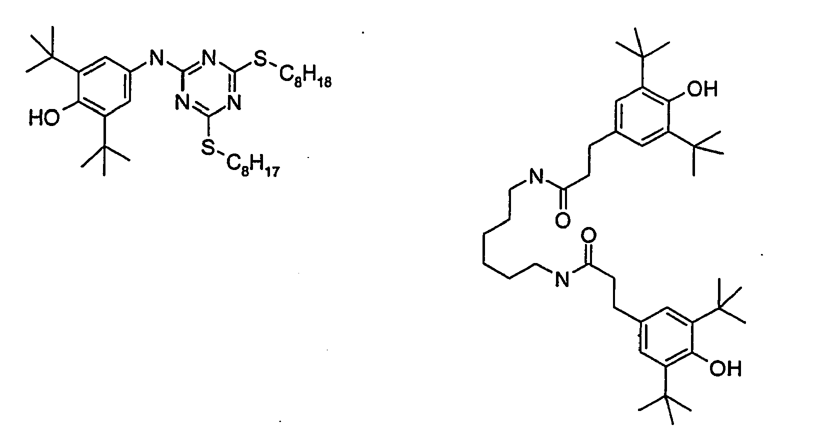 |
| 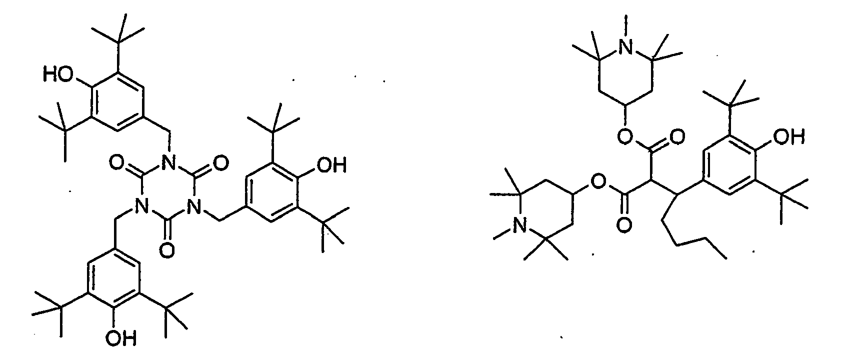 |
| 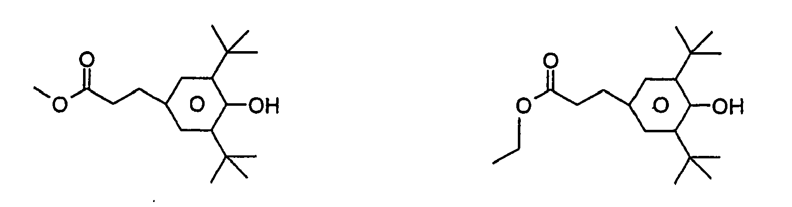 |
| 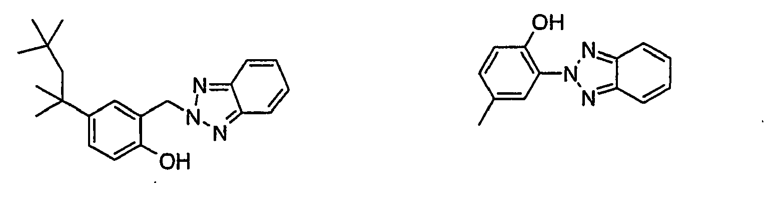 |
| 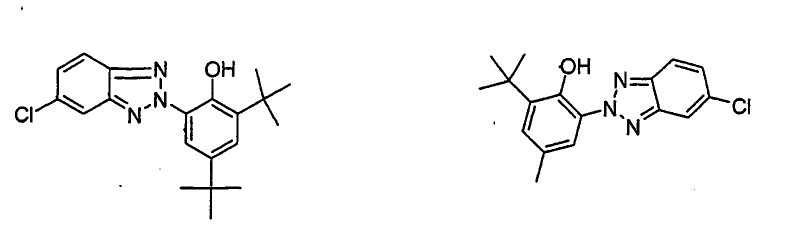 |
| 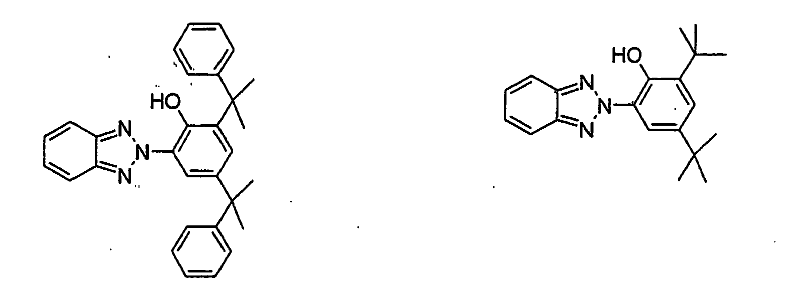 |
| 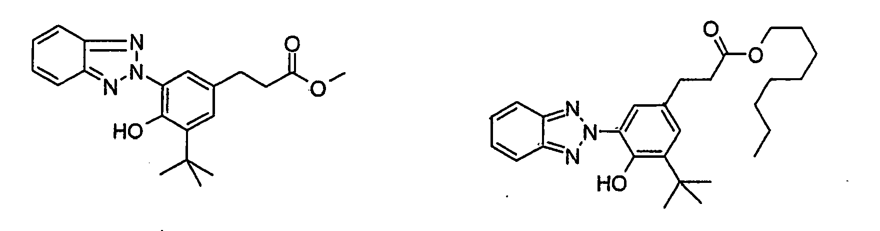 |
| 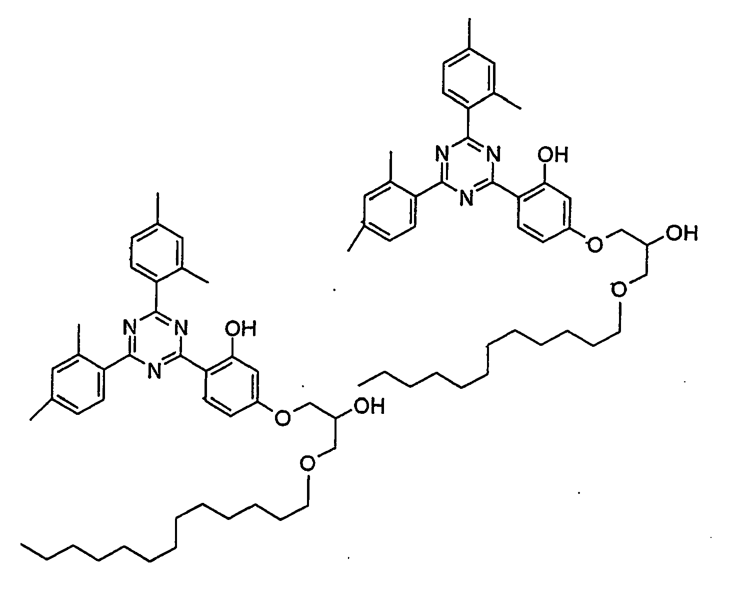 |
| 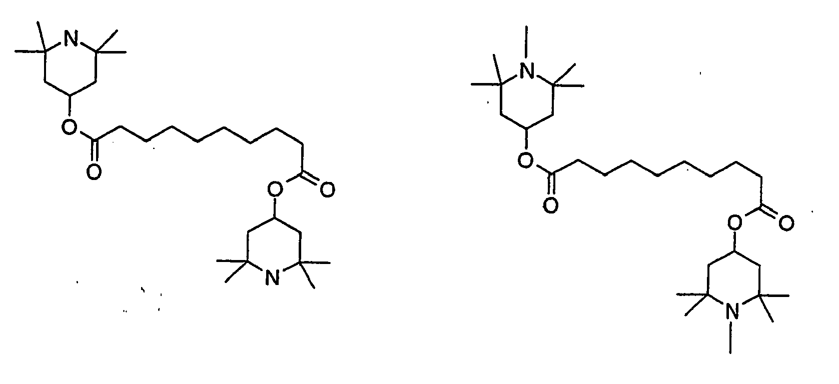 |

Vor- und nachstehend bedeuten Prozentangaben Gewichtsprozent. Alle Temperaturen sind in Grad Celsius angegeben. Fp. bedeutet Schmelzpunkt, Kp. Klärpunkt. Ferner bedeuten K beziehungsweise C = kristalliner Zustand, N = nematische Phase, S = smektische Phase und I = isotrope Phase. S_{c} bedeutet eine smektische C Phase. Die Angaben zwischen diesen Symbolen stellen die Übergangstemperaturen dar. V₁₀ bezeichnet die Spannung für 10 % Transmission (Blickrichtung senkrecht zur Plattenoberfläche). tₒₙ bezeichnet die Einschaltzeit und t_{off} die Ausschaltzeit bei einer Betriebsspannung entsprechend dem 2,0fachen Wert von V₁₀. Δn bezeichnet die optische Anisotropie (Δn = nₑ - nₒ, wobei nₑ der Brechungsindex des außerordentlichen und nₒ der Brechungsindex des ordentlichen Strahls ist) (589 nm, 20°C). Δε bezeichnet die dielektrische Anisotropie (Δε = ε_{∥} - ε_{⊥}, wobei ε_{∥} die Dielektrizitätskonstante parallel zu den Moleküllängsachsen und ε_{⊥} die Dielektrizitätskonstante senkrecht dazu bedeutet) (1 kHz, 20°C). Die elektrooptischen Daten wurden in einer TN-Zelle im 1. Minimum (d.h. bei einem d · Δn-Wert von 0,5 µm) bei 20 °C gemessen, sofern nicht ausdrücklich etwas anderes angegeben wird. Die optischen Daten wurden bei 20 °C gemessen, sofern nicht ausdrücklich etwas anderes angegeben wird. Die Fließviskosität v₂₀ (mm2/sec) wurde bei 20 °C bestimmt. Die Rotationsviskosität γ₁ [mPa.s] wurde ebenfalls bei 20 °C bestimmt. SR bezeichnet den spezifischen Widerstand [Ω·cm]. Die Voltage Holding Ratio VHR wurde unter thermischer Belastung bei 100 °C bzw. unter UV-Bestrahlung (Wellenlänge > 300 nm; Bestrahlungsstärke 765 W/m²) für 2 h bestimmt. Zur experimentellen Bestimmung der physikalischen Parameter wurde gemäß "Licristal, Physical Properties Of Liquid Crystals, Description of the measurement methods", Hrsg. W. Becker, Merck KGaA, Darmstadt, überarbeitete Ausgabe, 1998, verfahren.

Die folgenden Beispiele sollen die Erfindung erläutern, ohne sie zu begrenzen.

### Beispiele

### Beispiel 1

### a) ohne Verbindung der Formel II: Mischung M1

| | | | |
|---|---|---|---|
| CCP-2OCF3.F | 14,00 % | S→N [°C]: | < -30 |
| CCP-2F.F.F | 10,00 % | Klärpunkt [°C]: | +85 |
| CCP-3F.F.F | 14,00 % | nₑ [589 nm; 20 °C]: | 1,5468 |
| CCP-5F.F.F | 6,00 % | nₒ [589 nm; 20 °C]: | 1,4707 |
| CCZU-2-F | 4,00 % | Δn [589 nm; 20 °C]: | +0,0761 |
| CCZU-3-F | 17,00 % | ε_{∥} [1 kHz; 20 °C]: | 15,3 |
| CCZU-5-F | 4,00 % | ε_{⊥} [1 kHz; 20 °C]: | 4,3 |
| CGU-2-F | 6,00 % | Δε [1 kHz; 20 °C]: | +11,0 |
| CGZP-2-OT | 8,00 % | VHR (100 °C): | 94,6 |
| CCH-5CF3 | 8,00 % | VHR (2h UV-Bestr.): | 92,3 |
| CCOC-4-3 | 3,00 % | | |
| CCOC-3-3 | 3,00 % | | |
| CCOC-3-5 | 3,00 % | | |

### b) mit Verbindung der Formel II:

Es wurden der obigen Mischung M1 verschiedene Mengen einer Verbindung der Formel II zugesetzt und VHR nach 2 h UV-Bestrahlung bestimmt:

| **Mischung** | **VHR (2h UV-Bestrahlung) [%]** |
|---|---|
| M1 ohne Verbindung d. Formel II | 92,3 |
| M1 + 0,60 Gew.-% PYGP-4-3 | 94,7 |
| M1 + 0,62 Gew.-% YGGP-4-3 | 94,9 |
| M1 + 0,69 Gew.-% PYGP-4-4 | 95,0 |

### Beispiel 2

### a) ohne Verbindung der Formel II: Mischung M2

| | | | |
|---|---|---|---|
| GGP-3-CL | 9,00 | S→N [°C]: | < -20 |
| GGP-5-CL | 24,00 | Klärpunkt [°C]: | +100 |
| PGIGI-3-F | 4,00 | nₑ [589 nm; 20 °C]: | 1,7162 |
| BCH-3F.F | 4,00 | nₒ [589 nm; 20 °C]: | 1,5161 |
| BCH-5F.F | 5,00 | Δn [589 nm; 20°C]: | +0,2001 |
| BCH-3F.F.F | 9,00 | ε_{∥} [1 kHz; 20°C]: | 16,9 |
| BCH-5F.F.F | 10,00 | ε_{⊥} [1 kHz; 20 °C]: | 4,6 |
| CBC-33F | 3,00 | Δε [1 kHz; 20 °C]: | +12,3 |
| CBC-53F | 4,00 | k₁ [pN]: | 14,5 |
| CCG-V-F | 6,00 | k₃ [pN]: | 15,3 |
| PGU-2-F | 6,00 | k₃/k₁: | 1,05 |
| PGU-3-F | 7,00 | γ₁ [mPa.s; 20°C]: | 327 |
| FET-2CL | 5,00 | V₁₀ [V]: | 1,15 |
| FET-3CL | 4,00 | | |

### b) mit Verbindung der Formel II:

Es wurden der obigen Mischung M2 verschiedene Mengen einer Verbindung der Formel II zugesetzt und VHR nach 2 h UV-Bestrahlung bestimmt:

| **Mischung** | **VHR (2h UV-Bestrahlung) [%]** |
|---|---|
| M2 ohne Verbindung d. Formel II | 96,0 |
| M2 + 0,53 Gew.-% PYGP-4-3 | 97,1 |
| M2 + 0,99 Gew.-% PYGP-4-3 | 97,5 |
| M2 + 1,51 Gew.-% PYGP-4-3 | 97,6 |
| M2 + 1,98 Gew.-% PYGP-4-3 | 97,3 |

### Beispiel 3

### a) ohne Verbindung der Formel II: Mischung M3

| | | | |
|---|---|---|---|
| CC-5-V | 10,00 | Klärpunkt [°C]: | +55 |
| PCH-53 | 30,00 | nₑ [589 nm; 20 °C]: | 1,5545 |
| CCP-2F.F.F | 15,00 | nₒ [589 nm; 20 °C] : | 1,4837 |
| CCP-3F.F.F | 15,00 | Δn [589 nm; 20 °C]: | +0,0708 |
| CCP-5F.F.F | 10,00 | ε_{∥} [1 kHz; 20°C]: | 6,8 |
| CCP-31 | 10,00 | ε_{⊥} [1 kHz; 20°C]: | 3,0 |
| CCG-V-F | 10,00 | Δε [1 kHz; 20°C] : | +3,8 |

### b) mit Verbindung der Formel II:

Es wurden der obigen Mischung M3 20 Gew.-% PUQU-3-F (= Mischung M3A) und verschiedene Mengen einer Verbindung der Formel II zugesetzt und VHR nach 2 h UV-Bestrahlung bestimmt:

| **Mischung** | **VHR (2h UV-Bestrahlung) [%]** |
|---|---|
| M3A ohne Verbindung d. Formel II | 94,2 |
| M3 + 0,5 Gew.-% PYGP-4-3 | 96,4 |
| M3 + 1,0 Gew.-% PYGP-4-3 | 96,4 |

Ferner wurde der spezifische Widerstand SR der Mischung M3A ohne und mit Zusatz einer Verbindung der Formel II in einer Glaszelle nach UV-Bestrahlung bestimmt:

| **Mischung** | **SR [Ω· cm]** | **SR[Ω · cm]** | **SR [Ω · cm]** |
|---|---|---|---|
| | **nach 0 h** | **nach 10 h** | **nach 50 h** |
| M3A ohne Verbindung d. Formel II | 3,5 · 1014 | 2 · 10¹³ | 4 · 10¹⁰ |
| M3A + 0,5 Gew.-% PYGP-4-3 | 1,0 · 10¹⁴ | 1,5 · 10¹⁴ | 6 · 10¹² |
| M3A + 1,0 Gew.-% PYGP-4-3 | 1,0 · 10¹⁴ | 1,7 · 10¹⁴ | 3 · 10¹³ |
| M3A + 1,0 Gew.-% PGP-2-2 | 1,3 · 10¹⁴ | 1,0 · 10¹⁴ | 2,5 · 10¹² |
| M3A + 1,0 Gew.-% GGP-5-3 | 2,5 · 10¹⁴ | 7 · 10¹³ | 1,5 · 10¹² |

### Beispiel 4

### a) ohne Verbindung der Formel II: Mischung M4

| | | | |
|---|---|---|---|
| CCH-35 | 3,00 | | |
| CC-3-V1 | 4,00 | Klärpunkt [°C]: | +84 |
| CCP-1F.F.F | 10,00 | nₑ [589 nm; 20 °C]: | 1,5672 |
| CCP-2F.F.F | 8,00 | nₒ [589 nm; 20 °C]: | 1,4745 |
| CCP-3F.F.F | 9,00 | Δn [589 nm; 20 °C]: | +0,0927 |
| CCP-2OCF3.F | 12,00 | ε_{∥} [1 kHz; 20 °C]: | 15,4 |
| CCP-20CF3 | 8,00 | ε_{⊥} [1 kHz; 20 °C]: | 4,0 |
| CCP-3OCF3 | 8,00 | Δε [1 kHz; 20 °C]: | +11,5 |
| CCP-4OCF3 | 5,00 | γ₁ [mPa·s; 20 °C]: | 132 |
| CCP-5OCF3 | 7,00 | | |
| PUQU-2-F | 6,00 | | |
| PUQU-3-F | 9,50 | | |
| CGU-2-F | 3,50 | | |
| CCGU-3-F | 5,00 | | |
| CBC-33 | 2,00 | | |

### b) mit Verbindung der Formel II:

Es wurden der obigen Mischung M4 verschiedene Mengen einer Verbindung der Formel II zugesetzt und VHR nach 2 h UV-Bestrahlung bestimmt:

| **Mischung** | **VHR (2h UV-Bestrahlung) [%]** |
|---|---|
| M4 ohne Verbindung d. Formel II | 95,8 |
| M4 + 0,5 Gew.-% PYGP-4-3 | 96,6 |
| M4 + 1,0 Gew.-% PYGP-4-3 | 97,2 |

Ferner wurde der spezifische Widerstand SR der Mischung M4 ohne und mit Zusatz einer Verbindung der Formel II in einer Glaszelle nach UV-Bestrahlung bestimmt:

| **Mischung** | **SR [Ω·cm]** | **SR [Ω·cm]** | **SR [Ω·cm]** |
|---|---|---|---|
| | **nach 0 h** | **nach 10 h** | **nach 50 h** |
| M4 ohne Verbindung d. Formel II | 1,0·10¹⁴ | 2,2·10¹³ | 3·10¹⁰ |
| M4 + 0,5 Gew.-% PYGP-4-3 | 1,3·10¹⁴ | 1,6·10¹⁴ | 2·10¹³ |
| M4 + 1,0 Gew.-% PYGP-4-3 | 2,0·10¹⁴ | 2,3·10¹⁴ | 1,2·10¹⁴ |

## Patentansprüche

1. Flüssigkristallines Medium umfassend
- wenigstens eine Verbindung der Formel I 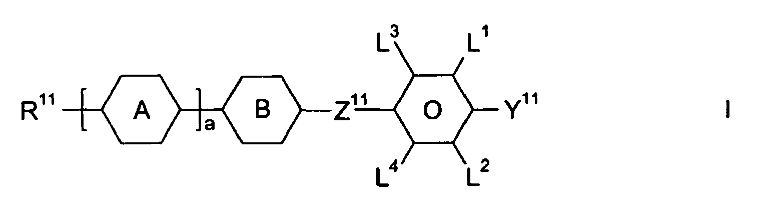 und
- wenigstens eine Verbindung der Formel II 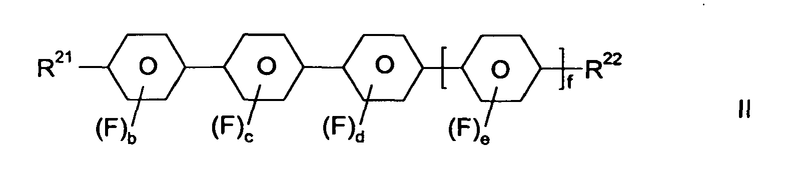
worin
L¹, L², L³ und L⁴ jeweils unabhängig voneinander H oder F bedeuten;
R¹¹ H, einen halogenierten oder unsubstituierten Alkylrest mit 1 bis 15 C-Atomen bedeutet, wobei in diesen Resten auch eine oder mehrere CH₂-Gruppen jeweils unabhängig voneinander durch -C≡C-, -CH=CH-, -O-,-CO-O- oder -O-CO- so ersetzt sein können, daß O-Atome nicht direkt miteinander verknüpft sind;
R²¹ und R²² jeweils unabhängig voneinander einen unsubstituierten Alkylrest mit 1 bis 15 C-Atomen bedeuten, wobei in diesen Resten auch eine oder mehrere CH₂-Gruppen jeweils unabhängig voneinander durch -C≡C-, -CH=CH-, -O-, -CO-O- oder -O-CO- so ersetzt sein können, daß O-Atome nicht direkt miteinander verknüpft sind;
Y¹¹ F, Cl, CN, SF₅, SCN, NCS, halogenierter Alkylrest, halogenierter Alkenylrest, halogenierter Alkoxyrest oder halogenierter Alkenyloxyrest mit jeweils bis zu 6 C-Atomen bedeutet;
Z¹¹ eine Einfachbindung, -CH₂-CH₂-, -CH=CH-, -CH=CF-, -CF=CH-, -CF=CF-, -C≡C-, -COO-, -OCO- -CF₂O- oder-OCF₂- bedeutet;
a 0 oder 1 ist;
b, c und d jeweils unabhängig voneinander 0, 1 oder 2 sind;
e 0 ist;
f 1 ist; 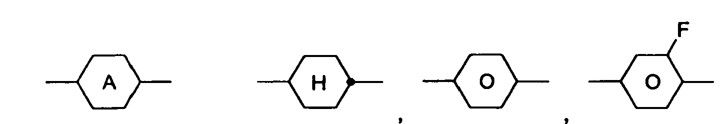 oder 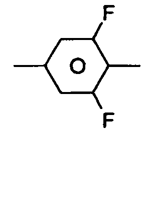 bedeutet; und 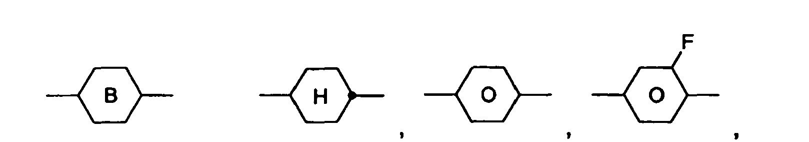 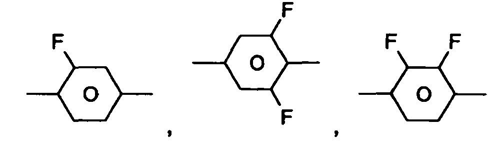 oder 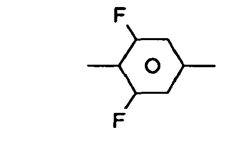 bedeutet,
wobei das flüssigkristalline Medium weniger als 5 Gew. -% an Verbindungen der Formel 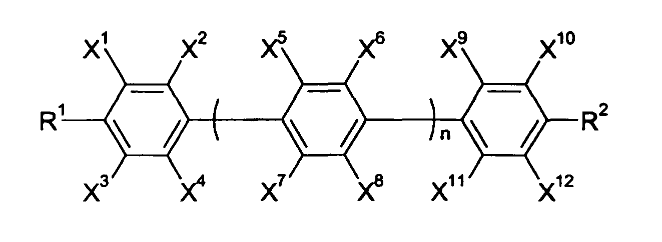 enthält, worin
R¹ und R² unabhängig voneinander eine Alkylgruppe mit 1 bis 10 Kohlenstoffatomen, eine Alkoxygruppe mit 1 bis 10 Kohlenstoffatomen oder eine Alkenylgruppe mit 2 bis 10 Kohlenstoffatomen bedeuten,
X¹ bis X¹² unabhängig voneinander Wasserstoff oder Fluor bedeuten, wobei zumindest zwei der X¹ bis X¹² Fluor sind,
falls ein 1,4-Phenylen zwei Fluoratome aufweist, die Positionen der Fluoratome entweder in der 2,5-Position oder in der 2,6-Position sind und
n gleich 2 ist.

2. Flüssigkristallines Medium nach Anspruch 1 umfassend
- wenigstens eine Verbindung der Formel IA 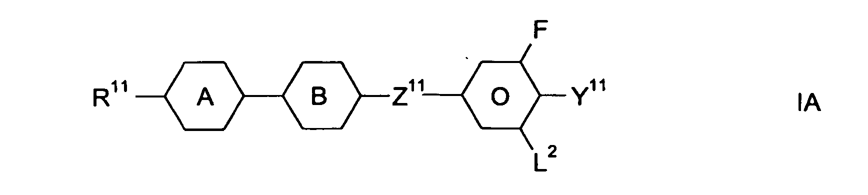 und
- wenigstens eine Verbindung der Formel II 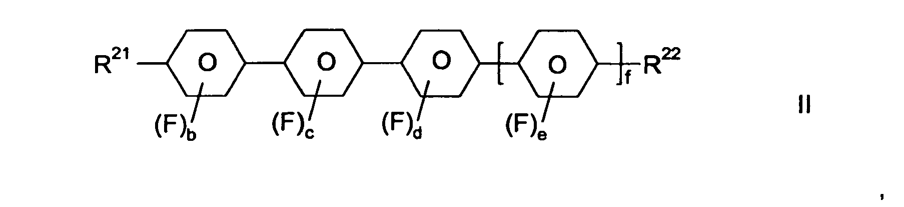
worin
L² H oder F bedeutet;
R¹¹ H, einen halogenierten oder unsubstituierten Alkylrest mit 1 bis 15 C-Atomen bedeutet, wobei in diesen Resten auch eine oder mehrere CH₂-Gruppen jeweils unabhängig voneinander durch -C≡C-, -CH=CH-, -O-, -CO-O- oder -O-CO- so ersetzt sein können, daß O-Atome nicht direkt miteinander verknüpft sind;
R²¹ und R²² jeweils unabhängig voneinander einen unsubstituierten Alkylrest mit 1 bis 15 C-Atomen bedeuten, wobei in diesen Resten auch eine oder mehrere CH₂-Gruppen jeweils unabhängig voneinander durch -C≡C-, -CH=CH-, -O-, -CO-O- oder -O-CO- so ersetzt sein können, daß O-Atome nicht direkt miteinander verknüpft sind;
Y¹¹ F, Cl, CN, SF₅, SCN, NCS, halogenierter Alkylrest, halogenierter Alkenylrest, halogenierter Alkoxyrest oder halogenierter Alkenyloxyrest mit jeweils bis zu 6 C-Atomen bedeutet;
Z¹¹ eine Einfachbindung, -COO- oder -CF₂O- bedeutet;
f 1 ist;
b, c und d jeweils unabhängig voneinander 0, 1 oder 2 sind;
e 0 ist; 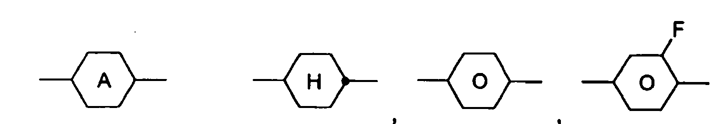 oder 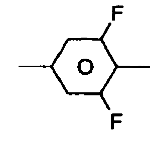 bedeutet; und 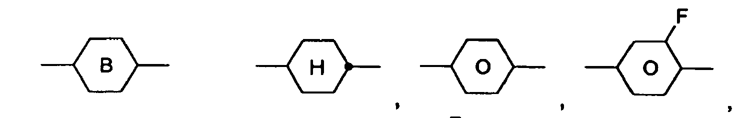 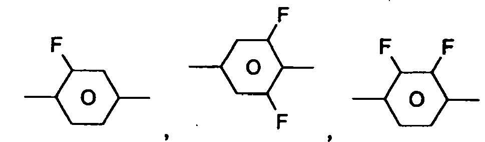 oder 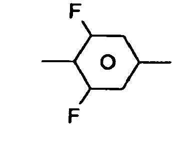 bedeutet,
wobei das flüssigkristalline Medium weniger als 5 Gew. -% an Verbindungen der Formel 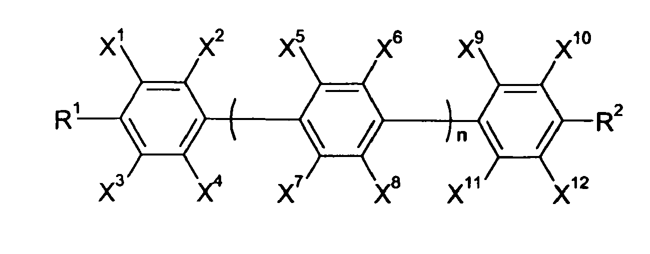
R¹ und R² unabhängig voneinander eine Alkylgruppe mit 1 bis 10 Kohlenstoffatomen, eine Alkoxygruppe mit 1 bis 10 Kohlenstoffatomen oder eine Alkenylgruppe mit 2 bis 10 Kohlenstoffatomen bedeuten,
X¹ bis X¹² unabhängig voneinander Wasserstoff oder Fluor bedeuten, wobei zumindest zwei der X¹ bis X¹² Fluor sind,
falls ein 1,4-Phenylen zwei Fluoratome aufweist, die Positionen der Fluoratome entweder in der 2,5-Position oder in der 2,6-Position sind und
n gleich 2 ist.

3. Flüssigkristallines Medium nach Ansprüche 1 oder 2, **dadurch gekennzeichnet, daß**
R¹¹ und R²¹ unabhängig voneinander geradkettiges Alkyl mit 1 bis 7 Kohlenstoffatomen bedeuten; und
R²² geradkettiges Alkyl mit 1 bis 7 Kohlenstoffatomen bedeutet.

4. Flüssigkristallines Medium nach irgendeinem der Ansprüche 1 bis 3, **dadurch gekennzeichnet, daß**
Y¹¹ F, Cl, CF₃, OCHF₂ oder OCF₃ bedeutet.

5. Flüssigkristallines Medium nach irgendeinem der Ansprüche 1 bis 4, **dadurch gekennzeichnet, daß** es ferner eine Verbindung der Formel III umfaßt 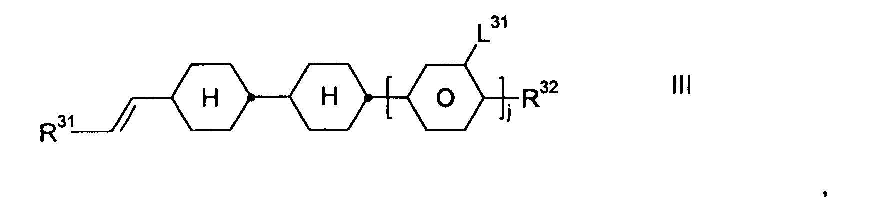 worin
L³¹ H oder F ist;
R³¹ H, einen halogenierten oder unsubstituierten Alkylrest mit 1 bis 15 C-Atomen bedeutet, wobei in diesen Resten auch eine
L³¹ H oder F ist;
R³¹ H, einen halogenierten oder unsubstituierten Alkylrest mit 1 bis 15 C-Atomen bedeutet, wobei in diesen Resten auch eine oder mehrere CH₂-Gruppen durch -C≡C-, -CH=CH-, -O-, -CO-O- oder -O-CO- so ersetzt sein können, daß O-Atome nicht direkt miteinander verknüpft sind;
R³² H, F, Cl, einen halogenierten oder unsubstituierten Alkylrest mit 1 bis 15 C-Atomen bedeutet, wobei in diesen Resten auch eine oder mehrere CH₂-Gruppen durch -C≡C-, -CH=CH-, -O-, -CO-O- oder -O-CO- so ersetzt sein können, daß O-Atome nicht direkt miteinander verknüpft sind; und
j 0 oder 1 ist.

6. Flüssigkristallines Medium nach irgendeinem der Ansprüche 1 bis 5, **dadurch gekennzeichnet, daß** es ferner eine Verbindung der Formel IV und/oder V umfaßt 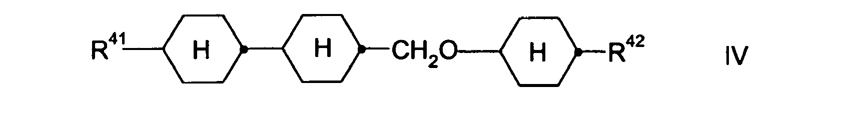 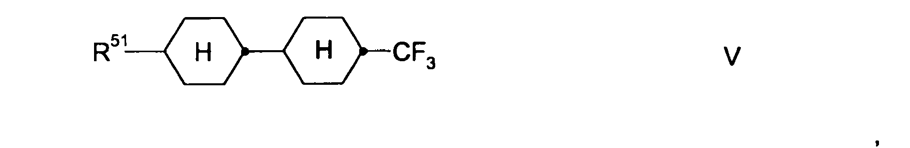 worin
R⁴¹, R⁴² und R⁵¹ unabhängig voneinander Alkyl mit 1 bis 12 Kohlenstoffatomen bedeuten.

7. Flüssigkristallines Medium nach irgendeinem der Ansprüche 1 bis 6, **dadurch gekennzeichnet, daß** es ferner eine Verbindung der Formel VI und/oder VII und/oder VIII umfaßt 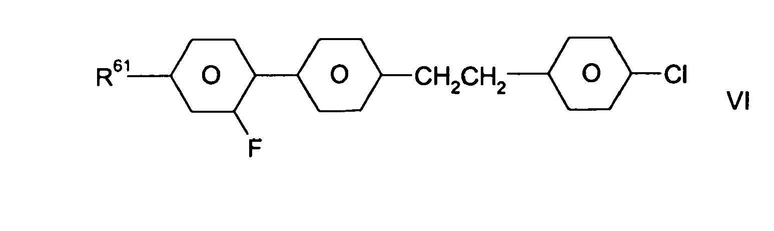 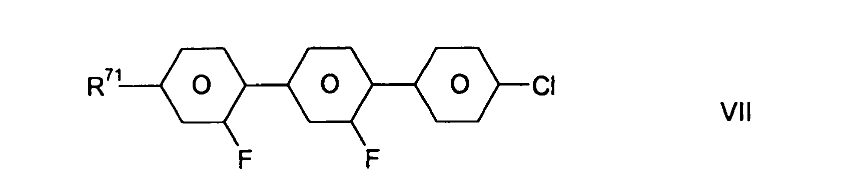 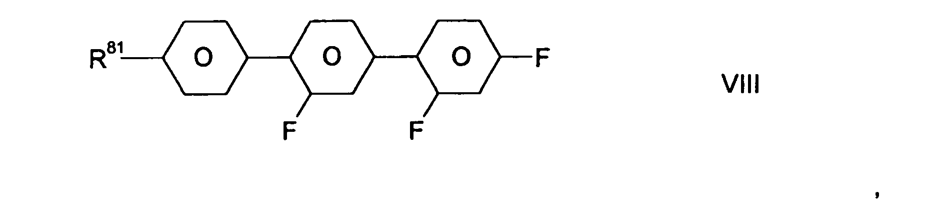 worin
R⁶¹, R⁷¹ und R⁸¹ unabhängig voneinander Alkyl mit 1 bis 12 Kohlenstoffatomen bedeuten.

8. Verwendung des flüssigkristallinen Mediums nach irgendeinem der Ansprüche 1 bis 7 für elektrooptische Zwecke.

9. Elektrooptische Flüssigkristallanzeige enthaltend ein flüssigkristallines Medium nach irgendeinem der Ansprüche 1 bis 7.

## Claims

1. Liquid-crystalline medium comprising
- at least one compound of the formula I 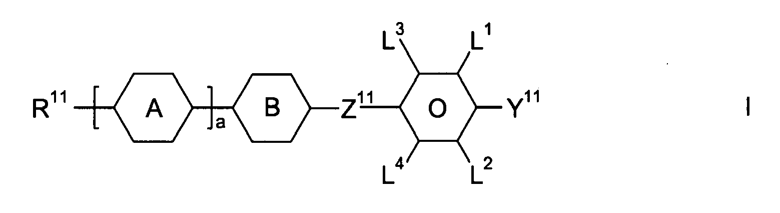 and
- at least one compound of the formula II 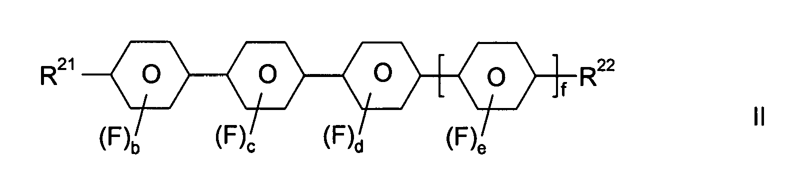
in which
L¹, L², L³ and L⁴ each, independently of one another, denote H or F;
R¹¹ denotes H, a halogenated or unsubstituted alkyl radical having 1 to 15 C atoms, where, in addition, one or more CH₂ groups in these radicals may each be replaced, independently of one another, by -C≡C-, -CH=CH-, -O-, -CO-O- or -O-CO- in such a way that O atoms are not linked directly to one another;
R²¹ and R²² each, independently of one another, denote an unsubstituted alkyl radical having 1 to 15 C atoms, where, in addition, one or more CH₂ groups in these radicals may each be replaced, independently of one another, by -C≡C-, -CH=CH-, -O-, -CO-O- or -O-CO- in such a way that O atoms are not linked directly to one another;
Y¹¹ denotes F, Cl, CN, SF₅, SCN, NCS, a halogenated alkyl radical, a halogenated alkenyl radical, a halogenated alkoxy radical or a halogenated alkenyloxy radical, each having up to 6 C atoms;
Z¹¹ denotes a single bond, -CH₂-CH₂-, -CH=CH-, -CH=CF-, -CF=CH-, -CF=CF-, -C≡C-, -COO-, -OCO-, -CF₂O- or -OCF₂-;
a is 0 or 1;
b, c and d are each, independently of one another, 0, 1 or 2;
e is 0;
f is 1; 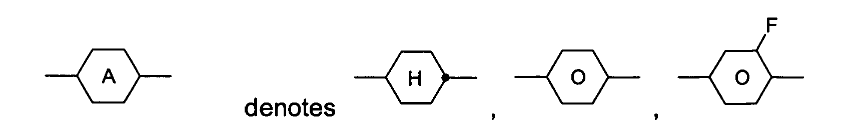 or 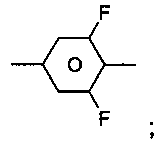 and 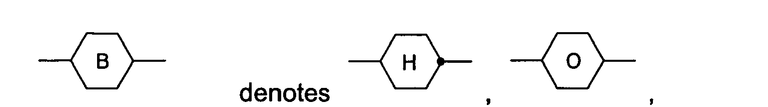 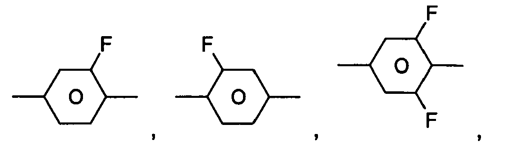 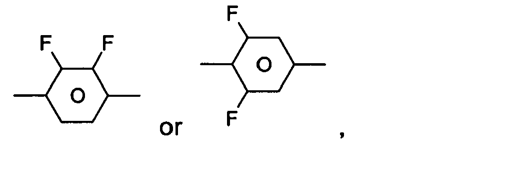
where the liquid-crystalline medium comprises less than 5% by weight of compounds of the formula 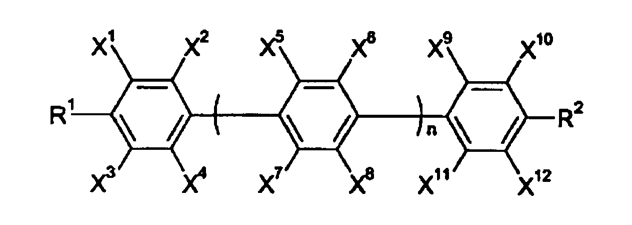 in which
R¹ and R², independently of one another, denote an alkyl group having 1 to 10 carbon atoms, an alkoxy group having 1 to 10 carbon atoms or an alkenyl group having 2 to 10 carbon atoms,
X¹ to X¹², independently of one another, denote hydrogen or fluorine, where at least two of the X¹ to X¹² are fluorine,
if a 1,4-phenylene has two fluorine atoms, the positions of the fluorine atoms are either in the 2,5-position or in the 2,6-position and
n is equal to 2.

2. Liquid-crystalline medium according to Claim 1, comprising
- at least one compound of the formula IA 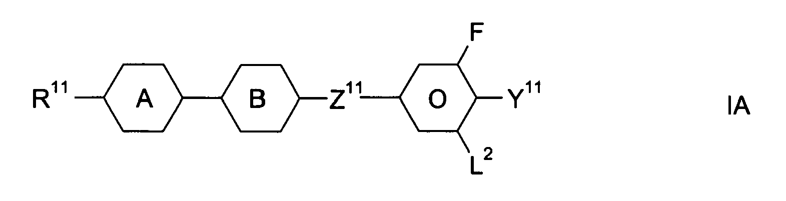 and
- at least one compound of the formula II 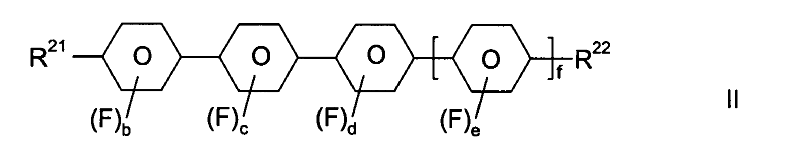
in which
L² denotes H or F;
R¹¹ denotes H, a halogenated or unsubstituted alkyl radical having 1 to 15 C atoms, where, in addition, one or more CH₂ groups in these radicals may each be replaced, independently of one another, by -C≡C-, -CH=CH-, -O-, -CO-O- or -O-CO- in such a way that O atoms are not linked directly to one another;
R²¹ and R²² each, independently of one another, denote an unsubstituted alkyl radical having 1 to 15 C atoms, where, in addition, one or more CH₂ groups in these radicals may each be replaced, independently of one another, by -C≡C-, -CH=CH-, -O-, -CO-O- or -O-CO- in such a way that O atoms are not linked directly to one another;
Y¹¹ denotes F, Cl, CN, SF₅, SCN, NCS, a halogenated alkyl radical, a halogenated alkenyl radical, a halogenated alkoxy radical or a halogenated alkenyloxy radical, each having up to 6 C atoms;
Z¹¹ denotes a single bond, -COO- or -CF₂O-;
f is 1;
b, c and d are each, independently of one another, 0, 1 or 2;
e is 0; 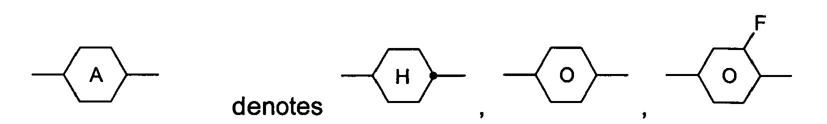 or 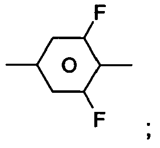 and 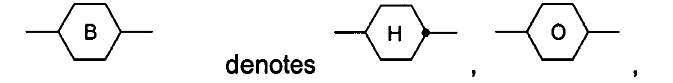 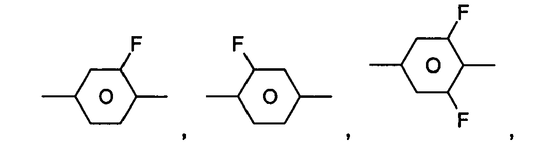 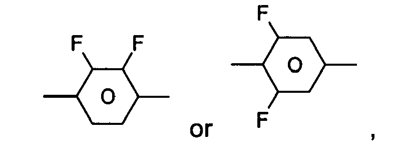
where the liquid-crystalline medium comprises less than 5% by weight of compounds of the formula 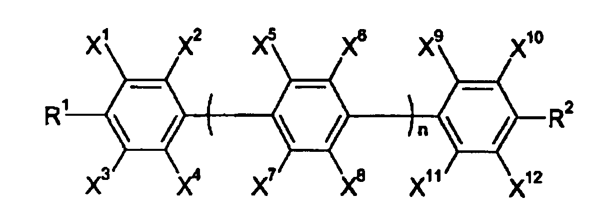 in which
R¹ and R², independently of one another, denote an alkyl group having 1 to 10 carbon atoms, an alkoxy group having 1 to 10 carbon atoms or an alkenyl group having 2 to 10 carbon atoms,
X¹ to X¹², independently of one another, denote hydrogen or fluorine, where at least two of the X¹ to X¹² are fluorine,
if a 1,4-phenylene has two fluorine atoms, the positions of the fluorine atoms are either in the 2,5-position or in the 2,6-position and
n is equal to 2.

3. Liquid-crystalline medium according to Claim 1 or 2, **characterised in that**
R¹¹ and R²¹, independently of one another, denote straight-chain alkyl having 1 to 7 carbon atoms; and
R²² denotes straight-chain alkyl having 1 to 7 carbon atoms.

4. Liquid-crystalline medium according to any one of Claims 1 to 3, **characterised in that**
Y¹¹ denotes F, Cl, CF₃, OCHF₂ or OCF₃.

5. Liquid-crystalline medium according to any one of Claims 1 to 4, **characterised in that** it furthermore comprises a compound of the formula III 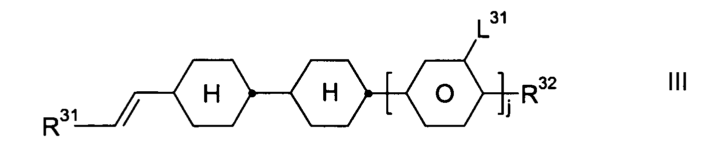 in which
L³¹ is H or F;
R³¹ denotes H, a halogenated or unsubstituted alkyl radical having 1 to 15 C atoms, where, in addition, one or more CH₂ groups in these radicals may be replaced by -C≡C-, -CH=CH-, -O-, -CO-O- or -O-CO- in such a way that O atoms are not linked directly to one another;
R³² denotes H, F, Cl, a halogenated or unsubstituted alkyl radical having 1 to 15 C atoms, where, in addition, one or more CH₂ groups in these radicals may be replaced by -C≡C-, -CH=CH-, -O-, -CO-O- or -O-CO- in such a way that O atoms are not linked directly to one another; and
j is 0 or 1.

6. Liquid-crystalline medium according to any one of Claims 1 to 5, **characterised in that** it furthermore comprises a compound of the formulae IV and/or V 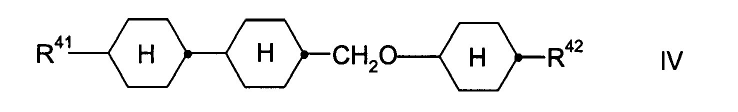 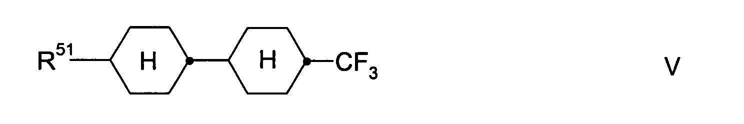 in which
R⁴¹, R⁴² and R⁵¹, independently of one another, denote alkyl having 1 to 12 carbon atoms.

7. Liquid-crystalline medium according to any one of Claims 1 to 6, **characterised in that** it furthermore comprises a compound of the formulae VI and/or VII and/or VIII 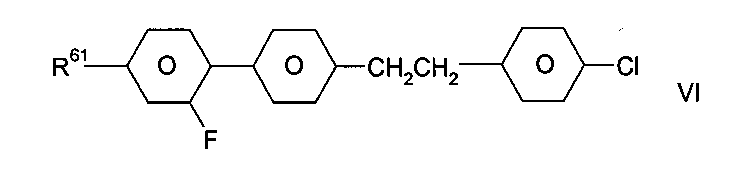 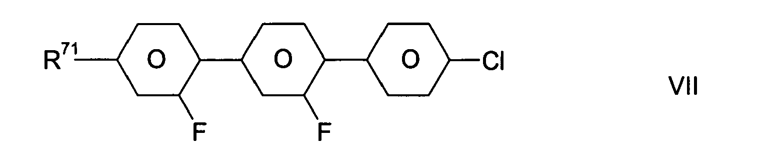 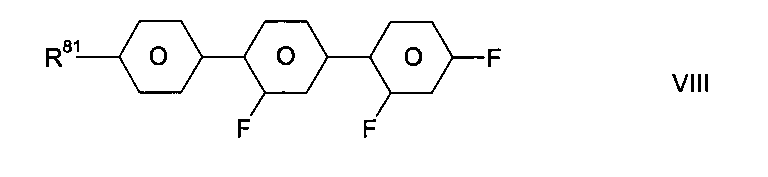 in which
R⁶¹, R⁷¹ and R⁸¹, independently of one another, denote alkyl having 1 to 12 carbon atoms.

8. Use of the liquid-crystalline medium according to any one of Claims 1 to 7 for electro-optical purposes.

9. Electro-optical liquid-crystal display containing a liquid-crystalline medium according to any one of Claims 1 to 7.

## Revendications

1. Milieu cristallin liquide comprenant
- au moins un composé de la formule I 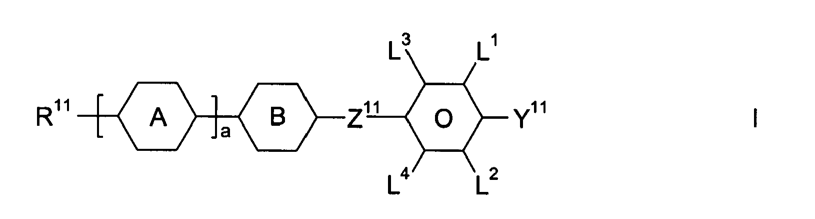 et
- au moins un composé de la formule II 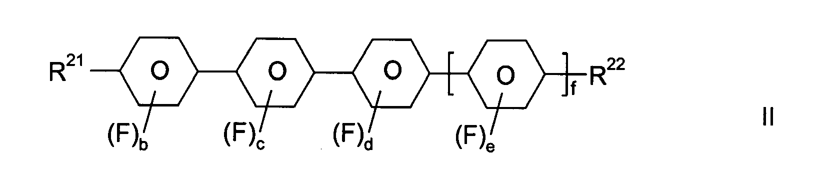
dans lesquelles
L¹, L², L³ et L⁴ 4 représentent, chacun indépendamment des autres, H ou F;
R¹¹ représente H, un radical alkyle halogéné ou non substitué comportant de 1 à 15 atomes de C, où, en plus, un ou plusieurs groupes CH₂ dans ces radicaux peuvent être chacun remplacés, indépendamment les uns des autres, par -C≡C-, -CH=CH-, -O-, -CO-O- ou -O-CO- de telle sorte que des atomes de O ne soient pas liés directement les uns aux autres;
R²¹ et R²² représentent, chacun indépendamment de l'autre, un radical alkyle non substitué comportant de 1 à 15 atomes de C, où, en plus, un ou plusieurs groupes CH₂ dans ces radicaux peuvent être chacun remplacés, indépendamment les uns des autres, par -C≡C-, -CH=CH-, -O-, -CO-O- ou -O-CO- de telle sorte que des atomes de O ne soient pas liés directement les uns aux autres;
Y¹¹ représente F, CI, CN, SF₅, SCN, NCS, un radical alkyle halogéné, un radical alkényle halogéné, un radical alcoxy halogéné ou un radical alkényloxy halogéné, chacun comportant jusqu'à 6 atomes de C;
Z¹¹ représente une liaison simple, -CH₂-CH₂-, -CH=CH-, -CH=CF-, -CF=CH-, -CF=CF-, -C≡C-, -COO-, -OCO-, -CF₂O- ou -OCF₂- ;
a est 0 ou 1;
b, c et d sont, chacun indépendamment les uns des autres, 0, 1 ou 2;
e est 0;
f est 1; 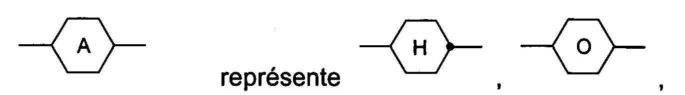 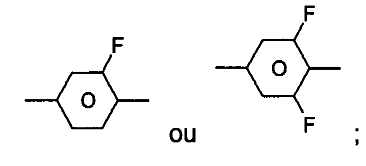 et 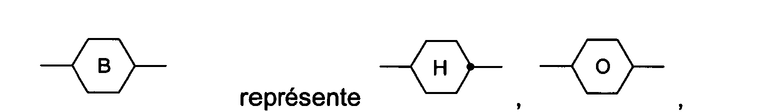 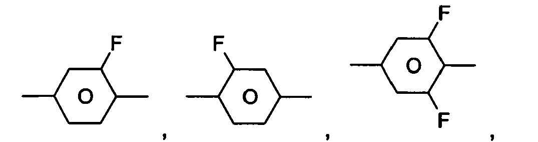 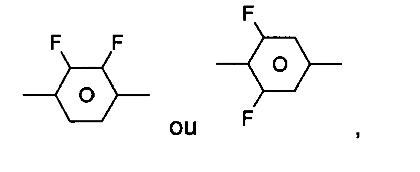
où le milieu cristallin liquide comprend moins de 5% en poids de composés de la formule 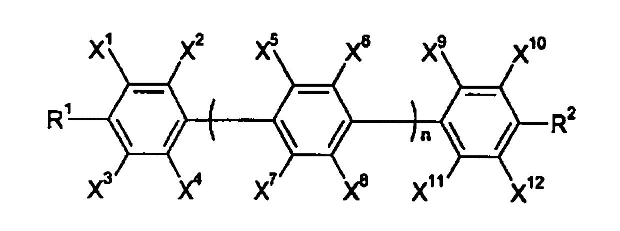 dans laquelle
R¹ et R², indépendamment l'un de l'autre, représentent un groupe alkyle comportant de 1 à 10 atomes de carbone, un groupe alcoxy comportant de 1 à 10 atomes de carbone ou un groupe alkényle comportant de 2 à 10 atomes de carbone,
X¹ à X¹², indépendamment les uns des autres, représentent hydrogène ou fluor, où au moins deux des X¹ à X¹² sont fluor,
si un 1,4-phénylène comporte deux atomes de fluor, les positions des atomes de fluor sont soit la position 2,5, soit la position 2,6 et
n est égal à 2.

2. Milieu cristallin liquide selon la revendication 1, comprenant
- au moins un composé de la formule IA 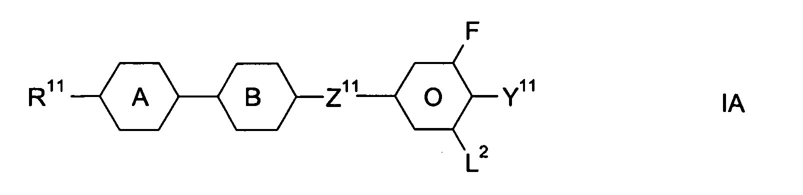 et
- au moins un composé de la formule II 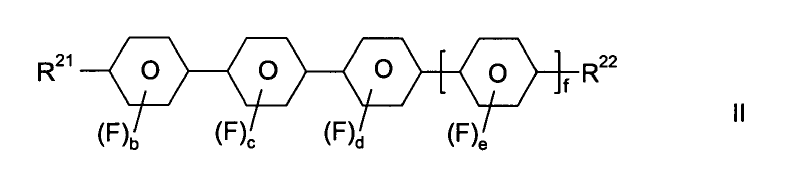
dans lesquelles
L² représente H ou F;
R¹¹ représente H, un radical alkyle halogéné ou non substitué comportant de 1 à 15 atomes de C, où, en plus, un ou plusieurs groupes CH₂ dans ces radicaux peuvent être chacun remplacés, indépendamment les uns des autres, par -C≡C-, -CH=CH-, -O-, -CO-O- ou -O-CO- de telle sorte que des atomes de O ne soient pas liés directement les uns aux autres;
R²¹ et R²² représentent, chacun indépendamment de l'autre, un radical alkyle non substitué comportant de 1 à 15 atomes de C, où, en plus, un ou plusieurs groupes CH₂ dans ces radicaux peuvent être chacun remplacés, indépendamment les uns des autres, par -C≡C-, -CH=CH-, -O-, -CO-O- ou -O-CO- de telle sorte que des atomes de O ne soient pas liés directement les uns aux autres;
Y¹¹ représente F, CI, CN, SF₅, SCN, NCS, un radical alkyle halogéné, un radical alkényle halogéné, un radical alcoxy halogéné ou un radical alkényloxy halogéné, chacun comportant jusqu'à 6 atomes de C;
Z¹¹ représente une liaison simple, -COO- ou -CF₂O-
f est 1;
b, c et d sont, chacun indépendamment les uns des autres, 0, 1 ou 2;
e est 0; 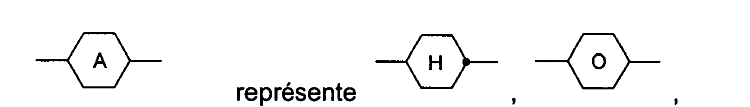 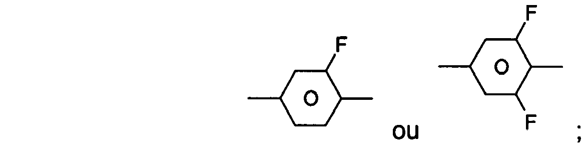 et 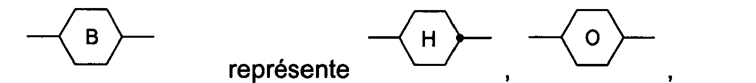 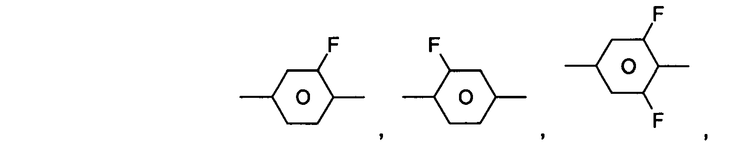 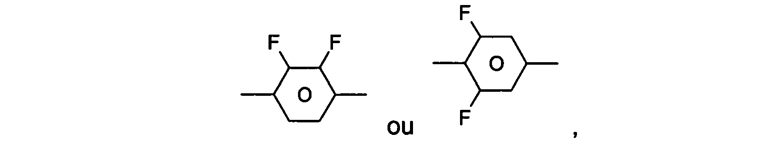
où le milieu cristallin liquide comprend moins de 5% en poids de composés de la formule 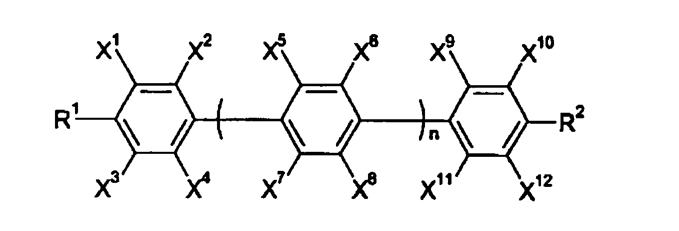 dans laquelle
R¹ et R², indépendamment l'un de l'autre, représentent un groupe alkyle comportant de 1 à 10 atomes de carbone, un groupe alcoxy comportant de 1 à 10 atomes de carbone ou un groupe alkényle comportant de 2 à 10 atomes de carbone,
X¹ à X¹², indépendamment les uns des autres, représentent hydrogène ou fluor, où au moins deux des X¹ à X¹² sont fluor,
si un 1,4-phénylène comporte deux atomes de fluor, les positions des atomes de fluor sont soit la position 2,5, soit la position 2,6 et
n est égal à 2.

3. Milieu cristallin liquide selon la revendication 1 ou 2, **caractérisé en ce que**
R¹¹ et R²¹, indépendamment l'un de l'autre, représentent alkyle en
R²² chaîne droite comportant de 1 à 7 atomes de carbone; et représente alkyle en chaîne droite comportant de 1 à 7 atomes de carbone.

4. Milieu cristallin liquide selon l'une quelconque des revendications 1 à 3, **caractérisé en ce que**
Y¹¹ représente F, CI, CF₃, OCHF₂ ou OCF₃.

5. Milieu cristallin liquide selon l'une quelconque des revendications 1 à 4, **caractérisé en ce qu'**il comprend en outre un composé de la formule III 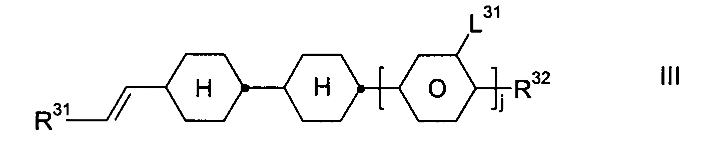 dans laquelle
L³¹ est H ou F;
R³¹ représente H, un radical alkyle halogéné ou non substitué comportant de 1 à 15 atomes de C, où, en plus, un ou plusieurs groupes CH₂ dans ces radicaux peuvent être chacun remplacés, indépendamment les uns des autres, par -C≡C-, -CH=CH-, -O-, -CO-O- ou -O-CO- de telle sorte que des atomes de O ne soient pas liés directement les uns aux autres;
R³² représente H, F, CI, un radical alkyle halogéné ou non substitué comportant de 1 à 15 atomes de C, où, en plus, un ou plusieurs groupes CH₂ dans ces radicaux peuvent être remplacés par -C≡C-, -CH=CH-, -O-, -CO-O- ou -O-CO- de telle sorte que des atomes de O ne soient pas liés directement les uns aux autres; et
j est 0 ou 1.

6. Milieu cristallin liquide selon l'une quelconque des revendications 1 à 5, **caractérisé en ce qu'**il comprend en outre un composé des formules IV et/ou V 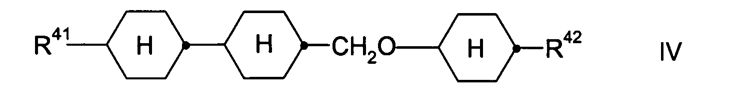 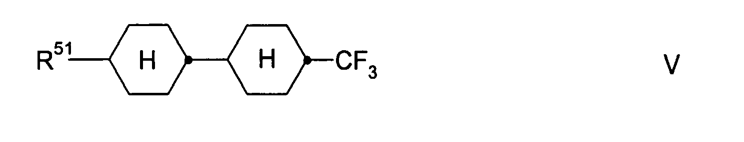 dans lesquelles
R⁴¹, R⁴² et R⁵¹, indépendamment les uns des autres, représentent alkyle comportant de 1 à 12 atomes de carbone.

7. Milieu cristallin liquide selon l'une quelconque des revendications 1 à 6, **caractérisé en ce qu'**il comprend en outre un composé des formules VI et/ou VII et/ou VIII 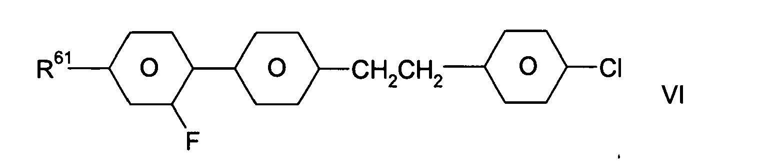 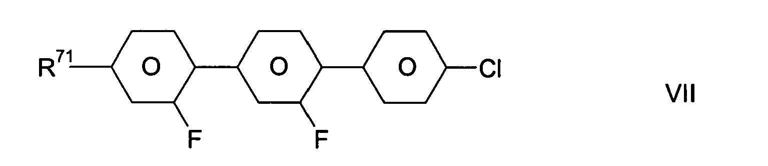 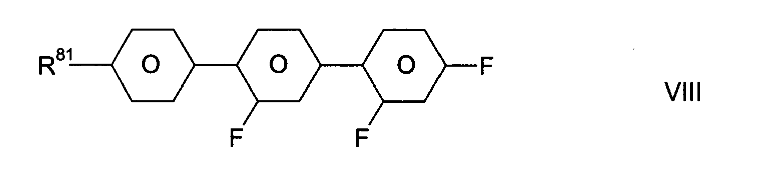 dans lesquelles
R⁶¹, R⁷¹ et R⁸¹, indépendamment les uns des autres, représentent alkyle comportant de 1 à 12 atomes de carbone.

8. Utilisation du milieu cristallin liquide selon l'une quelconque des revendications 1 à 7 à des fins électro-optiques.

9. Affichage à cristaux liquides électro-optique contenant un milieu cristallin liquide selon l'une quelconque des revendications 1 à 7.
